# EUROPÄISCHE PATENTSCHRIFT

(11) **EP 4 525 773 B1**
(45) Veröffentlichungstag und Bekanntmachung des Hinweises auf die Patenterteilung: **07.10.2026**
(21) Anmeldenummer: 22731070.3
(22) Anmeldetag: 17.05.2022
(51) Int. Cl.: A61C 7/00, A61C 7/08, B33Y 80/00

(54) **POLYFUNKTIONALE DENTALE VORRICHTUNGEN UND ZUGEHÖRIGES HERSTELLUNGSVERFAHREN**
POLYFUNCTIONAL DENTAL DEVICES AND ASSOCIATED MANUFACTURING METHOD
DISPOSITIFS DENTAIRES POLYFONCTIONNELS ET PROCÉDÉ DE FABRICATION ASSOCIÉ

(43) Veröffentlichungstag der Anmeldung: 26.03.2025
(73) Patentinhaber: Forstgarten International Holding GmbH, 9016 St. Gallen (CH)
(72) Erfinder: HORNUNG, Frank, 87787 Wolfertschwenden (DE); POLZAR, Gerhard, 63654 Büdingen (DE); LANDGRAF, Johannes, 76229 Karlsruhe (DE)
(74) Vertreter: Schmidt, Christian
(86) Internationale Anmeldenummer: PCT/EP2022/063273
(87) Internationale Veröffentlichungsnummer: WO 2023/222193

(56) Entgegenhaltungen:
- JP-A- H0 428 359
- JP-A- H0 428 359
- US-A1- 2020 060 797
- US-A1- 2020 060 797
- US-A1- 2020 138 548
- US-A1- 2020 138 548

## Beschreibung

Person nach Anspruch 1, sowie ein Herstellungverfahren dafür gemäß Anspruch 15.

### Gebiet und Hintergrund

Die vorliegende Erfindung liegt auf dem Gebiet der Zahnmedizin. In der Zahnmedizin werden komplex gestaltete Vorrichtungen und Verfahren eingesetzt, um:
- 1) die Kauebene/Kaufläche neu einzustellen, und/oder
- 2) um vorher, gleichzeitig oder anschließend Zähne im Gebiss vorteilhaft zu verlagern, und/oder
- 3) gleichzeitig die Erscheinung und Form der Zähne ästhetisch zu verbessern, wobei oftmals ästhetische Verbesserungen auch funktionale Verbesserungen zur Folge haben.

Die Zahnmedizin umfasst zum Beispiel:
- die Wiederherstellung von Zähnen,
- den Einsatz von Implantaten,
- die ästhetische Korrektur und Verbesserung von Zähnen,
- die kieferorthopädische Verlagerung von Zähnen in ihrer Orientierung und Position im Oberkiefer und Unterkiefer.

Besondere Bedeutung haben auch die Korrektur der Lage und Orientierung der Kauebene/Kaufläche relativ zum Schädel sowie die Korrektur von Störungen im Kiefergelenk, die mit ungünstigen Zuständen im Gebiss zusammenhängen.

Aus der JP H04 28359 ist ein Verfahren zur Herstellung eines Mundstücks zur Korrektur eines Zahnsatzes bekannt. Aus der US 2020/0060797 A1 ist eine modulare Aligner-Vorrichtung bekannt. Aus der US 2020/0138548 A1 sind biologisch verträgliche kieferorthopädische Aligner bekannt. Aus der US 2020/060797 A1 sind Aligner-Baugruppen bekannt.

### Ausführungsformen

Es ist daher Aufgabe der Erfindung eine Serie aus Vorrichtungen zum inkrementellen Verändern der Zahnstellung einer Person, enthaltend mindestens zwei Vorrichtungspaare anzugeben, sowie ein Herstellungsverfahren dafür. Die Vorrichtungen der Serie sollen beispielsweise einfach und/oder kostengünstig herstellbar sein und/oder eine kurze Behandlungsdauer ermöglichen und/oder eine hohe Trägerakzeptanz haben und/oder jederzeit einen Überblick über den Stand der Behandlung ermöglichen. Außerdem sollen in der Offenbarung ein Entwurfsverfahren und ein Herstellungsverfahren angegeben werden, die beispielsweise zum Entwerfen und/oder Herstellen der Serie aus Vorrichtungen verwendet werden können und die alternativ aber auch für andere Zwecke eingesetzt werden können. Weiterhin sollen zugehörige Einheiten angegeben werden, wie z.B. ein Computersystem, ein Computerprogramm, ein Computerprogrammprodukt und zugehörige digitale Entwurfsdaten und zugehörige digitale Fertigungsdaten.

Diese Aufgabe wird bezüglich der Serie aus Vorrichtungen durch die im Patentanspruch 1 angegebene Serie sowie durch das im Patentanspruch 15 angegebene Herstellungsverfahren gelöst. Weiterbildungen sind in den Unteransprüchen angegeben.

Die Serie aus Vorrichtungen zum inkrementellen Verändern der Zahnstellung einer Person enthält mindestens zwei Vorrichtungen, wobei die Vorrichtungen jeweils mindestens eine Kiefervorrichtung enthalten, wobei die Kiefervorrichtung Vorrichtungselemente enthält, wobei die Vorrichtungselemente jeweils mindestens einen Aufnahmebereich für Zahnelemente enthalten, wobei die mindestens eine Kiefervorrichtung so ausgelegt ist, dass die Aufnahmebereiche der Kiefervorrichtung auf einen Zahnbogen des Oberkiefers oder des Unterkiefers der Person aufsetzbar sind, wobei die Vorrichtungen so ausgelegt sind, dass sie, wenn sie gemäß einer vorgegebenen Reihenfolge der Vorrichtungen getragen werden, eine inkrementell fortschreitende Veränderung der Zahnstellung durch mechanische Wechselwirkung der Vorrichtung und mindestens eines Zahnelements in dem Zahnbogen bewirken, wobei die mindestens eine Kiefervorrichtung einer ersten Vorrichtung an ihrer Außenseite ein erstes Verblendungselement als Teilbereich der ersten Vorrichtung trägt, wobei die mindestens eine Kiefervorrichtung einer zweiten Vorrichtung an ihrer Außenseite ein zweites Verblendungselement als Teilbereich der zweiten Vorrichtung trägt, wobei die mindestens eine Kiefervorrichtung einer dritten Vorrichtung an ihrer Außenseite ein drittes Verblendungselement als Teilbereich der dritten Vorrichtung trägt, wobei alle drei Verblendungselemente an derselben Position gemäß einem Zahnschema liegen, wobei es in einem ersten transversalen Querschnitt am ersten Verblendungselement eine erste Außenkontur und eine erste Innenkontur gibt, wobei es in einem dem ersten transversalen Querschnitt entsprechenden zweiten transversalen Querschnitt am zweiten Verblendungselement eine zweite Außenkontur und eine zweite Innenkontur gibt, wobei es vorzugsweise in einem dem ersten transversalen Querschnitt entsprechenden dritten transversalen Querschnitt am dritten Verblendungselement eine dritte Außenkontur und eine dritte Innenkontur gibt, und wobei sich die relative Lage der jeweiligen Innenkontur zur jeweiligen Außenkontur von dem ersten Verblendungselement über das zweite Verblendungselement und vorzugsweise zum dritten Verblendungselement hin inkrementell fortschreitend ändert, insbesondere um einen Versatz eines Zahnelementes im betreffenden Aufnahmebereich zu ermöglichen bzw. zu bewirken, insbesondere einen Versatz in mindestens eine oder mehrere der folgenden Richtungen:
- von vorn nach hinten,
- von hinten nach vorn,
- axiale Rotation,
- seitlich zum Nachbarzahn hin, d.h. nach links oder nach rechts,
- ggf. auch ein Versatz von oben nach unten oder eine Versatz von unten nach oben.

Die Änderung der relativen Lage bzw. des Versatzes kann streng monoton sein, insbesondere in eine Richtung hin streng monoton zunehmend oder abnehmende. Alternativ, kann auch eine einfache monotone Zunahme erfolgen. So kann es in einer Reihe aufeinanderfolgenden Vorrichtungen auch Vorrichtungen geben, in denen die relative Lage gleichbleibt, bspw. weil an anderen Zähnen ein Versatz bewirkt wird.

Somit kann es zwischen der ersten Vorrichtung, der zweiten Vorrichtung und der dritten Vorrichtungen keine weiteren Vorrichtungen gemäß der Reihenfolge geben. Andererseits, kann es aber auch gemäß der Reihenfolge auch weitere Vorrichtungen zwischen der der ersten Vorrichtung und der zweiten Vorrichtung und/oder zwischen der zweiten Vorrichtung und der dritten Vorrichtung geben.

Die Nummerierung der Vorrichtungen kann von der Nummerierung gemäß einem Behandlungsplan abweichen, muss es aber nicht. Das heißt, dass die erste Vorrichtung die erste Vorrichtung gemäß Behandlungsplan sein kann. Alternativ kann die erste Vorrichtung aber auch eine andere Vorrichtung gemäß Behandlungsplan sein, z.B. die zweite Vorrichtung, die dritte Vorrichtung, etc. Die anderen Nummern gemäß Anspruch folgen dann.

Die erste Vorrichtung gemäß Anspruch kann eine relative Lage A von Innenkontur und Außenkontur haben. Die zweite Vorrichtung gemäß Anspruch kann eine relative Lage B von Innenkontur und Außenkontur haben. Die dritte Vorrichtung gemäß Anspruch kann eine relative Lage C von Innenkontur und Außenkontur haben. Dann kann bspw. die folgende Abfolge von Lagen in realisiert sein: A, B, C oder A, A, B, C, C oder ähnlich.

Der transversale Querschnitt kann bspw. eine Zielkauebene als Referenz haben oder eine Ebene, die in einem vorgegebenen Abstand zu der Zielkauebene liegt.

Die relative Lage der ersten Innenkontur zur ersten Außenkontur kann sich von der relativen Lage der zweiten Innenkontur zur zweiten Außenkontur unterscheiden.

Die Verlagerung der Innenkontur relativ zum Zahnbogen kann stärker sein als die Verlagerung der Außenkontur relativ zum Zahnbogen. Das heißt der Zahn kann vergleichsweise stark "wandern" bzw. sich bewegen und die Zahnblende, d.h. vorzugsweise deren Frontseite, kann ruhen bzw. sich nur vergleichsweise langsam bewegen.

Die Innenkontur kann Druckelemente, d.h. Funktionselemente zur Zahnverlagerung mit enthalten, insbesondere Druckelemente die mit mindestens einem zusätzlichen Attachment am Zahn bzw. Zahnelement oder ohne Attachments am Zahn bzw. Zahnelement die Verlagerung bewirken.

Die Veränderung der relativen Lage von Innenkontur zur Außenkontur kann sich in einer Veränderung des Wandstärkenprofils zeigen. So kann sich das Wandstärkenprofil, insbesondere das frontseitige Wandstärkenprofil, des ersten Verblendungselementes von dem Wandstärkenprofil des zweiten Verblendungselementes unterscheiden und das Wandstärkenprofil, insbesondere das frontseitige Wandstärkenprofil, des dritten Verblendungselementes kann sich sowohl von dem Wandstärkenprofil des zweiten Verblendungselementes als auch von dem Wandstärkenprofil des ersten Verblendungselementes unterscheiden, insbesondere auf Grund einer gezielten Veränderung der relativen Lage von jeweiliger Innenkontur zur jeweiligen Außenkontur, bspw. im Unterschied zu einem Tiefziehverfahren unter Verwendung von Folien gleichmäßiger Schichtdicke, bei dem Innenkontur und Außenkontur zueinander konform sind und damit zueinander eine im wesentlichen gleichbleibende Lage haben.

Die technische Wirkung der Veränderung der relativen Lage von Innenkontur und Außenkontur besteht darin, dass ein Freiheitsgrad entsteht, der es ermöglicht, die Lage der Außenkontur unabhängig von der Lage der Innenkontur festzulegen. Bspw. kann die Außenkontur schon frühzeitig in der Serie realisiert bzw. angestrebt werden, während die Innenkontur die Zahnelemente "abbildet" bzw. die Verlagerung der Zahnelement ermöglicht.

Ein Aufnahmebereich des ersten Verblendungselementes kann anders gestaltet sein und/oder eine andere Lage haben, als ein Aufnahmebereich des zweiten Verblendungselementes. Dieser Unterschied kann geeignet sein, die inkrementelle Verlagerung des Zahnelements zu bewirken. Gleichzeitig kann eine frontseitige Wandstärke des zweiten Verblendungselementes von einer frontseitigen Wandstärke des ersten Verblendungselementes abweichen, insbesondere bei einer Verlagerung des Zahnelements von vorn nach hinten oder von hinten nach vorn.

So kann die Wandstärke, insbesondere die frontseitige Wandstärke, bei einer Verlagerung des Zahnelementes von hinten nach vorn generell abnehmen vom ersten Verblendungselement zum zweiten Verblendungselement hin und ggf. auch vom zweiten Verblendungselement zum dritten Verblendungselement hin. Dabei kann die rückseitige Wandstärke bspw. entsprechend zunehmen oder aber auch unverändert bleiben.

So kann die Wandstärke, insbesondere die frontseitige Wandstärke, bei einer Verlagerung des Zahnelementes von vorn nach hinten generell (entlang des gesamten Verlaufs der Wand im transversalen Querschnitt) zunehmen vom ersten Verblendungselement zum zweiten Verblendungselement hin und ggf. auch vom zweiten Verblendungselement zum dritten Verblendungselement hin. Dabei kann die rückseitige Wandstärke bspw. entsprechend abnehmen oder aber auch unverändert bleiben.

Bei einer seitlichen Verlagerung eines Zahnelements kann die frontseitige Wandstärke in einem Teilbereich abnehmen und in einem anderen Teilbereich zu nehmen. Die Wandstärke zu einem benachbarten Zahnelement kann jedoch insgesamt bzw. im gesamten Verlauf der Wand verringert bzw. vergrößert werden, insbesondere, wenn das benachbarte Zahnelement nicht auch gleichzeitig verlagert wird. Ähnliches gilt für eine Rotation eines Zahns oder für das Herausheben eines Zahns aus dem Oberkiefer bzw. aus dem Unterkiefer sowie für kombinierte Verlagerungen, z.B. Rotation und Herausheben.

Das erste Verblendungselement kann an derselben Position gemäß einem Zahnschema liegen wie das zweite Verblendungselement. Ein Aufnahmebereich, der in dem ersten Verblendungselement ausgebildet ist, kann gemäß einer Ausführungsform anders gestaltet sein und/oder eine andere Lage haben, als ein Aufnahmebereich, der in dem zweiten Verblendungselement ausgebildet ist. Bekannte Zahnschemen sind das Quadranten-Schema mit vier Quadranten (z.B. oben rechts (vom Patienten aus gesehen), oben links, unten links und unten rechts) oder eine Nummerierung der Zähne von links nach rechts oder von rechts nach links im Oberkiefer bzw. Unterkiefer.

Dieser Gestaltungs- und/oder Lageunterschied kann geeignet sein, die inkrementelle Verlagerung des Zahnelements zu bewirken. Eine frontseitige Wandstärke des zweiten Verblendungselementes kann von einer frontseitigen Wandstärke des ersten Verblendungselementes abweichen, bspw. auf Grund dieses Gestaltungs- und/oder Lageunterschiedes.

Diese Serie ermöglicht es bspw. die Lage und/oder Form von Zähnen bzw. Zahnelementen nach der finalen Versorgung schon frühzeitig in den Vorrichtungen zu implementieren bzw. anzunähern. Falls sich diese Lage und/oder Form noch innerhalb der Behandlung ändern kann, kann bspw. auf vorläufige Zahn/Zahnelement Zielzustände Bezug genommen werden. Andere zahntechnische Besonderheiten können ebenfalls berücksichtigt werden.

Das mindestens eine erste Verblendungselement und das mindestens eine zweite Verblendungselement können in der Lage und/oder der Form ihrer frontseitigen Außenkontur im Wesentlichen übereinstimmen.

Die frontseitige Außenkontur kann an das an dieser Zahnposition liegende Zahnelement in seinem Zielzahnzustand oder in einem Zwischen-Zielzahnzustand bspw. einer Zwischen-Zielzahnanordnungen angepasst sein, wie er in einer finalen Versorgung des Zahnelementes angestrebt ist, z.B. bei vergleichsweise kleinen zugeordneten Zahnelementen, wie Zähnen, Zahnstümpfen, Implantaten etc. Das Zahnelement kann als verbliebenes Beißelement angesehen werden. Mehrere verbliebene Beißelemente können eine verbliebene Beißstruktur bilden. Zusammen mit den Vorrichtungen kann sich aus der verbliebenen Beißstruktur und der Vorrichtung eine provisorische Beißstruktur ergeben, die dann in der zahnärztlichen finalen Versorgung in eine dauerhafte Beißstruktur umgewandelt wird, die genau einer Zielbeißstruktur entspricht. Somit kann die Verlagerung des Zahnelementes bzw. der Zahnelemente Teil eines Behandlungsplans sein. Es kann nur ein Teil der Zahnelemente zu verlagern sein. Ein anderer Teil kann sich schon in einer geeigneten Lage befinden, so dass diesbezüglich keine Verlagerung mehr erforderlich ist.

"Angepasst" kann übereinstimmen bedeuten. Alternativ, kann "angepasst" bedeuten, dass eine Übereinstimmung mit dem Zielzustand vorliegt, soweit es die zahntechnischen Gegebenheiten zulassen.

Die Vergrößerung kann in mindestens einer Raumdimension bzw. Raumrichtung erfolgen, , z.B. anisotrop, in mindestens zwei Raumdimensionen (zueinander orthogonalen Raumrichtungen, z.B. anisotrop oder in allen drei Raumdimensionen/Richtungen (isotrop).

Eine isotrope Vergrößerung kann bspw. ein sogenannter Blow-Up (Aufblasen) bei einem viel zu kleinem Eckzahn oder Prämolar sein. Andererseits kann eine anisotrope Vergrößerung, z.B. eine Breitenzunahme sein.

Der Zielzahnzustand kann auch weiter gefasst werden, als nicht nur einzelne Zähne betreffend, sondern den ganzen Zahnbogen betreffend. Der Zahnbogen in der Vorrichtung kann schon eine Vorwegnahme des Zielzustandes des Zahnbogens im Oberkiefer und/oder Unterkiefer sein, insbesondere von dessen Außenkontur und/oder Innenkontur. Oft wird man eine Vergrößerung des Zahnbogens im Oberkiefer oder Unterkiefer oder beider Zahnbögen anstreben.

Die frontseitige Außenkontur kann in mindestens einer Dimension eine Vergrößerung des Zielzahnzustandes darstellt. Gemäß einer anderen Weiterbildung können die Front-Zahnblende des ersten Vorrichtungspaares und die Front-Zahnblende des zweiten Vorrichtungspaares den an dieser Zahnposition liegenden Zahn in einem Zielzahnzustand oder in einer Vergrößerung des Zielzahnzustandes darstellen. Die Vergrößerung kann um einen Wert erfolgen der bspw. im Bereich von 1 bis 25 Prozent liegen kann, vorzugsweise im Bereich von 5 bis 15 Prozent, bspw. bei 10 Prozent. Die Vergrößerung kann unter Nutzung eines Faktors erfolgen, z.B. eines Vergrößerungsfaktors im Bereich von 1,01 bis 1,25. Der Zielzahnzustand bzw. dessen Vergrößerung kann Form, Farbe, Position, Ausrichtung, etc. des betreffenden Zahnes beinhalten, z.B. des betreffenden Frontzahnes, Eckzahnes, etc. Die Zahnblende und/oder die Vergrößerung kann die Stabilität der Vorrichtung erhöhen und/oder gewährleisten und ist damit ein technisches Merkmal.

Somit kann in einer Ausgestaltung die Verblendung ein Mock-Up bzw. eine Vorwegnahme des Zielzahnzustandes sein. Andererseits kann die Verblendung auch nach anderen Kriterien ausgestaltet sein, wie oben bereits erwähnt.

Die Zahnblende/Verblendungselement kann im in den Mund der Person eingesetzten Zustand einen korrespondierenden Zahn verblenden. Beispielsweise kann die Blende eine Aussparung für den betreffenden Zahn enthalten, insbesondere eine Aussparung mit Alignment-Funktion oder ohne Alignment-Funktion, d.h. abhängig von einem für die Person festgelegten Behandlungsplan. Alternativ, kann die Zahnblende einen zugehörigen Zahn auch nur teilweise umschließen, z.B. nur an der Frontseite aber nicht an der Rückseite des Zahns angeordnet sein.

Es können auch Zahnblenden/Verblendungselemente verwendet werden, denen noch kein Zahn zugordnet ist, bspw. weil der entsprechende Zahn fehlt. Die Zahnblende kann in diesem Fall eine Abstütz-funktion auf Weichgewebe oder auf bzw. an einem Implantat übernehmen. Diese Funktionen sind unten näher erläutert.

Die mindestens eine Zahnblende/Verblendungselement kann die körperliche Außenkontur im Zielzustand des Zahnes bzw. eine leichte Vergrößerung der Außenkontur bzw. der äußeren Geometrie wiedergeben. Damit können entsprechende Sinneseindrücke im Mund des Trägers der Vorrichtungen, d.h. der Person, bspw. an der Innenseite der Lippen oder an der Innenseite der Wangen entstehen. Es muss somit nur einmal eine Gewöhnung an die Zielzahnanordnung erfolgen, was die Akzeptanz der Vielzahl von Vorrichtungen bei der Person erhöht. Wenn die Zielzahnanordnung auch nach einer Eingewöhnung als unbequem oder unpassend von der Person empfunden wird, sind frühzeitig Korrekturen der Zielzahnanordnung möglich, d.h. bspw. schon am Beginn der Behandlung oder im ersten Drittel. Die Akzeptanz für Benutzer steigt, weil der Benutzer schon am Anfang der Behandlung sieht bzw. spürt, wie das Ergebnis am Ende einer langen Behandlung sein wird.

Der Arzt und/oder Kieferorthopäde und/oder auch die Person können jederzeit anhand der Lage der Aussparungen in einer Vorrichtung erkennen, wie weit der Istzustand der Zähne noch vom Zielzahnzustand entfernt ist, weil sich bspw. Abstände von Aussparungen zu frontalen Zielflächen hin verringern. Der Zahnarzt bzw. Kieferorthopäde sieht, wie nah der ist-Zustand an der Zielzahnstellung ist, indem er den Istzustand der Zähne mit dem durch die Zahnblende dargestellten Zielzahnzustand vergleicht, insbesondere an der Frontfläche der Zahnblende.

Die Zahnblende kann an ihrer Außenfläche wie die Außenfläche der Zielanordnung gestaltet sein oder nur unwesentlich anders, z.B. auch auf Grund der zu berücksichtigenden Vergrößerung und/oder im Rahmen der Fertigungstoleranzen und/oder Abweichungen kleiner als 1 mm oder kleiner als 0,5 mm. Wenn der betreffende Zahn seine Endstellung erreicht hat und nicht durch Aufbauten oder Anbauten in einer finalen Behandlung verändert werden soll, kann eine sehr dünne Zahnblende verwendet werden. Auch Durchbrüche in der Zahnblende können verwendet werden, um Zahnflächen, die die ihre finale Position erreicht haben nicht mehr zu verblenden, sondern frei von vorn sichtbar anzuordnen.

Die Vorrichtungsgruppen können Vorrichtungspaare enthalten. Alternativ können auch mehrere Vorrichtung für einen Unterkiefer oder für einen Oberkiefer verwendet werden, beispielsweise eine linke Vorrichtung und eine rechte Vorrichtung. Hier kann die Zahnblende bspw. im Eckzahnbereich angeordnet sein.

Es kann insbesondere die folgenden Zahnblenden/Verblendungen oder Frontzahnnachbildungen geben:
- eine erste obere Frontzahnblende oder Frontzahnnachbildung (Zahnkörper), z.B. des linken oberen Frontzahns, bspw. von der Person aus gesehen, und/oder
- erste untere Frontzahnblende oder Frontzahnnachbildung (Zahnkörper), z.B. des linken unteren Frontzahns, bspw. von der Person aus gesehen, und/oder
- eine zweite obere Frontzahnblende oder Frontzahnnachbildung (Zahnkörper), z.B. des rechten oberen Frontzahns, bspw. von der Person aus gesehen, und/oder
- eine zweite obere Frontzahnblende oder Frontzahnnachbildung (Zahnkörper), z.B. des linken oberen Frontzahns, bspw. von der Person aus gesehen.

Die Frontseite der mindestens einen Zahnblende kann in allen Vorrichtungen der Serie oder in mindestens der Hälfte der Vorrichtungen bzw. Vorrichtungspaare der Serie die gleiche Position bezüglich eines kranialen /fazialen Merkmals der Person haben, insbesondere eines fazialen Merkmals, das durch ein kraniales Merkmal festgelegt ist, d.h. insbesondere eines Merkmals, das zur Ermittlung der Zielanordnung verwendet worden ist.

Gemäß einer Weiterbildung kann beim Wechsel der Vorrichtungspaare im Mund der Person die mindestens eine Zahnblende des zweiten Vorrichtungspaares an der gleichen Position im Mund liegen, an der die mindestens eine Zahnblende des ersten Vorrichtungspaares lag.

Ein drittes Vorrichtungspaar der Serie kann in der Reihenfolge nach dem zweiten Vorrichtungspaar liegen. Auch das dritte Vorrichtungspaar kann mindestens eine Zahnblende enthalten, die wie die mindestens eine Zahnblende am ersten Vorrichtungspaar und/oder wie die mindestens eine Zahnblende am zweiten Vorrichtungspaar ausgebildet ist.

Die Reihenfolge der Vorrichtungen kann durch einen Behandlungsplan vorgegeben sein. Am Ende der Behandlung kann auch mal nur eine Vorrichtung an Stelle eines Vorrichtungspaares verwendet werden.

Die Vorrichtung kann oder sollte beim Essen im Mund verbleiben. Dadurch ist es möglich, der Person von Anfang an ein besseres Kauen zu ermöglichen. Die mechanische Stabilität der Vorrichtung kann den Kaukräften widerstehen, was insbesondere bei Vorrichtungen, die im Fräsverfahren aus einem stabilen Material herausgefräst worden sind der Fall sein kann, insbesondere im Vergleich zu Vorrichtungen/Alignern, die aus dünnen Folien im Tiefziehverfahren hergestellt worden sind. Nach dem Essen oder zu den üblichen Zahnreinigungszeiten können die Vorrichtungen bzw. kann die momentan getragene Vorrichtung aus dem Mund genommen werden und kann so einfacher gereinigt werden ebenso wie die Zähne bzw. verbliebenen Zahnstrukturen.

Alternativ kann die Vorrichtung beim Essen aus dem Mund herausnehmbar sein.

Die Vorrichtungen können dafür vorgesehen sein, mindestens 15 Stunden, mindestens 20 Stunden am Tag oder mindestens 22 Stunden am Tag im Mund getragen zu werden, sobald sie an der Reihe sind.

Erfindungsgemäß werden im Herstellungsverfahren zum Herstellen einer Serie ein subtraktives Fertigungsverfahren zum Herstellen der Serie aus Vorrichtungen oder aus Vorrichtungspaaren oder zumindest zum Herstellen eines Teils der Vorrichtungen verwendet, wobei vorzugsweise ein subtraktiv spanabhebendes Verfahren verwendet wird, insbesondere Fräsen, oder es wird ein additives Fertigungsverfahren zum Herstellen der Serie aus Vorrichtungen oder aus Vorrichtungspaaren oder zumindest zum Herstellen eines Teils der Vorrichtungen verwendet, insbesondere 3D Druck, wobei in mindestens einer Vorrichtung oder in mindestens einem Vorrichtungspaar einer Vorrichtung Hinterschneidungen realisiert sind, die sich bspw. nicht mit einem Tiefziehverfahren ohne weiteres herstellen lassen, und/oder bezogen auf eine Höhenrichtung im Zentrum von okklusalen Flächen derselben Vorrichtung, insbesondere desselben Vorrichtungsteils, Materialschichtdickenunterschiede von mehr als 2 mm oder von mehr als 4 mm realisiert sind. Auch dies ist mit einem Tiefziehverfahren nicht ohne weiteres möglich, bei dem eine vergleichsweise dünne Folie auf eine Form gelegt und dann verformt wird, bspw. durch Druck, Vakuum und/oder unter Nutzung von Temperatur, z.B. von Temperaturen größer als 90 Grad Celsius oder größer als 100 Grad Celsius.

Ein Fräsverfahren kann mit dem bloßen Auge sichtbare bzw. nur mikroskopisch sichtbare Trennspuren bzw. Frässpuren hinterlassen. Polierverfahren können zur Glättung der äußeren Oberfläche eingesetzt werden. Eine maximale Schichtdicke im Zentrum einer okklusalen Flächen kann mindestens 50 Prozent, mindestens 100 Prozent, mindestens 200 Prozent, mindestens 300 Prozent oder mindestens 400 Prozent einer minimalen Schichtdicke im Zentrum einer anderen okklusalen Fläche derselben Vorrichtung betragen, insbesondere derselben Unterkiefervorrichtung oder derselben Oberkiefervorrichtung. Weil durch das subtraktive Verfahren die Vorrichtung direkt hergestellt werden kann, sind keine weiteren Formen (Negativ) mehr erforderlich, wie es bspw. beim Tiefziehen der Fall ist.

Als additive Fertigungsverfahren sind insbesondere 3D (dreidimensional) Druckverfahren geeignet, bspw. Fotolithographie, z.B. Stereolithografie, bei der mittels Licht oder Laser flüssige fotoempfindliche Kunststoffe Schicht für Schicht gehärtet werden, um die Vorrichtungen der Serie direkt herzustellen.

Als Material für die Vorrichtungen sind gesundheitsverträgliche Kunststoffe geeignet, z.B. Kunstharze wie Acrylharz, Epoxidharz oder Vinylesterharz, Polyurethan PU, PMMA (Polymethylacrylat).

Gemäß einer Weiterbildung kann ein erste Vorrichtung, z.B. ein erstes Vorrichtungspaar, und eine zweite Vorrichtung, z.B. ein zweites Vorrichtungspaar, oder mindestens die Hälfte alle Vorrichtungen/Vorrichtungspaare oder alle Vorrichtungen/Vorrichtungspaare mindestens eine Zahnblende enthalten, die bewirkt, dass an den Zähnen der Person in einem verdeckten Bereich, d.h. weitgehend unsichtbar von vorn, Alignment-Funktionen von Zähnen und Verschiebe-Funktionen bezogen auf mindestens einen Zahnbogen der Person angewendet werden. Kraftübertragende Funktionselemente können die Zähne in entsprechende Richtungen drücken, bspw. Funktionselemente die mit Attachments and den Zähnen zusammenwirken oder die direkt auf die Zähne einwirken, bspw. Vorsprünge oder Wirkflächen in Aussparungen für die Zähne. Dabei kann um mindestens einer der beiden Zahnbögen der Person in eine neue Konstellation gebracht werden, bspw. während die von vorn sichtbare Position der Zahnblenden gleich bleibt oder sich nur unwesentlich ändert, vorzugsweise im Verlauf der gesamten Serie oder im Verlauf eines längeren Teilabschnitts der Serie, der mindestens 20 Prozent der Vorrichtungen enthält, z.B. mindestens 5 Vorrichtungen, mit einer Gesamtabweichungen kleiner als 0,6 mm oder kleiner als 0,4 mm. Die Alignment-Funktionen und/oder Verschiebe-Funktionen können an Aufnahmebereichen bzw. Aussparungen für die Zähne in den Vorrichtungen/Vorrichtungspaaren die inkrementellen Veränderungen zwischen den aufeinanderfolgenden Schritten der Serie ausführen, während die betreffenden Bereiche von vorn durch das Verblendungselement bzw. die Zahnblende verdeckt sind.

Die Zahnblende kann bspw. an mindestens zwei, mindestens drei, mindestens vier, mindestens fünf oder mindestens sechs Zahnpositionen angeordnet sein, bspw. an mindestens einer Frontzahnposition an zwei Frontzahnpositionen und/oder an mindestens einer Eckzahnposition.

Gemäß einer Weiterbildung kann zumindest in einem Teil der Vorrichtungen in den Backenzahnbereichen der Oberkiefervorrichtung und/oder der Unterkiefervorrichtung eine Kombination aus Aufbauten mit Höhen-Funktion und Aufbauten mit Gleit-Funktion und/oder eine Kombination aus Aufbauten mit Höhen-Funktion und Aufbauten mit Oberkiefer-Unterkiefer-Relativpositionierungs-Funktion oder mit Rampen-Funktion so ausgeformt sein, dass sie eine Verlagerung der Kontaktebene und der zukünftigen Kauebene relativ zum Ausgangszustand der Behandlung und insbesondere eine craniale und/oder faziale Optimierung (bezüglich des Gesichtes der Person) des Kauapparates erreichen. Die Aufbauten können eine Schichtdicke/Höhe zu einer okklusaler Fläche hin haben, die mindestens 2 mm, mindestens 3 mm oder mindestens 4 mm beträgt. Solche Schichtdicken/Höhen bzw. die damit gegebenenfalls verbundenen Schichtdickenunterschiede zu anderen Bereichen derselben Unterkiefervorrichtung oder derselben Oberkiefervorrichtung können vorteilhaft mit subtraktiven oder additiven Fertigungsverfahren hergestellt werden.

Gemäß einer Weiterbildung kann mindestens ein Teil der Vorrichtungen an zumindest einem Teil oder an allen der von vorn sichtbaren Verblendungselemente bzw. Zahnblenden der Vorrichtungen eine Farbgebung einer Farb-Funktion aufweisen bzw. haben. Die Farbgebung kann vorzugsweise als Effekt der Materialauswahl erreicht werden oder durch eine Beschichtung, z.B. eine lackartige Beschichtung, der äußeren Materiallage der Vorrichtungspaare oder mindestens einen Teils der Vorrichtungen. Die Farbgebung kann einen Weißanteil und/oder einen Gelbanteil enthalten. Die Farbgebung kann sich von einer transparenten und/oder durchscheinenden Farbgebung unterscheiden. Die Farbgebung kann eine ästhetisch ansprechende Farbgebung sein. Durchscheinende Schichten können jedoch den Eindruck, dass es sich um natürlicher Zähne handelt, verstärken. Die Farbe kann mit einer gesundheitsverträglichen Farbe ausgeführt sei, bspw. mit einem Farbstoff, der auch zur Färbung von Lebensmitteln verwendet wird oder verwendbar ist.

Gemäß einer Weiterbildung kann mindestens eine Vorrichtung, z.B. eine Kiefervorrichtung, bzw. ein Vorrichtungspaar der Serie, vorzugsweise ein Vorrichtungspaar der ersten 20 Prozent der Serie, jeweils mindestens ein ausgestaltete Verblendungselement/Zahnblende oder Zahnblenden aufweisen, die die Zähne und/oder Zahnstümpfe der Person im von vorn sichtbaren Bereich ganz oder größtenteils verdecken, um dahinter im verdeckten Bereich an diesen Zähnen und/oder Zahnstümpfen Verlagerungen vorzunehmen, die vorzugsweise schrittweise aus Superpositionen von Translation und Rotation bestehen, um die Zähne und/oder Zahnstümpfe im verdeckten Bereich zu der Zielposition hinzuführen. Somit kann das Verblendungselement bzw. die Zahnblende zusätzlich zu ihrer Stabilisierungsfunktion diese Prozesse von vorn gesehen verdecken. Durch das Verdecken/Verblenden können die Prozesse für Dritte weitgehend unsichtbar gemacht werden.

Gemäß einer Weiterbildung kann mindestens ein erster Teil der Vorrichtungen so ausgebildet sein, dass an den Backenzähnen der Person zuerst einen Höhenaufbau mittels einer Höhenfunktion vorgenommen wird. Der Höhenaufbau kann dazu geeignet sein, den Abstand des Unterkiefers vom Oberkiefer im Kontaktbiss zu erhöhen und dabei zu einer Deblockade von zuvor blockierten Zahnverlagerungen führen. Mindestens ein weiterer Teil der Vorrichtungspaare, insbesondere ein Teil der sich vom ersten Teil unterscheidet, kann so ausgebildet sein, dass dieser Deblockade (Freigabe), die insbesondere durch Höhen-Funktionen erreicht worden ist, eine Zahnverlagerung von Zähnen bzw. Zahnstümpfen der Person durch Aligner-Funktionen als Teil der nachfolgenden Vorrichtungen/ Vorrichtungspaare und/oder eine Veränderung des Zahnbogens der Person durch Verschiebe-Funktionen als zusätzlicher Teil der nachfolgenden Vorrichtungen folgt. Die Zahnverlagerungen können dazu geeignet sein, dass Gebiss der Person an die Zielanordnung oder an Zwischen-Zielzahnanordnungen anzunähern.

Gemäß einer Weiterbildung können in mindestens einem Teil der Vorrichtungen, z.B. der Vorrichtungspaare, zusätzlich zu Alignment-Funktionen und oder Verschiebe-Funktionen auch Höhen-Funktionen mit Gleit-Funktionen kombiniert sind. So kann zumindest ein Teil der Vorrichtungspaare Gleitflächen rechts und links aufweisen, die zumindest bereichsweise glatt und/oder nicht verschlüsselt sind, so dass sie in diesem Bereich bei Ausübung einer aktiven Kontaktkraft durch den Träger der Vorrichtungen bzw. durch die Person zu einem neuromuskulären Stabilisierungsbedarf des Unterkiefers relativ zum Oberkiefer führen. Der Stabilisierungsbedarf kann zu einem tatsächlichen neuromuskulären Umlernen der Lage der Kauebene bei der Person führen.

Obwohl einander zugewandte Gleitflächen der Oberkiefervorrichtung und der Unterkiefervorrichtung zueinander komplementär ausgebildet sein können, kann es zwischen links und rechts Asymmetrien der Elemente zur Definition der Gesamtgleitfläche geben, z.B. zueinander verschieden Höhenaufbauten. Verschlüsselt kann heißen, dass es Erhöhungen und Vertiefungen gibt, deren Höhe der Höhe von natürlichen Zahngruben oder Zahnhöckern entsprechen. Auch zueinander rechts-links symmetrische Elemente können zur Definition der Gesamtgleitfläche verwendet werden.

Gemäß einer Weiterbildung können in mindestens einem Teil der Vorrichtungen bzw. Vorrichtungspaare zusätzlich zu einzelne Zähne der Person betreffenden Alignment-Funktionen und/oder den Zahnbogen der Person betreffenden Verschiebe-Funktionen auch Rampen-Funktionen integriert sein. Die betreffenden Rampen können insbesondere vertikale bzw. vorrangig vertikal orientierte Rampenflächen haben. Transversal liegende Flächen der Rampen oder vorrangig transversal liegende Flächen können den erforderlichen Abstand zwischen Unterkiefer und Oberkiefer ermöglichen. Die Rampen-Funktionen können dazu geeignet sein, infolge der lokal betrachtet bspw. schiefen Ebene an einer Rampe, unter Kontaktkraft zwischen Unterkiefer und Oberkiefer eine laterale Reaktionskraft zu erzeugen, die den Unterkiefer relativ zum Oberkiefer mindestens in eine der kombinierten transversalen Richtungen rechts-links und/oder hinten-vorne bewegt. Damit kann eine Veränderung der Position des Unterkiefers relativ zum Oberkiefer erreicht werden, wobei der Zahnbogen des Unterkiefers und/oder des Oberkiefers nicht verändert werden muss aber ggf. verändert werden kann.

Gemäß einer Weiterbildung kann die letzte Vorrichtung bzw. das letzte Vorrichtungspaar der Serie so ausgebildet sein, dass eine möglichst genaue, bspw. unter Berücksichtigung der Vergrößerung und/oder von Fertigungstoleranzen, oder eine Abbildung der geplanten finalen Versorgung bzw. des Zielzahnzustandes bzw. der Zielzahnanordnung erreicht wird, bspw. um die Behandlung mittels Vorrichtungen der Serie zum Abschluss zu bringen. Alternativ oder zusätzlich können auch Zwischen-Zielzahnzustände verwendet werden. Die Abbildung der finalen Versorgung kann zumindest im sichtbaren Frontzahnbereich durch Front-Verblendungselemente oder Front-Zahnblenden erfolgen, die vorzugsweise entsprechend der geplanten finalen Versorgung geformt und optional entsprechend der geplanten finalen Versorgung mittels Farb-Funktionen dental koloriert bzw. gefärbt sein können. Die Front-Verblendungselemente oder Front-Zahnblenden können in der finalen Versorgung dann bspw. durch eine bleibende bzw. festsitzende Versorgung ersetzt werden, bspw. um die Gesamtbehandlung zum Abschluss zu bringen. So können die folgenden Elemente verwendet werden: Table top (Höhenaufbau), Onlay (mit Abschleifen der Zahnfläche), Vernier (Frontverblendung), Verkronung, Brücke, Implantat, insbesondere auch Kombinationen der genannten Elemente, etc. Eine Verblockung über mehrere Zähne kann in der finalen Versorgung möglichst vermieden werden, da dies nachteilig sein kann, weil es bspw. zu einer Verletzung der feinen Haltefasern (Sharpey Fasern) der Zähne führen kann.

Eine "möglichst genaue Abbildung" kann bspw. wiederum heißen "im Rahmen der Fertigungstoleranzen" und/oder unter Berücksichtigung der Vergrößerung, wie oben bereits erläutert worden ist und/oder unter Berücksichtigung der zahntechnischen Gegebenheiten.

Gemäß einer Weiterbildung kann die letzte Vorrichtung bzw. das letzte Vorrichtungspaar der Serie so ausgebildet sein, dass eine möglichst genaue Abbildung der geplanten finalen Versorgung der Zähne der Person erreicht wird, wobei die Abbildung der finalen Versorgung zumindest im Backenzahnbereich durch Backenzahn-Elemente, insbesondere Backenzahn-Verblendungselemente bzw. Gruppen solcher Elemente erfolgt, bspw. um die Behandlung mittels Vorrichtungen der Serie zum Abschluss zu bringen. Alternativ oder zusätzlich können auch Zwischen-Zielzahnzustände verwendet werden. Diese Backenzahn-Elemente (gruppen) können entsprechend der geplanten finalen Versorgung bzw. der Zwischen-zielzahnzustände eine Kauflächengeometrie und eine Orientierung der Kaufläche aufweisen, die bspw. anhand einer cranialen Geometrie und/oder Anatomie des Schädels der Person. Auch diese provisorischen Backenzahn-Elemente (Zahnblenden) im Backenzahnbereich können in der finalen Versorgung dann bspw. durch Zahnprothesen ersetzt werden.

Es kann ein medizintechnisches Abbildungsverfahren unter Berücksichtigung der Knochendichte verwendet werden, z.B. der röntgenologische Dichte. Eine Segmentierung kann z.B. über die Hounsfield Röntgendichteinheiten erfolgen, um bspw. kraniale Merkmale, wie Augenhöhlen und/oder Innenohr zu bestimmen, siehe bspw. Hornung (EP 3 332 731 A1) und Saxler WO 2020/141134 A1.

Insbesondere kann es auch das Ziel sein, die Lage der Kauebene bleibend bzw. dauerhaft, d.h. auch nach der finalen Versorgung zu verändern, insbesondere bezüglich ihrer Neigung in einer Frontalebene und/oder bezüglich der Neigung in einer Sagittalebene und/oder in ihrer Höhenlage.

Gemäß einer Weiterbildung kann in mindestens einem Teil der Vorrichtungspaare ein Höhenprofilelement bzw. eine Material-Aufdickung, d.h. bspw. ein Vorsprung, insbesondere massiv ausgeführt oder teilweise im Innern ausgehöhlt, an okklusalen Flächen vorhanden sein, der bzw. die im Vergleich zu der Schichtdicke/Höhe an anderen okklusalen Flächen derselben Oberkiefervorrichtung oder derselben Unterkiefervorrichtung mindestens doppelt so hoch ist. Die Gesamtschichtdicke/höhe im Bereich des Höhenprofilelementes/ der Material-Aufdickung kann vorzugsweise größer als 2 mm oder größer als 3 mm oder größer als 4 mm sein. In anderen Bereichen der Vorrichtung kann die maximale Schichtdicke okklusaler Flächen bzw. die Höhe des Höhenprofilelementes bspw. kleiner als 2 mm oder sogar kleiner als 1 mm sein. Ein Höhenprofilelement bzw. die Material-Aufdickung kann vorzugsweise in dem ersten Vorrichtungspaar und/oder in mindestens einem Vorrichtungspaar der ersten 20 Prozent der Vorrichtungen der Serie vorhanden sein.

Das Höhenprofilelement kann durch eine Material-Aufdickung, d.h. durch mehr Material im Vergleich zu anderen Bereichen erfolgen. Alternativ, können jedoch auch Hohlräume verwendet werden, um das Höhenprofilelement zu realisieren, die die gleich Funktion wie Material-Aufdickungen aus massivem Material haben. Die Hohlräume können bspw. Zwischen okklusalen Flächen und einer den okklusalen Flächen zugewandte Innenseite einer okklusalen Wand/Decke, bspw. Im Fall eines Höhenprofilelementes an einer Unterkiefervorrichtung, bzw. Wand/Boden des Höhenprofilelementes realisiert werden, bspw. Im Fall eines Höhenprofilelementes an einer Unterkiefervorrichtung.

Gemäß einer Ausgestaltung kann insbesondere ein Höhen-Sprung des Höhenprofilelementes bzw. der Aufdickung im Vergleich zu der vorhergehender Vorrichtung oder Verglichen mit einem Startzustand der Zähne der Person verwendet werden. Der Höhen-Sprung des Höhenprofilelementes bzw. der Aufdickung kann im Bereich von 3 mm bis 6 mm liegen.

Gemäß einer Weiterbildung kann es in derselben Oberkiefervorrichtung oder derselben Unterkiefervorrichtung links und rechts des Höhenprofilelemente bzw. Aufdickungen mit voneinander unterschiedlicher Höhe an gleichen Backenzahnpositionen geben. Der Höhenunterschied kann vorzugsweise mindestens 1 mm (Millimeter), mindestens 2 mm oder mindestens 3 mm betragen. Damit können Asymmetrien im Kauapparat der Person berücksichtigt werden, bspw. um diese zu verringern oder zu beseitigen. Die Asymmetrie des Höhenprofilelementes bzw. der Aufdickungen kann auch ein Verschwenken durch Rotation des Unterkiefers der Person relativ zu deren Oberkiefer bewirken. Alternativ können links und rechts Höhenprofilelemente bzw. Aufdickungen mit gleicher Höhe verwendet werden, d.h. zueinander recht-links symmetrische des Höhenprofilelemente/Aufdickungen.

Als Bezugssystem kann das rechts-links System des Trägers der Vorrichtungspaare verwendet werden. Alternativ, kann jedoch auch das rechts-links System des frontalen Betrachters verwendet werden, z.B. Zahnarzt, Techniker, Kieferorthopäde.

Gemäß einer Ausgestaltung kann die erste Frontzahnblende der ersten Vorrichtung bzw. des ersten Vorrichtungspaares eine erste Aussparung/Aufnahmebereich für einen Frontzahn der Person enthalten. Eine erste Frontzahnblende der zweiten Vorrichtung bzw. des zweiten Vorrichtungspaares kann eine erste Aussparung/Aufnahmebereich für denselben Frontzahn der Person enthalten. Zumindest die labiale Außenflächen der ersten Frontzahnblende der ersten Vorrichtung kann gleich der labialen Außenflächen der ersten Frontzahnblende der zweiten Vorrichtung gestaltet sein oder nur unwesentlich anders als diese Außenfläche. Die erste Aussparung der ersten Frontzahnblende kann eine erste Position bezüglich der labialen Außenfläche der ersten Frontzahnblende haben. Die erste Aussparung der zweiten Frontzahnblende kann eine zweite Position bezüglich der labialen Außenfläche der zweiten Frontzahnblende haben. Die erste Position kann sich bezüglich der zweiten Position aufgrund der Translation eines Zahns der Person entlang einer vorn-hinten Achse bezüglich des Kopfes der Person unterscheiden. Die erste Frontzahnblende der ersten Vorrichtung kann, insbesondere im Bereich der ersten Aussparung/Aufnahmebereich, eine erste Materialdicke in labialer Richtung haben. Die erste Frontzahnblende der zweiten Vorrichtung kann, insbesondere im Bereich der ersten Aussparung, eine zweite Materialdicke in labialer Richtung haben, vorzugsweise gemessen an der gleichen Position in der zweiten Vorrichtung/dem zweiten Vorrichtungspaar bezogen auf die Messposition der ersten Materialdicke in der ersten Vorrichtung/dem ersten Vorrichtungspaar. Die erste Materialdicke kann von der zweiten Materialdicke um mindestens 20 Prozent oder um mindestens 50 Prozent abweichen. Dies kann eine direkte Folge davon sein, dass die Frontzahnblende in ihrem frontalen Bereich im Wesentlichen unverändert bleibt, dahinter aber die Translation des Frontzahns stattfindet, bspw. von hinten nach vorn oder von vorn nach hinten. Gleiches kann auch bei einer hinten-vorn Verkippung bzw. Verdrehung des Frontzahns gelten, d.h. Änderung der Schichtdicke an der Frontseite der Frontzahnblende.

Die Änderung der Schichtdicke der Materialschicht an der Frontseite kann durch eine entgegengesetzte Änderung der Materialschichtdicke an der Rückseite der Zahnblende ausgeglichen werden, um bspw. die Gesamtstabilität der Vorrichtung unverändert beizubehalten. So kann die Schichtdicke im Rückbereiche der Zahnblende vergrößert werden, wenn sich die Schichtdicke im Frontbereich verringert und umgekehrt. Jedoch kann die Materialschichtdicke im Rückbereich auch unverändert bleiben, bspw. abhängig von zahntechnischen oder anderen Gegebenheiten.

Gemäß einer Ausgestaltung kann die Oberkiefervorrichtung der ersten Vorrichtung bzw. des ersten Vorrichtungspaares oder die Unterkiefervorrichtung der ersten Vorrichtung oder des ersten Vorrichtungspaares an ihrer Frontseite mindestens eine zweite Frontzahnblende tragen, die einer ersten Frontzahnblende der ersten Vorrichtung bzw. des ersten Vorrichtungspaares benachbart ist, bspw. dem oben erwähnten ersten Verblendungselement. Die Oberkiefervorrichtung der zweiten Vorrichtung bzw. des zweiten Vorrichtungspaares oder die Unterkiefervorrichtung der zweiten Vorrichtung bzw. des zweiten Vorrichtungspaares kann an ihrer Frontseite mindestens eine zweite Frontzahnblende tragen, die der ersten Frontzahnblende der zweiten Vorrichtung bzw. des zweiten Vorrichtungspaares benachbart ist, bspw. dem oben erwähnten zweiten Verblendungselement.

Weiterhin kann für insgesamt vier Aussparungen/Aufnahmebereiche Folgendes gelten:
- wobei die erste Frontzahnblende der ersten Vorrichtung eine erste Aussparung für einen ersten Frontzahn der Person enthält bzw. an eine erste Aussparung/Aufnahmebereich angrenzt,
- wobei die zweite Frontzahnblende der ersten Vorrichtung eine zweite Aussparung für einen zweiten Frontzahn der Person enthält bzw. an eine zweite Aussparung/Aufnahmebereich angrenzt, wobei der zweite Frontzahn neben dem ersten Frontzahn liegt,
- wobei die erste Frontzahnblende der zweiten Vorrichtung eine erste Aussparung für den ersten Frontzahn der Person enthält bzw. an eine erste Aussparung/Aufnahmebereich angrenzt, und
- wobei die zweite Frontzahnblende der zweiten Vorrichtung eine zweite Aussparung für den zweiten Frontzahn der Person enthält bzw. an eine erste Aussparung/Aufnahmebereich angrenzt.

Die beiden Frontzahnblenden der ersten Vorrichtung können zumindest an okklusalen Flächen und/oder an labialen Flächen gleich den beiden Frontzahnblenden der zweiten Vorrichtung sein. Gleichheit kann hinsichtlich der maximalen Breite einer okklusalen Fläche und/oder der maximalen Breite einer labialen Fläche und/oder des Abstands der zueinander benachbarten okklusalen Flächen voneinander und/oder des Abstands der zueinander benachbarten labialen Flächen voneinander bestehen. Diese Gleichheit kann darauf zurückzuführen sein, dass sich die äußere Kontur bzw. äußere Geometrie der Zahnblende(n) nicht verändert, insbesondere in ihrem Frontbereich.

Die beiden Aussparungen des ersten Vorrichtungspaares können einen ersten Abstand voneinander haben, insbesondere einen minimalen Abstand. Die beiden Aussparungen des zweiten Vorrichtungspaares können einen zweiten Abstand voneinander haben, insbesondere einen minimalen Abstand. Die Größe des ersten Abstandes kann sich um mindestens 20 Prozent oder um mindestens 50 Prozent von der Größe des zweiten Abstandes unterscheiden. Der erste Abstand kann bezüglich des zweiten Abstands aufgrund einer Translation des ersten Frontzahns der Person entlang einer rechts-links Achse bezüglich des Kopfes der Person und/oder einer Translation des zweiten Frontzahns der Person entlang der rechts-links Achse unterscheiden. Bei dieser Translation bzw. bei diesen Translationen kann vorzugsweise auch die Vergrößerung oder die Verkleinerung eines Abstandes zwischen den beiden Frontzähnen der Person bewirkt werden.

Wie oben erwähnt, kann die Frontzahnblende/Verblendungselement insbesondere in ihrer frontalen Kontur/Geometrie unverändert bleiben. Dennoch kann sich der Abstand zwischen den Aussparungen verändern. Die Veränderung des Abstandes zwischen den Aussparungen kann wiederum eine direkte Folge davon sein, dass die Frontzahnblende in ihrem frontalen Bereich im Wesentlichen unverändert bleibt, dahinter aber die Translation des Frontzahns bzw. der Frontzähne stattfindet. Die Translation kann bspw. nach rechts oder nach links erfolgen bzw. ein Zahn kann nach rechts verschoben werden und der andere Zahn nach links. So kann ein Verschließen einer Lücke zwischen den beiden Frontzähnen oder ein Vergrößern des Abstands zwischen den beiden Frontzähnen erfolgen. Gleiches kann auch bei einer rechts-links Verkippung bzw. Verdrehung des Frontzahns bzw. der Frontzähne gelten, d.h. Änderung des Abstands zwischen Aussparungen in der Frontzahnblende, deren äußere Kontur aber unverändert bleiben kann.

Auch hier kann die Gesamt-Stabilität der Vorrichtung beibehalten werden, wenn aufgrund der Verringerung des Abstands zwischen den Aussparungen die Stabilität verringert wird aber durch entsprechende Materialergänzungen in anderen Bereichen die Stabilität wieder erhöht wird, bspw. in seitlichen Bereichen der Aussparungen der Vorrichtung bzw. der Zahnblende(n).

Gemäß einer anderen Weiterbildung kann zwischen der ersten Vorrichtung bzw. dem ersten Vorrichtungspaar und der zweiten Vorrichtung bzw. dem zweiten Vorrichtungspaar in der Reihenfolge der Vorrichtungen der Serie mindestens ein(e) Vorrichtung/Vorrichtungspaar, bzw. können mindestens zwei Vorrichtungen/Vorrichtungspaare, mindestens drei Vorrichtungen/Vorrichtungspaare oder mindestens vier Vorrichtungen/Vorrichtungspaare oder mindestens 10 Vorrichtungen/Vorrichtungspaare liegen. Damit kann vorzugsweise der Unterschied der Materialschichtdicken und/oder der Unterschied der Abstände von Aussparungen über mehrere Vorrichtungen hinweg signifikant und damit leicht messbar bzw. leicht nachweisbar verändert werden, bspw. um mindestens 0,5 mm oder mindestens 1 mm oder mindestens 2 mm.

Gemäß einer Weiterbildung kann in mindestens einem Teil der Vorrichtungen/Vorrichtungspaare oder in allen Vorrichtungen/Vorrichtungspaaren das mindestens eine Verblendungselement bzw. die mindestens eine Zahnblende bzw. können die Verblendungselemente/Zahnblenden homogen ein einziges Material enthalten. Dies kann die Fertigung vereinfachen.

Gemäß einer alternativen Weiterbildung kann in mindestens einem Teil der Vorrichtungen/Vorrichtungspaare oder in allen Vorrichtungen/Vorrichtungspaaren das mindestens eine Verblendungselement bzw. die mindestens eine Zahnblende oder können die Verblendungselemente/Zahnblenden jeweils mindestens zwei voneinander verschiedene Materialien enthalten. So kann es ein erstes Material in einem Außenbereich und ein zweites Material in einem vom Außenbereich umschlossenen Innenbereich der Zahnblende(n) geben. Das erste Material kann eine größere Härte als das zweite Material haben. Alternativ kann das zweite Material eine größere Härte als das erste Material haben. Zur Bestimmung der Härte gibt es genormte Verfahren, bspw. zur Bestimmung der Shore-Härte, insbesondere unter Verwendung der Skale A oder der Skale D. Alternativ können auch nicht genormte Verfahren zum Bestimmen der Härte verwendet werden.

Wenn als Material im Außenbereich (erstes Material) der Zahnblende(n) das härtere Material verwendet wird, kann bspw. Abrieb reduziert werden und der Tragekomfort kann sich durch das innere weichere Material erhöhen.

Im Außenbereich der Zahnblende(n) kann das weichere Material verwendet werden, wenn es bspw. medizinische oder andere Gründe dafür gibt.

Gemäß einer Weiterbildung kann sich das Material im Innenbereich über mehrere Zahnpositionen oder über den gesamten Zahnbogen einer Teil-Vorrichtung eines Vorrichtungspaares erstrecken. Der Außenbereich kann dazu ausgestaltet sein, nacheinander für mindestens zwei voneinander verschiedene Innenbereiche genutzt zu werden. Der Außenbereich kann bspw. für mindestens 20 Prozent der Vorrichtungen genutzt werden. Zwischen Innenbereich und Außenbereich kann eine mechanische Schnittstelle, z.B. im Sinne eines Interfaces, definiert sein, die über mindestens zwei Vorrichtungspaare gleich ist. Der Innenbereich kann in den Außenbereich einsetzbar sein und/oder aus diesem herausnehmbar sein, insbesondere unter Verwendung eines Formsitzes und/oder eines Klemmsitzes. Alternativ können zusätzlich Befestigungselemente verwendet werden. Durch dieses Modulsystem können die Fertigungskosten erheblich verringert werden und der Gesamtaufwand zur Herstellung der Vorrichtungen einer Serie kann erheblich sinken.

Gemäß einer Weiterbildung kann bezogen auf proximale freie Enden einer Unterkiefervorrichtung der jeweiligen Vorrichtung/des jeweiligen Vorrichtungspaares die labiale Außenfläche der ersten Zahnblende aufgrund einer Aufweitung des Zahnbogens eine andere Position in einer sagittalen Schnittebene haben als die labiale Außenfläche der zweiten Zahnblende. Der Unterschied der Positionen kann mindestens 1 mm oder mindestens 1,5 mm beträgt. Dennoch kann die Position der Frontseite der Zahnblende bezogen auf ein kraniales Bezugssystem im Wesentlichen gleich sein.

Gemäß einer Weiterbildung, bspw. mit Aufweitung des Zahnbogens kann zwischen der ersten Vorrichtung/dem ersten Vorrichtungspaar und der zweiten Vorrichtung/ dem zweiten Vorrichtungspaar in der Reihenfolge der Vorrichtungen der Serie keine Vorrichtungen bzw. kein Vorrichtungspaar mindestens eine Vorrichtung/Vorrichtungspaar, bzw. können mindestens zwei Vorrichtungen/Vorrichtungspaare, mindestens drei Vorrichtungen/Vorrichtungspaare oder mindestens vier Vorrichtungen/Vorrichtungspaare oder mindestens 10 Vorrichtungen/Vorrichtungspaare liegen. Der Gesamt-Unterschied der Position kann über mehrere Vorrichtungen hinweg mindestens 0,5 mm oder mindestens 1 mm oder mindestens 2 mm betragen.

Gemäß einer Ausführungsform wird ein Verfahren zum Entwerfen dentaler Vorrichtungen angegeben, insbesondere von polyfunktionalen Vorrichtungen. Das Verfahren kann insbesondere zum Entwerfen der oben genannten Serie oder einer Serie nach einer der oben genannten Weiterbildungen geeignet sein, wobei digitale Daten erzeugt werden können. Das Entwerfen kann eine Vorstufe für die Herstellung der Vorrichtung(en) sein.

Das Verfahren kann enthalten:
- Aufnehmen einer Start-Zahnanordnung der Zähne einer Person in dessen Oberkiefer und/oder der Zähne der Person in dessen Unterkiefer, vorzugsweise zusammen mit mindestens einem kranialen Merkmal und/oder fazialen Struktur/Merkmal im Schädelbereich der Person,
- Ermitteln mindestens einer Bezugsstruktur der Person vor, während oder nach dem Aufnehmen, vorzugsweise einer kranialen Bezugsstruktur,
- Festlegen einer Zielzahnanordnung der Zähne des Oberkiefers der Person unter Einbeziehung der Bezugsstruktur, insbesondere bezüglich des Oberkiefers oder eines Zieloberkiefers der Person
- Festlegen einer Zielzahnanordnung der Zähne des Unterkiefers der Person unter Einbeziehung der Bezugsstruktur, insbesondere bezüglich des Unterkiefers oder eines Zielunterkiefers der Person.
- basierend auf der Startzahnanordnung und der Zielzahnanordnungen, bzw. einer Zielform und/oder Ziellage des Zieloberkiefers und/oder des Zielunterkiefers, Bereitstellen einer Datensatzserie aus gemäß einer Reihenfolge aufeinanderfolgenden digitalen Datensatzgruppen, insbesondere von digitalen Datensatzpaaren, bspw. mit jeweils einem Datensatz für die Zähne des Oberkiefers und/oder einem Datensatz für die Zähne des Unterkiefers.

Die Zielzahnanordnung kann als Basis für die Herstellung mindestens eines Verblendungselementes/ einer Zahnblende verwendet werden, insbesondere einer Frontzahnblende, gegebenenfalls auch unter Einbeziehung einer Eckzahnblende oder weiterer Blenden/Verblendungselemente für andere Zähne, z.B. Prämolare oder Molare.

Gemäß einer Weiterbildung kann das mindestens eine Verblendungselement bzw. die mindestens eine Zahnblende den an dieser Zahnposition liegenden Zahn in einem Zielzahnzustand oder Zwischen-Zielzahnzustand oder in einer geeigneten Vergrößerung des Zielzahnzustandes oder des Zwischen-Zielzahnzustandes darstellen. Bezüglich des Ausmaßes der Vergrößerung können die oben genannten Bereich auch für das Verfahren gelten.

Gemäß einer Weiterbildung kann das mindestens eine Verblendungselement bzw. die mindestens eine Zahnblende für den Entwurf mindestens einer Vorrichtung oder mehrerer Vorrichtungen einer Serie von Vorrichtungen zum inkrementellen Verändern der Zahnstellung der Person verwendet werden. Dabei kann sich die mindestens eine Vorrichtung von einer letzten Vorrichtung der Serie unterscheiden oder die mehreren Vorrichtungen können sich von einer letzten Vorrichtung der Serie unterscheiden.

Damit können die oben für die mindestens eine Zahnblende der Serie aus Vorrichtungen genannten technischen Wirkungen indirekt auch für das Verfahren zum Entwurf der Vorrichtungen enthaltend das mindestens eine Verblendungselement bzw. die mindestens eine Zahnblende gelten, d.h. dass die Möglichkeit besteht, dass bspw. der Zielzahnzustand also schon vorher verwendet bzw. dargestellt kann.

Zum Bereitstellen der Daten können geeignete Verfahren verwendet werden, z.B.:
- Kollisionserkennung unter Verwendung von OBB (Oriented Bounding Box) Bäumen/Graphen (Trees), und/oder
- Darstellung von dreidimensionalen Strukturen unter Verwendung von Voroni-Diagrammen.

Das Aufnehmen der Start-Zahnanordnung der Zähne kann auch das Aufnehmen eines Knochenbildes des Kopfes eines Patienten enthalten, das auch die Lage des Unterkiefers in einer Unterkieferstartposition, des Oberkiefers in einer Oberkieferstartposition und der Zähne des Oberkiefers und der Zähne des Unterkiefers in einer Startzahnpositionen zeigt.

Das Ermitteln der Bezugsstruktur kann das Festlegen mindestens einer Bezugsebene unter Einbeziehung mindestens einer kranialen Struktur/Strukturmerkmal des Knochenbildes des Kopfes der Person (Patient) oder eines fazialen Struktur-Merkmals des Gesichtes der Person enthalten, wobei das faziale Merkmal vorzugsweise eng mit einer Schädelstruktur verbunden ist,

Die Berücksichtigung des kranialen Merkmals kann die Vorrausetzung für einen langfristigen Behandlungserfolg sein. Die kraniale Struktur ist insbesondere eine Struktur außerhalb des Oberkiefers und/oder insbesondere auch außerhalb des Unterkiefers der Person. Die kranial Struktur kann:
- ein Merkmal des Schädels und/oder Kopfes betreffen, z.B. die Schläfen, die Ohren, die Innenohrbereiche, die Augenhöhlen, die Jochbeine, usw.
- geeignet sein zum Festlegen einer sagittalen Ebene, z.B. einer mediale Sagittalebene durch den Schädel, insbesondere an der halben Strecke zwischen paarig auftretenden Merkmalen, d.h. z.B. genau zwischen den ermittelten Innenohrbereichen oder zwischen anderen oben genannten Merkmalen, etc.
- geeignet sein zum Festlegen einer im Wesentlichen transversalen Ebene, z.B. einer Zielkauebene, siehe z.B. EP 33 32 731 A1.

Die Bezugsstruktur kann z.B. das kartesische Bezugsebenen-System enthalten, das in WO 2020/141134 für eine Trainingsvorrichtung vorgeschlagen wird, das aber auch für andere Zwecke verwendet werden kann, bspw. für das vorgeschlagene Verfahren.

Ist bspw. die Sagittalebene bekannt, können die dazu orthogonalen Ebenen festgelegt werden, z.B. mindestens eine Frontalebene oder ein Frontalebenen-Paket und/oder mindestens eine Transversalebene oder ein Transversalebenen-Paket.

Es kann mindestens 10, mindestens 20 oder mindestens 30 Vorrichtungen in der Serie geben. Es kann weniger als 100 Vorrichtungen in der Serie geben. Die genaue Anzahl von Vorrichtungen kann in einem Behandlungsplan angegeben sein und kann bspw. davon abhängen, ob Attachments verwendet werden oder nicht oder welchen Druck auf ihre Zähne die betreffende Person noch als akzeptabel empfindet.

Bei einer Ausgestaltung kann das Verfahren auch mindestens einen der folgenden Schritte enthalten:
- Ermitteln von Kraftvektoren, die zur Verlagerung der Zähne erforderlich sind, bspw. unter Verwendung von FEM (Finite Elemente Methode) oder FDM (Finite Differenzen Methode) oder anderer geeigneter Methoden, die computerbasiert sein können,
- basierend auf den Kraftvektoren Ermitteln der Form von Aussparungen und/oder kraftübertragenden Elementen (Attachments und/oder Vorsprünge und/oder Wirkflächen in Aussparungen) in Vorrichtungen einer Serie enthaltend mindestens zwei Vorrichtungspaare.

Auch die für das Verfahren relevanten Vorrichtungen können wie die oben genannten Vorrichtungen aufgebaut sein, d.h. bspw. jeweils eine Oberkiefervorrichtung und eine Unterkiefervorrichtung enthalten. Die Vorrichtungen bzw. die Vorrichtungspaare der Vorrichtungen können unter Berücksichtigung der Kraftvektoren so ausgelegt werden, dass sie nacheinander gemäß einer Reihenfolge der Vorrichtungen/Vorrichtungspaare eine inkrementelle Veränderung der Zahnstellung der Person bewirken.

Die Anbringung von Attachments an den Zähnen kann für den Erfolg der Behandlung eine wichtige Rolle spielen. Die Attachments können im Vergleich zu den Zähnen kleine Befestigungselemente aus Komposit sein, d.h. einer zahnähnlichen Substanz, die dafür sorgen, dass die Zahnbewegung schneller, einfacher und effizienter stattfinden können. Die Attachments können als Anker fungieren, den der Aligner greift, um die Bewegung zu vollbringen, z.B. ein Anheben der Zähne. Durch Attachments kann der nötige Druck für die Zahnbewegung präzise ausgeübt werden. Darüber hinaus können die Attachments komplexe Bewegungen wie z.B. die Rotation der Zähne ermöglichen und dafür sorgen, dass die Korrektur ohne unnötige "Zwischenbewegungen" verläuft.

Grundsätzlich kann eine Behandlung auch ohne Attachments durchgeführt werden. Bei manchen Fehlstellungen werden schlichtweg keine Attachments benötigt und/oder auf Wunsch weggelassen oder zu einem späteren Zeitpunkt eingeplant. Eine Behandlung ohne Attachments kann dazu führen, dass mehr Schienen zur Erreichung der Zielanordnung benötigt werden.

Jeder digitale Datensatz oder jedes digitale Datensatzpaar kann enthalten:
- Daten, die eine Zahnanordnung der Zähne des Oberkiefers beschreiben, und/oder
- Daten, die eine Zahnanordnung der Zähne des Unterkiefers beschreiben.

Aufeinanderfolgende Zahnanordnungen des Oberkiefers können von einer Anfangs-Zahnanordnung der Zähne des Oberkiefers zu einer End- bzw. Ziel-Zahnanordnung inkrementell fortschreiten. Aufeinanderfolgenden Zahnanordnungen des Unterkiefers können von einer Anfangs-Zahnanordnung der Zähne des Unterkiefers zu einer End- bzw. Ziel-Zahnanordnung inkrementell fortschreiten.

Gemäß einer Weiterbildung kann das Verfahren vorzugsweise zur Behandlung von Fehlstellungen und/oder von Alterungserscheinungen an einem Gebiss einer Person verwendet werden. Andere Anwendungen sind ebenfalls möglich.

Gemäß einer Weiterbildung kann ein polyfunktionaler Gesamtbehandlungsplan erstellt werden, der eine Vielzahl von Funktionen in die Vorrichtungen der Serie integriert. Jede der Funktionen kann einen Teilbehandlungsplan umfassen, der sich auf die einzelnen Zähne oder Zahnpositionen des Gebisses der Person bezieht.

Der Gesamtbehandlungsplan kann beschreiben, welche der polyfunktionalen Funktionen wann aktiviert werden und/oder in welchem Ausmaß, wobei mindestens zwei, mindestens drei, mindestens 4, mindestens 5 oder mindestens 6 Funktions-Typen ausgewählt und integriert sein können aus der Gruppe:
- Alignment-Funktion, wobei durch zumindest einen Teil der Vorrichtungen oder durch alle Vorrichtungen eine Verlagerung mindestens eines Zahnes durch kleine inkrementelle Verschiebungen, kleine inkrementelle Verkippungen oder kleine Rotationinkremente erfolgt, wobei die Inkremente vorzugsweise kleiner als 0,3 mm (Millimeter) oder kleiner als 0,2 mm sind, und/oder
- Verschiebungs-Funktion, wobei durch zumindest einen Teil der Vorrichtungen oder durch alle Vorrichtungen eine groß angelegte Verschiebung von Zähnen durch Verkippung und Translation und optional Neigungskorrektur zur Verlagerung oder Veränderung des Zahnbogens erfolgt, wobei der Zahnbogen um mindestens 1 mm oder um mindestens 2 mm verlagert oder um mindestens 1 mm oder um mindestens 2 mm verlängert wird, und/oder,
- Form-Funktion, wobei eine Gestaltung der Form zumindest eines Teils der Vorrichtungen oder aller Vorrichtungen der Serie mit vorzugsweise im spürbaren Frontbereich angeordneten und/oder im sichtbaren Bereich ästhetisch ausgestalteten Zahnblenden erfolgt, wobei vorzugsweise die Zahnblenden Zähne oder Zahnstümpfe überdecken, und/oder
- Farb-Funktion, wobei zumindest eine Teil der Vorrichtungen oder alle Vorrichtungen in oder an zumindest von vorn sichtbaren Zahnblenden der Vorrichtungspaare eine individuelle Farbe haben, insbesondere die Farbe der Zähne der Person oder eine andere ansprechende Zahnfarbe haben, z.B. eine ästhetisch ansprechende, insbesondere eine Farbe, die verschieden ist von einem farblosen durchsichtigen oder farblos durchscheinenden Material, und/oder
- Höhen-Funktion, wobei ein massiver Aufbau mit Material über den Backenzähnen in Backenzahnbereichen der Vorrichtungen oder eines Teils der Vorrichtungen erfolgt, vorzugsweise mit einer Schichtdicke von mindestens 2 mm oder von mindestens 3 mm oder von mindestens 4 mm, und/oder
- Gleit-Funktion, wobei ein bspw. massiver Aufbau mit ausgebildeter Gleitfläche in zumindest einem Teils der Vorrichtungen verwendet wird, vorzugsweise mit einer Schichtdicke/Höhe von mindestens 2 mm oder von mindestens 3 mm oder von mindestens 4 mm und/oder mit geringer Reibung und/oder ohne Retentionen (Aussparungen, Vertiefungen, Profil), und/oder
- Oberkiefer-Unterkiefer-Relativpositionierungs-Funktion, vorzugsweise eine Rampenfunktion, wobei in zumindest einem Teils der Vorrichtungen lokal eingebaute Rampen, Schrägen, Federn oder andere Element verwendet werden, die bei Kontakt zwischen Oberkiefer und Unterkiefer eine transversale Reaktionskraft verursachen, und/oder
- Implantat-Funktion, die in zumindest einem Teils der Vorrichtungen eine Abstützfunktion und/oder Befestigungsfunktion und/oder Positionierfunktion einer Oberkiefervorrichtung oder einer Unterkiefervorrichtung eines Vorrichtungspaares an Implantaten der Person haben, wobei vorzugsweise das Implantat vorwiegend axial belastet wird, und/oder
- Auflage-Funktion, die in zumindest einem Teil der Vorrichtungen oder in allen Vorrichtungspaaren eine Auflagerungsfunktion für eine Oberkiefervorrichtung oder eine Unterkiefervorrichtung mindestens einer der Vorrichtungen auf Weichgewebe der Person erbringt, insbesondere wenn Zähne an wichtigen Stellen im Zahnbogen fehlen.

Weitere Funktionen können optional hinzutreten, z.B. eine Orthese-Funktion, z.B. eine Orthese nach Saxler, siehe WO 2020/141134 A1.

Die Trenn-Gleitebene der Orthese kann nach Saxler (3D Strukturmarkierung/Marker/Ruler) oder nach einem anderen Verfahren bestimmt werden. Die Orthese kann einen Randspalt enthalten, muss es aber nicht.

In mindestens einem Teilabschnitt der Serie können gleichzeitig und integriert in den Vorrichtungen die kieferorthopädisch wirkende Alignment-Funktion und die ästhetisch wirkende Form-Funktion angewendet werden.

Für das Verfahren kann ebenfalls mindestens eine oder können ebenfalls mehrere der oben bereits für die Serie erläuterten Weiterbildungen gelten:
- kraftübertragende Funktionselemente für Alignment-Funktionen und Verschiebe-Funktionen sind von der mindestens einen Zahnblende verdeckt,
- eine Kombination aus Aufbauten mit Höhen-Funktion und Aufbauten mit Gleit-Funktion und/oder eine Kombination aus Aufbauten mit Höhen-Funktion und Aufbauten mit Rampen-Funktion, insbesondere in Backenzahnbereichen der Oberkiefervorrichtung und/oder der Unterkiefervorrichtung,
- Farbgebung,
- mindestens eine der ersten 20 Prozent der Vorrichtungen der Serie enthält ausgestaltete Zahnblenden,
- zuerst einen Höhenaufbau mittels einer Höhen-Funktion vorgenommen, dann geeignete Zahnverlagerung durch Alignment-Funktion(en) und/oder Zahnbogenveränderung durch Verschiebe-Funktion(en),
- zusätzlich zu Alignment-Funktionen und oder Verschiebe-Funktionen auch Höhen-Funktionen mit Gleit-Funktionen,
- zusätzlich zu Alignment-Funktionen und/oder Verschiebe-Funktionen auch Oberkiefer-Unterkiefer-Relativpositionierungs-Funktion (z.B. Rampen-Funktion),
- das letzte Vorrichtungspaar der Serie ist eine möglichst genaue Abbildung der geplanten finalen Versorgung im sichtbaren Frontzahnbereich, und/oder
- das letzte Vorrichtungspaar der Serie ist eine möglichst genaue Abbildung der geplanten finalen Versorgung der Zähne der Person im Backenzahnbereich.

Gemäß einer Weiterbildung kann nach dem Tragen des letzten Vorrichtungspaares gemäß einem Behandlungsplan eine finale Versorgung der Zähne und/oder Zahnstümpfe der Person erfolgen. Die finale Versorgung kann eine dauerhafte Kauoberfläche schaffen, die mit einer geplanten Kaufläche übereinstimmt. Die finale Versorgung kann eine Frontfläche schaffen, die mit der geplanten Frontfläche übereinstimmt, insbesondere mit der Form und/oder Position der labialen Außenflächen der mindestens einen Front-Zahnblende und/oder mit der Form und/oder Position einer labialen Außenfläche einer zweiten Frontzahnblende.

Alle Vorrichtungen können am selben Fertigungsstandort produziert werden, bspw. an derselben Maschine. Dies kann bspw. die Logistik erleichtern. Alternativ kann ein erster Teil von Vorrichtungen an einem ersten Fertigungsstandort produziert werden und ein zweiter Teil an einem zweiten Fertigungsstandort, bspw. um einerseits die schnelle Verfügbarkeit der ersten Vorrichtung und ggf. einer oder zweier weiterer Vorrichtungen zu gewährleisten und um andererseits die Gesamtfertigungskosten durch die Nutzung von kostengünstiger Fertigung zu senken. Weiterhin können auch herkömmliche Tiefziehverfahren zur Herstellung einiger Vorrichtungen der Serie verwendet werden, wenn die betreffenden Vorrichtungen in dieser Technologie fertigbar sind, bspw. wenn die Form-Funktion (Zahnblende(n)) noch nicht integriert ist.

In der Offenbarung werden weiter die folgenden Einheiten angegeben:
- ein Computer enthaltend: mindestens eine Speichereinheit, und
   Eine Steuereinheit, die dazu ausgelegt ist, Befehle eines Programms auszuführen, die den Computer dazu veranlassen zumindest einen Teil eines der oben genannten Verfahren auszuführen, insbesondere die auf den Entwurf der Vorrichtungen bezogenen Schritte, insbesondere automatisiert oder halbautomatisiert,
- ein Computerprogramm, das maschinenlesbare Befehle enthält, die bei Ausführung durch eine Steuereinheit, die Steuereinheit dazu veranlassen, zumindest einen Teil eines der oben angegebenen Verfahren auszuführen,
- ein Computerprogrammprodukt das maschinenlesbare Befehle enthält, die bei Ausführung durch eine Steuereinheit, die Steuereinheit dazu veranlassen, zumindest einen Teil eines der oben genannten Verfahren auszuführen, und/oder
- digitale Daten, die mit einem oben genannten Verfahren erzeugt oder von einem solchen Verfahren benötigt werden, insbesondere Entwurfsdaten und/oder Herstellungsdaten zur Herstellung der Vorrichtungspaare mit einer Fertigungsmaschine.

Gemäß einer anderen Ausführungsform werden digitale Daten zum Beschreiben einer Serie aus Vorrichtungen zum inkrementellen Verändern der Zahnstellung einer Person angegeben. Die digitalen Daten können Vorrichtungen bzw. Vorrichtungspaare beschreiben, die jeweils eine Oberkiefervorrichtung und/oder eine Unterkiefervorrichtung enthalten.

Die Oberkiefervorrichtungen so ausgelegt sein, dass sie auf den Zahnbogen im Oberkiefer der Person aufsetzbar sind. Die Unterkiefervorrichtungen können so ausgelegt sein, dass sie auf den Zahnbogen im Unterkiefer der Person aufsetzbar sind.

Die Vorrichtungen bzw. Vorrichtungspaare können so ausgelegt sein, dass sie wenn sie gemäß einer vorgegebenen Reihenfolge der Vorrichtungen bzw. Vorrichtungspaare nacheinander von der Person getragen werden, eine inkrementelle Veränderung der Zahnstellung der Person bewirken.

Die digitalen Daten können vorzugsweise an der Frontseite einer Oberkiefervorrichtung einer ersten Vorrichtung bzw. eines ersten Vorrichtungspaares oder einer Unterkiefervorrichtung der ersten Vorrichtung bzw. des ersten Vorrichtungspaares mindestens eine erste Zahnblende bzw. ein Verblendungselement beschreiben.

Die digitalen Daten können vorzugsweise an der Frontseite einer Oberkiefervorrichtung einer zweiten Vorrichtung bzw. eines zweiten Vorrichtungspaares oder einer Unterkiefervorrichtung der zweiten Vorrichtung bzw. des zweiten Vorrichtungspaares mindestens eine zweite Zahnblende beschreiben.

Analog kann auch eine dritte Zahnblende/Verblendungselement eines dritten Vorrichtungspaares bzw. einer dritten Vorrichtung beschrieben werden.

Die mindestens eine Zahnblende der ersten Vorrichtung bzw. des ersten Vorrichtungspaares kann an derselben Zahnposition liegen wie die Zahnblende der zweiten Vorrichtung bzw. des zweiten Vorrichtungspaares. Weiterhin können die digitalen Daten, die im Anspruch 1 beanspruchten technischen Merkmale wiedergeben oder die in den Ansprüchen 1 bis 20 angegebenen technischen Merkmale.

Die mindestens eine Zahnblende der ersten Vorrichtung bzw. des ersten Vorrichtungspaares und die mindestens eine Zahnblende der zweiten Vorrichtung bzw. des zweiten Vorrichtungspaares können den an dieser Zahnposition liegenden Zahn in einem Zielzahnzustand oder in einer Vergrößerung des Zielzahnzustandes darstellen.

Gemäß einer weiteren Ausführungsform wird ein Behandlungsplan angegeben, insbesondere ein digitaler Behandlungsplan zum inkrementellen Verändern der Zahnstellung einer Person, insbesondere unter Nutzung einer Serie nach einem der Ansprüche.

Der Behandlungsplan kann den Verlauf der Behandlung der Person beschreiben. Der Behandlungsplan kann zumindest in einem Teilabschnitt oder über den gesamten Behandlungsplan hinweg die folgenden Daten festlegen:
- Nummer einer Vorrichtung bzw. eines Vorrichtungspaares der Serie,
- Kennzeichen der Zahnposition innerhalb der jeweiligen Vorrichtung bzw. des jeweiligen Vorrichtungspaares, und
- Festlegung der Behandlungsfunktion für die jeweilige Zahnposition der jeweiligen Vorrichtung bzw. des jeweiligen Vorrichtungspaares,

wobei der Behandlungsplan eine Form-Funktion als Behandlungs-Funktion enthält, die die Form mindestens zweier Zahnblenden bzw. mindestens dreier Zahnblenden festlegt, insbesondere von frontseitigen Zahnblenden,
und wobei mindestens eine Zahnblende einer ersten Vorrichtung bzw. eines ersten Vorrichtungspaares an derselben Zahnposition liegt wie die Zahnblende einer zweiten Vorrichtung bzw. eines zweiten Vorrichtungspaares und/oder die Zahnblende einer dritten Vorrichtung bzw. eines dritten Vorrichtungspaares.

Der Behandlungsplan kann die im Anspruch 1 beanspruchten technischen Merkmale wiedergeben bzw. die in den Ansprüchen 1 bis 15 angegebenen technischen Merkmale.

Die mindestens eine Zahnblende des ersten Vorrichtungspaares und die mindestens eine Zahnblende des zweiten Vorrichtungspaares bzw. auch die mindestens eine Zahnblende der dritten Vorrichtung bzw. des dritten Vorrichtungspaares können den an dieser Zahnposition liegenden Zahn in einem Zielzahnzustand oder in einer Vergrößerung des Zielzahnzustandes darstellen.

Somit können im digitalen Behandlungsplan Festlegungen in mindestens drei "Dimensionen" getroffen werden, d.h. Nummer der Vorrichtung, Zahnposition und Behandlungsfunktion.

Der Behandlungsplan kann Datensätze enthalten oder auf einer Datenbank beruhen, insbesondere auf einer relationale Datenbank. Alternativ können die digitalen Daten oder der digitale Behandlungsplan auch auf andere geeignete Art und Weise beschrieben werden.

Der digitale Behandlungsplan kann beispielsweise geeignet sein, um bei zahnärztlicher oder anderen ärztlichen Kassen vorgelegt zu werden.

Für die digitalen Daten und für den digitalen Behandlungsplan können die oben für die Serie und das Verfahren bzw. die weiteren Aspekte angegebenen technischen Wirkungen ebenfalls gelten.

Obwohl die Erfindung im Detail durch das bevorzugte Ausführungsbeispiel näher illustriert und beschrieben worden ist, ist die Erfindung nicht durch die offenbarten Beispiele eingeschränkt und andere Variationen können vom Fachmann hieraus abgeleitet werden, ohne den Schutzumfang der Erfindung zu verlassen.

Gleiche Bezugszeichen beziehen sich auf gleiche technische Merkmale, wenn nichts anderes gesagt wird. Soweit "kann" in dieser Anmeldung verwendet wird, bedeutet es sowohl die Möglichkeit der Realisierung als auch die tatsächliche technische Implementation. Die Konzepte der Offenbarung werden mit Bezug zu bevorzugten Ausführungsbeispielen unten beschrieben in einem spezifischen Zusammenhang, nämlich Alignern. Die offenbarten Konzepte können jedoch auch auf andere Situationen und/oder Anordnungen angewandt werden, insbesondere auf Situationen in denen kein Alignment erforderlich ist.

Das Vorstehende hat die Merkmale und technischen Wirkungen der Erfindung breit erläutert. Zusätzlichen Merkmale und technische Wirkungen von Ausführungsbeispielen der vorliegenden Offenbarung werden im Folgenden erläutert, z.B. der Gegenstand der Ansprüche. Es sollte durch den Fachmann anerkannt werden, dass die Konzeption und die spezifischen Weiterbildungen als Basis zum Modifizieren oder zum Entwerfen anderer Strukturen oder Prozesse genutzt werden können, welche gleich oder ähnliche Zwecke haben, wie das hier speziell erläuterte Konzept. Es sollte durch den Fachmann außerdem anerkannt werden, dass sich äquivalente Konstruktionen nicht vom Geist oder Umfang der Offenbarung entfernen, wie sie bspw. in den anliegenden Ansprüchen definiert ist.

Für ein vollständigeres Verständnis der offenbarten Konzepte und deren technischer Wirkungen und Vorteile wird nun auf die folgende Beschreibung in Verbindung mit den beiliegenden Figuren Bezug genommen. Die folgenden Figuren sind grob schematische Darstellungen von komplexen polydimensionalen Verfahren und polyfunktionellen Vorrichtungen. Diese Darstellungen können prinzipiell nur einen Teilaspekt der veranschaulichten Realität der Vorrichtungen und der Verfahren wiedergeben.

Die Figuren sind nicht zum Skalieren gezeichnet. In den Zeichnungen zeigen:
Figur 1 eine einfache Kombination aus Aligner-Funktionen mit einer Form-Funktion und/oder einer optionalen Farb-Funktion,
Figur 2 zum Vergleich einen zweidimensionalen Behandlungsplan, zusammengesetzt aus Alignment-Funktion und Verschiebe-Funktion,
Figur 3 einen komplexen multifunktionalen Behandlungsplan mit 9 Funktionstypen,
Figur 4 das polyfunktionale "Staging" im polyfunktionalen Behandlungsplan,
Figur 5 ein Ausführungsbeispiel mit Gleit-Funktion in Kombination mit Höhen Funktion an den Backenzahnbereichen sowie Form-Funktion an den Frontzahnbereichen,
Figur 6 den schrittweisen Übergang mit Gleit-Funktion, Rampen-Funktion und Höhen-Funktion im Backenzahnbereich sowie Form-Funktion in Frontzahnbereich,
Figur 7 die Höhen-Funktion in einer bspw. asymmetrischen Ausformung,
Figur 8 eine Höhen-Funktion kombiniert mit einer Rampen-Funktion bei Craniomandibulärer Dysfunktion CMD,
Figur 9 ein Beispiel für die verdeckt laufende Alignment-Funktion und Verschiebe-Funktion,
Figur 10 zum Vergleich eine durch eine transparente Aligner-Schiene beobachtbare Alignment-Funktion an Frontzähnen unter Verwendung einer Form-Funktion (Zahnblende(n)),
Figur 11 im Schnittbild die verdeckt laufende Alignment-Funktion im Fall zweier auseinander stehender Frontzähne,
Figur 12 das verdeckt ablaufende distale Herauswachsen von natürlichen Zähnen,
Figur 13 einen mehrschichtigen Aufbau einer Unterkiefervorrichtung im Schnittbild,
Figur 14 die Verschiebe-Funktion in Kombination mit der Form-Funktion (Zahnblende(n)) im Sinne einer Verlagerung der sichtbaren Zahnbereiche hin zu einem größeren Zahnbogen im Schnittbild,
Figur 15 eine Vorrichtung mit Höhen-Funktion und Rampen-Funktion und Gleit-Funktion und Alignment-Funktion und Form-Funktion, und
Figur 16 ein Computersystem.

Die Fachleute sehen sich einer Vielzahl von Anforderungen und Zielstellungen gegenüber, die genau genommen in Kombination zu erreichen sein sollten. Die oben genannte ausführliche Darstellung des Standes der Technik zeigt, dass für jeden dieser Teilbereiche durchaus praktikable Verfahren bekannt und ebenso praktikable Vorrichtungen verfügbar sein können. Die bisher verfügbaren Vorrichtungen und Verfahren können jedoch jeweils nur einen Teil der Anforderungen erfüllen. Eine integrierte Kombination von Elementen und Maßnahmen in einer einzigen Vorrichtung bzw. in einer sich fortschreitend ändernden Serie von Vorrichtungen war bisher nicht bekannt und nicht verfügbar, insbesondere nicht die dabei entstehenden synergistischen Effekte.

Die vorgeschlagene Technologie kann eine große und für den Behandlungserfolg sehr wichtige Erweiterung des Funktionsumfangs der Vorrichtungen darstellen, die zur Optimierung eines Gebisses bzw. des gesamten Kauapparates eingesetzt werden können. Zu den reinen Alignment-Funktionen 210, die möglicherweise durch die klassischen kieferorthopädischen Funktionen 220 wie Zugvorrichtungen ergänzt werden, kann wie nun vorgeschlagen eine Auswahl von mindestens einer, bevorzugt mindestens 2, besonders bevorzugt mindestens 3 weiteren Funktionen hinzukommen.

In besonders komplexen Ausführungsbeispielen können 4 oder 5 oder 6 Funktionstypen kombiniert werden. Die bevorzugten zusätzlichen Funktionen können beispielsweise aus der folgenden Gruppe ausgewählt werden: Form-Funktion 230, Farb-Funktion 240, Höhen-Funktion 250, CMD-Funktion und Cranial-Funktion. Eine besonders bevorzugte Kombination von Funktionstypen ist Alignment-Funktion 210 UND Form-Funktion 230 UND Höhen-Funktion 250 UND Farb-Funktion 240 UND CMD-Funktion.

Biomechanisch und orthopädisch betrachtet kann die Wirkung der kombinierten Behandlung sogar über den Kauapparat hinaus reichen. Sie kann nicht nur die Zähne, das Kiefergelenk und den Schädelknochen betreffen. Sie kann auch den Atlas, die Halswirbelsäule und den Rest des Bewegungsapparates betreffen, insbesondere auch die Brustwirbelsäule und die Lendenwirbelsäule, z.B. bis zum Kreuzbein. Die ersten Ergebnisse mit einer derart kombinierten Behandlung weisen darauf hin, dass sich durch die craniale Optimierung auch Fehlstellungen an der Wirbelsäule verbessern lassen.

Systematisch und schematisch beschrieben kann das polyfunktionale integrierte Verfahren durch viele unterschiedliche Funktionen gekennzeichnete Behandlungsphasen umfassen, insbesondere Phasen eines Behandlungsplanes. Ein solcher Behandlungsplan kann also nicht für jeden der Zähne auf nur einer Ebene dargestellt werden. Man kann für jede Funktionalität, die optional auf einen Zahn wirkt, eine gesamte Ebene des Behandlungsplans erstellen, z.B. mit den Nummern der Zähne von links nach rechts und mit den Nummern der Vorrichtungen bzw. Vorrichtungspaare bzw. Vorrichtungsstufen von oben nach unten. Damit wäre durch die Anzahl der Funktionalitäten dann eine "dritte Dimension" des Behandlungsplans neben der Nummer des jeweiligen Zahns und der Nummer für die Vorrichtung bzw. das jeweilige Vorrichtungspaar gegeben. Dies wäre zu umfassend für eine Beschreibung im gegebenen Rahmen. Also konzentriert sich die Darstellung auf die unterschiedlichen Funktionstypen bzw. Funktionalitäten, also auf die mehreren Ebenen des Behandlungsplan, wobei die unterschiedlichen Funktionstypen auf jeden Zahn des Gebisses anders wirken können.

Im allgemeinen Fall kann die vorgeschlagene Lösung, anders als Vergleichs-Aligner-Schienen, eine multidisziplinäre Vielfalt von Funktionen umfassen, die in eine Abfolge von Vorrichtungspaaren 10.n (n=1...x) , jeweils mit Oberkieferschiene (Oberkiefervorrichtung) 11.n und Unterkieferschiene (Unterkiefervorrichtung) 12.n. Im Folgenden werden drei Gruppen von Funktionen näher erläutert.

Weitere Funktionen können hinzutreten. Ebenso können einige der erläuterten Funktionen nur bei Bedarf, d.h. optional verwendet werden.

### Verlagerungsfunktionen Alignment 210 und Verschiebung 220 (Shift)

Die klassischen kieferorthopädischen Funktionen können Teil der Auswahl der zu kombinierenden Funktionen sein. Die Alignment-Funktion 210 betrifft die Verlagerung von mindestens einem Zahn relativ zum Zahnbogen und insbesondere relativ zu den Nachbarzähnen. Deshalb kann die Alignment-Funktion 210 auch dann darstellbar sein, wenn nur die intraoralen Scans der Oberflächen der Zahnbögen von Oberkiefer OK, 5 und Unterkiefer UK, 4 vorliegen. Die möglichen Kräfte und Momente, die auf Zähne ausgeübt werden können, lassen sich optional verändern, indem man an den Zähnen sogenannte Attachments anbringt.

Die Verschiebe-Funktion 220 betrifft die kraftgetriebene Verlagerung von einzelnen Zähnen durch Wechselwirkungen mit der Gegenseite durch Gummizüge oder durch seitliche Keile etc. Eine Kombination der Alignment-Funktionen 210 mit Verschiebe-Funktionen 220 ist auch Teil der möglichen vorgeschlagenen neuen Kombinationen in einem polyfunktionalen Verfahren und in den polyfunktionalen Vorrichtungen 10.
1) Funktions-Typ Alignment-Funktion 210 (Alignment-Funktion): Mindestens ein Vorrichtungspaar 10.n weist Aligner-Elemente auf, insbesondere Aligner-Kavitäten bzw. Material-Aussparungen zur Aufnahme und Kraftführung der Zähne. Diese können direkt mit ausgewählten Zähnen wechselwirken oder mit Attachments, die an ausgewählten Zähnen angebracht sind.
2) Funktions-Typ Verschiebe-Funktion 220 (Shift): Mindestens ein Vorrichtungspaar 10.n weist zusätzliche funktionale kraftausübende Elemente auf. Diese wirken bevorzugt zwischen Oberkiefer und Unterkiefer. Sie können als Führungskeile oder als Zuggummis etc. ausgebildet sein.

### Funktionen Form 230 und Farbe 240

Herauszuheben sind zwei besonders augenfällige neue Funktionen. Integriert werden ein oder zwei Funktionen, die sowohl technischen Wirkungen haben können als auch die Ästhetik beeinflussen können: die Form-Funktion 230 der neuen Form der Zähne und die Farb-Funktion 240. Die Form-Funktion 230 kann ermöglicht werden, indem die Gestalt der Zahnblenden, die zusammen eine Vorrichtung bilden, nicht prinzipiell der vorgegebenen Gestalt der Zähne der Person P im Ist-Zustand folgt. Vielmehr kann bereits in einer Vorrichtung 10 die Form einer jeden Zahnblende optimiert oder restauriert werden, insbesondere durch Nachbildungen mindestens einer Ziel-Zahnanordnung. Bei einem Gebiss mit abradierten Zähnen kann dies zum Beispiel zweckmäßig sein, um später die geeignete Höhe der Kauflächen zu erreichen.

Die zweite Funktion ist die Farb-Funktion 240. Diese kann nicht nur die eigentliche Farbe der Zahnblenden umfassen, sondern die komplex entstehende Farbwirkung von Zähnen. Dabei kann jede Zahnblende ihre eigene Farbfunktion bekommen und im Grunde könnte sich diese Farbverteilung von Vorrichtung n zu Vorrichtung n+1 in der Serie 100 verändern.

3) Funktions-Typ Form-Funktion 230 (Shape): Mindestens ein Vorrichtungspaar 10.n kann künstlich geformte Zahnblenden oder künstlich geformte Zahnteile aufweisen, hier Zahnblenden oder auch Zahnkörper genannt, insbesondere Nachbildungen mindestens einer Ziel-Zahnanordnung. Die Oberkieferschiene 11 und oder die Unterkieferschiene 12 kann dabei mehrere speziell geformte Zahnblenden umfassen. Die Zahnblenden können die Aufnahmebereiche für die Zähne bzw. Zahnstümpfe verdecken, so dass deren Relativbewegung schrittweise im Hintergrund verläuft. Zahnblenden werden auch dazu verwendet, um Lücken zu füllen und um Implantate mit tragfähigen Zahnblenden zu versehen. Frühzeitig lassen sich so Form-Korrekturen, insbesondere der äußeren Geometrie, bei Bedarf einfach und kostengünstig durchführen.

4) Funktions-Typ Farb-Funktion 240 (Color): Mindestens ein Vorrichtungspaar 10.n weist Zahnblenden auf, die mit individuellen Farbeigenschaften ausgestattet sind. Die Farbeigenschaften der Zahnblenden können sich von Zahn zu Zahn unterscheiden, insbesondere können die Frontzähne eine andere Farbe haben als die Eckzähne und diese nochmals eine andere Farbe als die Backenzähne. Die Farb-Funktion kann bereits bei sehr frühen Behandlungsschritten integriert sein, um in Kombination mit der Form-Funktion ein attraktives Erscheinungsbild zu erzeugen. Dabei kann das farbliche Erscheinungsbild allmählich einem angestrebten Zustand angenähert werden, um die optimale Erscheinung zu prüfen. Frühzeitig lassen sich so Farb-Korrekturen bei Bedarf einfach und kostengünstig durchführen.

### Funktionen für die Backenzahnbereiche 250/260/270

Anders als bei konventionellen Aligner-Behandlungen kann die vorgeschlagene polyfunktionale Behandlung eine Gruppe wichtiger Funktionen umfassen, die insbesondere im Backenzahnbereich angewendet werden können, die sich aber auf den gesamten Kauapparat auswirken können. Zu unterscheiden sind bspw. drei komplementär wirksame Funktionen. Erstens die Erhöhung der Kauflächen (Höhen-Funktion 250) an sich im Sinne eines Aufbaus bestimmter Dicke auf die Kauflächen der Backenzähne. Die Prämolaren und die Eckzähne können auch von der Erhöhung betroffen sein. Im Bereich der Frontzähne kann es sich mehr um eine deutlich sichtbare Verlängerung und Vergrößerung handeln.

Biomechanisch und physiologisch von großer Bedeutung kann aber bereits die Höhen-Funktion 250 sein, also die Erhöhung der Backenzähne durch Auflagen, die in die schienenartigen Vorrichtungen 10 bestehend aus Oberkieferteil 11 und Unterkieferteil 12 integriert sind. Die Auflagen können rechts oben, rechts unten, links oben und links unten unterschiedlich dick ausgeführt sein, so dass Asymmetrie besteht. Sowohl in der Sagittalebene als auch in der Frontalebene kann sich eine neue optimierte Lage der Kauebene dadurch einstellen lassen, dass unterschiedlich hohe Aufbauten in den Backenzahnbereichen angebracht werden. Die unterschiedlichen Dicken bzw. Höhen der Auflagen auf den Backenzähnen kann gegebenenfalls nicht durch Tiefziehen gezielt hergestellt werden. Als Herstellungsverfahren können jedoch 3D Duck und 3D Fräsen etc. verwendet werden.

Davon zu unterscheiden ist die Ausführung einer Gleitfläche (Gleit-Funktion 260) an Stelle von natürlichen Höckern und Fissuren im Backenzahnbereich. Dabei können die Gleitflächen oben und unten zueinander korrespondieren, d.h. bspw. zueinander komplementäre Formen haben. Oben kann dabei anders gestaltet sein als unten, z.B. unten fast plan und glatt und oben eher zylindrisch ballig, mit der Zylinderachse von rechts nach links. Die unterschiedliche Ausführung kann im Detail unterschiedliche Gleit- und Rollbewegungen des Unterkiefers relativ zum Oberkiefer erlauben. Dies sei als Gleit-Funktion 260 bezeichnet. Die Gleit-Funktion 260 kann zumindest eine Verdeckung der Höcker und Fissuren der darunter liegenden Zähne erfordern. Gleitflächen können auch auf beliebig dicken Aufbauten angebracht werden. Die Gleitflächen können plan sein oder sphärisch oder zylindrisch oder hyperbolisch, konvex, konkav oder anders geformt sein.

Davon zu unterscheiden ist die Ausführung von transversalen Verlagerungsfunktionen (Transversal-Funktion, Rampen-Funktion 270), die in der Transversalebene anterior-posterior (vorn-hinten) sowie rechts-links lateral wirken können. Im einfachsten Fall kann es sich um Rampen oder Schrägen handeln, die bspw. ab einem bestimmten Bereich eine weitere Verlagerung erschweren oder verhindern. Eine gleichläufige Rampe rechts und links kann zum Beispiel genutzt werden, um den Unterkiefer nach vorne zu schieben, sobald der Mund geschlossen wird. Bei Veränderung der Orientierung der Rampe im Raum kann der gegenteilige Effekt entstehen und der Unterkiefer kann nach hinten geschoben. Mit einer gegenläufigen Rampe rechts und links kann der Unterkiefer relativ zum Oberkiefer rotiert bzw. rotatorisch geschwenkt werden. Mit teilweise anterior-posterior verlaufenden Rampen oder Schrägen kann man den Unterkiefer von rechts nach links oder umgekehrt verlagern. Dies alles kann Aufbauten einer gewissen Mindesthöhe im Backenzahnbereich erfordern. Jedoch müssen die Aufbauten nicht unbedingt Rampen oder Schrägen umfassen.

5) Funktions-Typ Höhen-Funktion 250 (Hight): Mindestens ein Vorrichtungspaar 10.n kann in mindestens einem Backenzahnbereich Höhenaufbauten aufweisen, die mindestens die Fissuren (Zahngrube, Zahnhöcker) überdecken können. Die Höhenaufbauten können in den vier Quadranten I bis IV des Gebisses unterschiedlich hoch sein und/oder sie können unterschiedlich geneigt sein. Bevorzugt können die Höhenaufbauten im Bereich 0,5 mm (Millimeter) bis 6 mm überhöht sein. Besonders bevorzugt sind sie 1 mm bis 4 mm überhöht. Die Überhöhung kann hier die Gesamtschichtdicke über einer okklusalen Fläche angeben, bspw. im Zentrum einer okklusalen Fläche. Die Aufbauten können an der Kontaktflächen höckerartige Strukturen tragen und/oder Rampen und/oder Schrägen oder glattflächige Gleitflächen, die aber nicht zwangsweise eben sein müssen.

6) Funktions-Typ Gleit-Funktion 260 (Slide): Die Vorrichtungspaare 10.n können mindestens in einem Backenzahnbereich gleitfähige Flächenelemente aufweisen, die bevorzugt eine geringe Oberflächenrauigkeit haben. Die Orientierung der Gleitflächen kann parallel zur bisherigen Kauebene liegen oder geneigt zur bisherigen Kauebene angeordnet sein, insbesondere um eine neue Kauebene als Gleitebene einzustellen. Die Gleitflächen in den vier Quadranten I bis IV können oben-unten komplementär oder unterschiedlich geformt sein. Die Wirkung der Gleitflächen kann die sein, dass die Kontaktkraft weitgehend senkrecht auf den Gleitflächen stehen kann, solange bspw. keine Rampen oder Anschlagkräfte oder Blockadekräfte auftreten.

7) Funktions-Typ Transversal-Funktion oder Rampen-Funktion 270 (Ramp): Mindestens ein Vorrichtungspaar 10.n kann in mindestens einem Backenzahnbereich transversal kraftwirksame Strukturen aufweisen, zum Beispiel Rampen oder lokale Schrägen. Die Rampen können so orientiert sein, dass sie beim Schließen des Mundes im Kontakt zwischen Oberkiefervorrichtung 11 und Unterkiefervorrichtung 12 Reaktionskräfte verursachen, die nicht orthogonal auf der Kauebene stehen. Je nach Orientierung von gleichwirkenden Rampen oder Schrägen können sich transversale Kräfte nach hinten ergeben, nach vorne, nach links oder nach rechts. Bei Kombination unterschiedlich wirkender Rampen rechts und links können sich Torsionsmomente um die vorwiegend vertikale Achse ergeben.

Einen Spezialfall integrierter lokaler Schrägen kann man erzeugen, indem man stilisierte Kauflächen mit Höckern ausbildet, die eine klare Vorzugsrichtung in Korrespondenz mit der Oberkiefer-Unterkiefer-Gegenseite erzeugen, so dass sich eine transversale Kraftwirkung einstellen kann. Innerhalb gewisser mechanischer Grenzen kann eine Kombination von Gleit-Funktion 260 und Transversal-Funktion 270 bzw. Rampen-Funktion 270 möglich sein, indem bspw. in einem Ausführungsbeispiel bis zu einem gewissen Anschlagbereich ein Gleiten auf einer Gleitfläche einer Gleit-Funktion 260 fast ungehindert möglich ist und dann eine Schräge einer Rampen-Funktion 270 beginnt, die die weitere Bewegung erschwert oder fast verhindert. Dabei kann auch ein Höhenaufbau einer Höhen-Funktion 250 vorhanden sein, um die Gleitfläche der Gleit-Funktion 260 und die Rampe der Rampen-Funktion 270 zu ermöglichen.

### Zusätzliche Verankerungs-Funktionen 280/290

In den meisten Fällen können die Oberkieferschiene 11 und die Unterkieferschiene 12 der Vorrichtungen bzw. Vorrichtungspaare 10 einer Serie 100 jeweils durch Retentionen im oberen bzw. unteren Zahnbogen gehalten werden.

8) Funktions-Typ Implantat-Funktion 280 (Implant): Mindestens ein Vorrichtungspaar 10.n kann mindestens ein Element zur Befestigung an Implantaten aufweisen, d.h. bspw. in dem Fall, in dem die Person schon solche Implantate hat oder in dem solche Implantate im Rahmen des Behandlungsplans implantiert werden. Biomechanisch und physiologisch bedingt dürfen jedoch die meisten Implantate im Implantat-Knochen-Interface nicht überlastet werden, weil dies die Verankerung im Kiefer schwächen kann, denn das würde insbesondere die knöcherne Verankerung stören. Die Verankerung der Oberkieferschienen bzw. der Unterkieferschienen kann im Rahmen des vorgeschlagenen Verfahrens an Implantaten erfolgen, indem bspw. spezielle Implantat-Elemente bzw. Implantat-Funktionen 280 integriert werden, die die Vorrichtungen am Kiefer befestigen, ohne z.B. störende Kräfte und Momente zu übertragen. Zulässig sind insbesondere Kräfte, die axial in Richtung des Implantat-Schaftes wirken.

9) Funktions-Typ Auflage-Funktion 290 (Support): Mindestens ein Vorrichtungspaar 10.n kann darüber hinaus mindestens ein Element aufweisen, das sich auf mit Weichgewebe, insbesondere Zahnfleisch abgedeckten knöchernen Körperstrukturen abstützt. Die Abstützung auf dem Zahnfleisch kann von Vorteil, wenn keine Zähne oder Implantate zur ausreichenden Verankerung erforderlich sind und wenn z.B. viele Zähne aus dem Kieferknochen heraus in höhere Lagen bewegt werden sollen. Die Auflage-Funktion 290 kann z.B. erforderlich sein, wenn keine Implantate vorhanden sind und/oder wenn Backenzähne fehlen bzw. wenn Bereiche der Backenzähne fehlen.

### Polyfunktionelle bzw. polyfunktionale Ausführungsbeispiele

Die Vorrichtungen 10 einer Serie 100 können Oberkieferschienen und Unterkieferschienen umfassen, die mit einer Mehrzahl von Funktionen ausgestattet sein können, bspw. ausgewählt aus einer polyfunktionalen Gruppe von Funktionen. Die polyfunktionale Gruppe von Funktionen kann die entsprechend dazu gestalteten Funktionselemente in mindestens zwei, bevorzugt in einigen oder vielen der Vorrichtungen einer Serie 100 umfassen.

Die Vorrichtungen können über die Stufen bzw. Phasen der polyfunktionalen Behandlung mit den Vorrichtungen bzw. Vorrichtungspaaren 10 in einer Serie 100 mindestens zwei oder mindestens drei oder mindestens vier verschiedene Funktionen aus den unten genannten Funktions-Typen benutzen, bevorzugt mindestens 5 Funktions-Typen, besonders bevorzugt mindestens 6 Funktions-Typen, wobei die Alignment Funktion 210 und die ästhetische Form Funktion 230 besonders bevorzugt im Laufe der Serie mindestens abschnittsweise auftauchen können:
- 1) Funktions-Typ Alignment-Funktion 210 (Align),
- 2) Funktions-Typ Verschiebe-Funktion 220 (Shift),
- 3) Funktions-Typ Form-Funktion 230 (Shape),
- 4) Funktions-Typ Farb-Funktion 240 (Color),
- 5) Funktions-Typ Höhen-Funktion 250 (Hight),
- 6) Funktions-Typ Gleit-Funktion 260 (Slide),
- 7) Funktions-Typ Rampen-Funktion 270 (Ramp),
- 8) Funktions-Typ Implantat-Funktion 280 (Implant), und
- 9) Funktions-Typ Auflage-Funktion 290 (Support).

Während die Aligner-Schienen nach dem Stand der Technik eine Kombination der Funktionen 201 und 220 darstellen, umfasst die vorgeschlagene Art der vollintegrierten multifunktionellen Vorrichtungen eine Auswahl der Funktionen 210 bis 290, insbesondere also auch der Formfunktion.

Der am deutlichsten sichtbare Gegenstand kann sein, dass die Vorrichtungen nicht nur die Alignment-Funktion 210 umfassen, sondern mindestens zusätzlich die Form-Funktion 220 und bevorzugt auch die Farb-Funktion 240 als bspw. ästhetisch wichtige Funktion. Da die Form-Funktionen 230 die Alignment-Funktion 210 optisch weitgehend verdecken kann, kann das Alignment im Hintergrund und damit fast unsichtbar für einen Betrachter der Person P ausgeführt werden, die die Vorrichtungen der Reihe nach trägt. Weitere technische Wirkungen können hinzutreten.

### Polyfunktionales Verfahren

Das vorgeschlagene Verfahren kann eine Serie 100 aus polyfunktionalen Vorrichtungen 10.1 bis 10.x erzeugen und/oder verwenden, bspw. gemäß einem polyfunktionellen bzw. polyfunktionalen Behandlungsplan BP. Das polyfunktionelle "Staging" kann dabei nicht nur das Alignment der einzelnen Zähne umfassen, sondern für jeden Zahn oder Zahnbereich zudem die anderen Dimensionen der polyfunktionellen Zusatzfunktionen. Zur Darstellbarkeit in einer grafischen Ebene werden im Weiteren nicht die Zuordnungen zu den einzelnen Zähnen des Gebisses gezeigt, sondern Ausführungsbeispiele für eine polyfunktionale und/oder polyfunktionelle vollintegrierte Schrittfolge über diese mehreren polyfunktionellen bzw. polyfunktionalen Dimensionen 210 bis 290 der Behandlung.

### Polyfunktionaler polydimensionaler Behandlungsplan BP

Bei einer Aligner-Behandlung muss nicht jeder Zahn bewegt werden. Weiterhin muss ein zu bewegender Zahn auch nicht unbedingt über alle Stufen (Stages) des Behandlungsplans bewegt werden. Bei der vorgeschlagenen polyfunktionellen Behandlung kann sich eine geometrisch und biomechanisch und physiologisch mögliche Gruppe machbar erscheinender Behandlungspläne BP ergeben, die jedoch dreidimensional sein können, wobei hier nur zwei Dimensionen, d.h. die polyfunktionalen Dimension zusammen mit einer Nummer der jeweiligen Vorrichtung gemäß einer Reihenfolge, in der die Vorrichtungen eingesetzt werden, gezeigt und erläutert werden. Bei einer Zahnreihendarstellung könnten diese Behandlungspläne hintereinander auf separaten Ebenen liegen, und würden dann für jeden Zahn angeben, ob und in welchem Umfang die betreffende Funktion zu aktivieren ist. Wegen der Komplexität der Wirkung der polyfunktionalen Vorrichtungen kann also der Behandlungsplan hier dreidimensional sein. Bei einer Kombination aus bevorzugt 5 bis 8 Funktionsarten kann es in jeder Stufe 5 bis 8 Merkmale geben, wie mit jedem der Zähne zu verfahren ist bzw. welche Ausprägung die Schiene haben soll, um eben dieses Ziel zu erreichen. Da es meist einige mögliche Wege gibt, z.B. die Form-Funktionen 230 und die Farb-Funktionen 240 früher oder später einzuführen, kann man diese Variabilität nutzen, um sich für den schnellsten oder für den preiswertesten Behandlungsplan BP zu entscheiden. Auch andere Auswahlkriterien können herangezogen werden, bspw. sofortige Nutzung der Form-Funktion 230 um der Person P sofort eine Gewöhnung an den Zielzustand bzw. eine Prüfung dieses Zielzustandes zu ermöglichen. Falls es unerwartet zu Abweichungen vom bzw. zu Kollisionen mit dem Behandlungsplan kommt, bspw. durch einen Unfälle der Person P mit Auswirkungen auf deren Zahnbereich oder durch mangelnde Compliance der Person P bzw. des Patienten, kann man den Behandlungsplan BP anpassen. Die Polyfunktionalität kann erheblich mehr Anpassungsmöglichkeiten bieten als die bisherigen im Vergleich dazu schmalbandig wirkenden Aligner-Behandlungen.

In einem besonders bevorzugten Ausführungsbeispiel können mindestens die Alignment Funktion(en) 210, die Verschieb-Funktion 220 (Shift), die Form-Funktion 240 (Shape), die Höhen-Funktion 250 (Height), Gleit-Funktion 260 (Slide) und die Rampen-Funktion 260 (Ramp) kombiniert werden. Zusätzlich mögliche Funktionen sind die Farb-Funktion 240 und bei Bedarf können auch die Implantat-Funktion 280 und/oder die Support-Funktion 290 hinzukommen.

Im Behandlungsplan BP kann zunächst das Alignment geplant werden, wobei die Alignment-Funktion 210 mit der Verschiebe-Funktion 220 (Shift) zusammen im Zahnbogen kombiniert werden kann, um bspw. eine Verschiebung der Zähne nach außen hin zu einem weiter gebauten Zahnbogen hin zu erreichen, bspw. im Unterkiefer UK,4 und/oder im Oberkiefer OK,5. Die Vergrößerung der Zahnbogens bzw. der Zahnbögen kann vorteilhaft sein, um bspw. Platz für geeignete Zahnverschiebungen und/oder für spätere Zahnaufbauten zu schaffen.

Wenn dabei im schrittweisen Behandlungsplan BP Kollisionen der Zähne oben im Oberkiefer mit Zähen unten im Unterkiefer erkennbar werden, kann die Erhöhung der Höhe der Kauflächen durch Aufbauten einer Höhen-Funktion 250 erfolgen. Bevorzugt kann die Höhen-Funktion 250 bereits zu Beginn des Behandlungsplans BP eingesetzt werden, wobei sich die Schichtdicke der Höhenfunktionselemente schrittweise von Vorrichtung zu Vorrichtung steigern kann. Die erste Vorrichtung kann einen vergleichsweise großen Sprung der Höhenfunktionselemente der Höhen-funktion 250 im Vergleich zu der ursprünglichen Start-Zahnanordnung haben, bspw. von mehr als 2 mm oder sogar von mehr als 3 mm.

Gleichzeitig kann bevorzugt die Gleit-Funktion 260 aktiviert werden, weil sich ansonsten bspw. ein biomechanisch und muskulär sowie neurophysiologisch belastender Zustand insbesondere im Kiefergelenk ergeben könnte. Um dann aber eine gewünschte Lagekorrektur des Unterkiefers UK, 4 erreichen zu können, kann bevorzugt in darauffolgenden Stufen bzw. Phasen des polyfunktionalen Behandlungsplans BP die Rampen-Funktion 270 bzw. können Rampen-Funktionen 270 in die Vorrichtungen integriert werden. Dies kann aber auch schon früher erfolgen. Falls der Patient bzw. die Person P Implantate trägt, können bspw. von Anfang auch Implantat-Verankerungselemente 280 integriert werden. Falls bei der Person, die für eine Abstützung wichtigen Zähne fehlen, können je nach Bedarf als Abstützung Auflage-Funktionen 290 in die Vorrichtungen oder in einen Teil der Vorrichtungen der Serie 100 integriert werden.

### Mehrlagige Vorrichtungen

Aufgrund der Verwendung der Form-Funktion 230 können sich Anforderungen an das Material der sichtbaren Bereiche der Schienen (Vorrichtungen) stellen. Besonders bevorzugt wird ein sehr ansprechend und natürlich wirkendes Material verwendet, beispielsweise Multilayer PMMA (Polymethylacrylat) oder eine anderer geeigneter Werkstoff. Dieser Werkstoff kann im Sinne der Unterscheidung nach mehrlagigen Werkstoffen oder einlagigen Werkstoffen aber als eine Werkstofflage betrachtet werden, d.h. als ein homogenes Material. Ein ansprechend aussehendes Polymermaterial kann aber nicht perfekt geeignet sein, um die gesamte Schiene bzw. die gesamte Vorrichtung daraus zu fertigen. Es kann Materialien geben, die besser geeignet sind, um daraus die Aussparungen zu formen, die die Zähne aufnehmen und gegebenenfalls verlagern sollen.

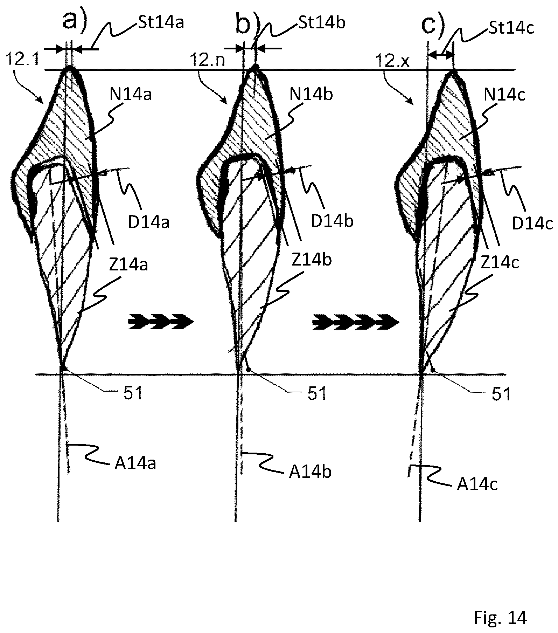

In einem bevorzugten Ausführungsbeispiel kann deshalb die Unterkieferschiene und/oder die Oberkieferschiene aus mindestens zwei Lagen unterschiedlichen Materials aufgebaut sein. Eine äußere sichtbare Lage kann aus einem möglichst ansprechend aussehendem Material oder sich im Mund gut anfühlenden Material hergestellt werden. Dieses Material kann zugleich ein Material sein, das den Kauwirkungen von Kaubewegungen ausreichend widerstehenden kann, bspw. von Kaubewegungen, die auch dann auftreten können, wenn die Person P gerade nicht isst. Eine innere Lage oder ein innerer Bereich kann beispielsweise mit Oberflächenelementen versehen sein oder insgesamt aus einem Material bestehen, die oder das die Haftkraft verstärken (siehe bspw. Fig. 14).

In einem anderen Ausführungsbeispiel können die Kauflächen aus einem vergleichsweise abriebbeständigen Material gefertigt werden, während die anderen Bereiche der Schienen aus einem anderen weniger abriebbeständigen Material gefertigt sind. Dadurch können die Schienen (Vorrichtungen) länger funktionsfähig bleiben und/oder gesundheitlich verträglicher sein.

Die innere Lage bzw. der innere Bereich (siehe Fig. 14, Ziffer 18) kann vollständig oder teilweise durch eine optisch ansprechende Außenlage umhüllt sein. Die innere Lage bzw. der innere Bereich der Schiene kann lokal unterschiedliche Dicke haben, je nach Relativposition der Aufnahmebereiche für die Zähne in Relativbezug zur ansprechend gestalteten sichtbaren Zahnblende der Form-Funktion 230.

In einem bevorzugten Ausführungsbeispiel kann sich im Sinne der fortschreitenden Schienen einer Serie 100 zumindest für eine Gruppe von mindestens 2 oder von mindestens 3 oder von mindestens 4 nacheinander folgenden Vorrichtungen 10 nur die innere Lage 18 bzw. der innere Bereich mit den Aufnahmebereichen für die Zähne verändern, während die äußere Lage mit den Zahnblenden-Formen 19 im Sinne gleichbleibt, bspw. um der Person P schon das Tragegefühl der Zielzahnanordnung zu ermöglichen, um die Anzahl von Umgewöhnungen beim Wechsel der Vorrichtungen zu verringern oder um andere technische Effekte zu ermöglichen.

In den vorgeschlagenen Vorrichtungen kann in einem besonderen Ausführungsbeispiel die innere Lage 18 bzw. der innere Bereich einer Oberkieferschiene 11 und oder Unterkieferschiene 12 separat gefertigt werden und in die äußere Lage dieser Schiene eingesetzt werden (siehe Fig. 14). Soweit die Form-Funktion 230 über mehrere Vorrichtungen 10 gleich bleibt und nur die Aufnahmebereiche für die zu verlagernden Zähne verlagert werden müssen, können in einer besonderen Ausführung die Aufnahmebereiche für die Zähne aus dem zweiten Material gefertigt und in die Schiene mit den Zahnblenden-Formen 19 aus Formkörpern eingesetzt werden, um die gesamte Schiene für Unterkiefer oder Oberkiefer zu bilden. Dadurch kann es möglich sein, den Gesamtaufwand für die Herstellung der Schienen bzw. Vorrichtungen erheblich zu verringern, da nur die Innenteile getauscht werden müssen aber die Zahnblenden und ggf. auch andere äußere Bereiche der Vorrichtung mehrfach mit voneinander verschiedenen Innenteilen genutzt werden können.

### Abschluss der Behandlung

Die letzte Vorrichtung 10.x der Serie aus x Vorrichtungen bildet den Abschluss der Aligner-Behandlung und hat somit zu einer neuen Position der echten Zähne geführt. Infolge der bspw. optional gleichzeitig in der Anfangsphase durchgeführten Korrektur der Kauebene kann nun auch die Biomechanik optimiert sein, aber natürlich erst dann, wenn die Zähne in dieser Sollgeometrie einerseits funktional technisch und andererseits auch ästhetisch durch restaurative Maßnahmen angepasst werden. Der erforderliche Bauraum kann nun vorhanden sein, weil bspw. der Biss durch Kauflächenerhöhung individuell angehoben wurde und/oder weil Platz durch die Vergrößerung des Zahnbogens geschaffen worden ist. Die zahnmedizinische finale Versorgung 300 in Anschluss an die Schienenbehandlung durch die Serie 100 aus Vorrichtungen 10.1 bis 10.x kann sich von der letzten Schiene dadurch unterscheiden, dass die Zähne nun einzeln in diese Zielgeometrie gebracht werden, z.B. durch sogenannte "Table Tops", Brückenaufbauten, Onlays, Veneers etc. Dabei kann der geometrische End-Zustand der restaurierten Zähne gleich oder sehr ähnlich zu der durch die Abfolge der Schienen 10 und schließlich durch die letzte Schiene 10.x bereits nachgebildeten Form und Anordnung der Zähne im Gebiss liegen.

### Funktionell technische Wirkungen

Es können sich die folgenden funktionell technischen Wirkungen ergeben:
- die mechanische Stabilität der Vorrichtungen kann durch die Anbringung der Elemente zum Erbringen der Zusatz-Funktionen erheblich größer sein im Vergleich zu Vorrichtungen, die nur die grundlegende Alignment-Funktion 210 haben.
- Insbesondere die Höhen-Aufbauten der Höhen-Funktion 250 können zu einer Erhöhung der mechanischen Stabilität im Bereichen führen, unter denen Backenzähne angeordnet sind oder wieder angeordnet werden sollen, d.h. kurz im Backenzahnbereich der Vorrichtungen.
- Insbesondere die in der Form-Funktion 230 enthaltene mindestens eine Zahnblende oder die mehreren Zahnblenden können die mechanische Stabilität der Vorrichtung im Frontzahnbereich der Vorrichtung bzw. der Vorrichtungen erheblich erhöhen.
- Es kann zu einer frühzeitigen mechanischen Einwirkung der Vorrichtungen auf den sensitiven Bereich an der Innenseite der Oberlippe und/oder an der Innenseite der Unterlippe kommen, wodurch Muskeln des Kauapparates stimuliert werden können und neuromuskuläre Prozesse in Gang gesetzt werden können.

Ein biomechanisch und gesundheitlich wichtiger Vorteil kann die biomechanische und/oder kraniale Optimierung der Lage der Kauebene sein. Dies kann durch eine reduzierte Belastung der Zähne sowie durch eine physiologisch bessere Belastungsweise in den Kiefergelenken von Nutzen sein. Neuromuskulär kann sich der Vorteil darin zeigen, dass durch die größeren Volumina der Zahnblenden und der Aufbauten das Weichgewebe besser gedehnt wird. Dies kann positive Wirkungen auf die Biomechanik haben, sowie ggf. weitere ästhetische und psychologische Vorteile.

Die erhöhte Stabilität kann dazu genutzt werden stärker Kräfte in die Zähne einzuleiten. Durch die erhöhte Stabilität kann die Bruchgefahr der Vorrichtungen verringert werden, bspw. beim Einsetzen der Vorrichtung in den Mund, beim Herausnehmen der Vorrichtung aus dem Mund der Person P oder beim Herunterfallen.

### Weitere funktionelle Wirkungen

Neben den zahlreichen funktionell technischen Wirkungen kann es auch andere funktionelle Wirkung geben. Ein wichtiger und von den Patienten sehr geschätzter Vorteil kann darin liegen, dass der Patient bzw. die Person P sehr schnell bzw. frühzeitig ein Gefühl für die Zielzahnanordnung und/oder eine ästhetisch sehr ansprechende Erscheinungsform des Gebisses bzw. der Nachbildung der Zielanordnung des Gebisses erhalten kann, auch wenn die Alignment-Funktion 210 und die Verschiebe-Funktion 220 als Teil der Serie 100 noch zu weiteren Zahnverlagerungen im Hintergrund führen können.

Im Sinne der Kundenzufriedenheit kann der Vorteil darin bestehen, dass der Patient bzw. die Person P schon während der doch einige Monate dauernden Behandlung schon sehen, wie das Ergebnis visuell optisch von außen betrachtet aussehen wird, und/oder spüren, wie sich das Ergebnis anfühlen wird.

Psychologische und/oder psychosomatische Vorteile bzw. Wirkungen können insbesondere durch den höheren Biss verursacht werden und durch die größeren Zahnblenden. Größere Zähne an Stelle abradierter und dabei zu kurz gewordener Zähne können für mehr Jugend und mehr Kraft sprechen. Die Patienten können sich verjüngt fühlen und können sich in den meisten Fällen auch körperlich erheblich wohler fühlen. Dies kann die Behandlungsbereitschaft der Patienten erheblich fördern und kann dazu führen, dass die Vorrichtungen sehr gern und auch möglichst unterbrechungsfrei getragen werden, was für den Behandlungserfolg sehr wichtig sein kann.

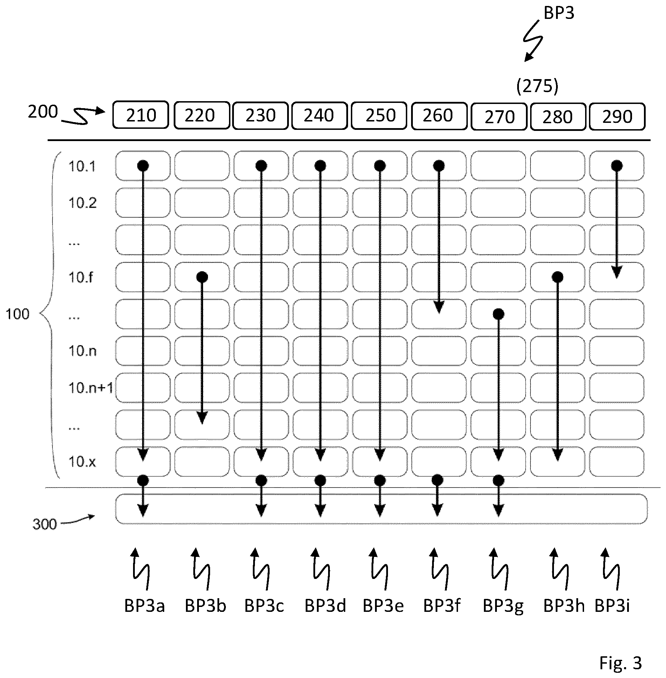

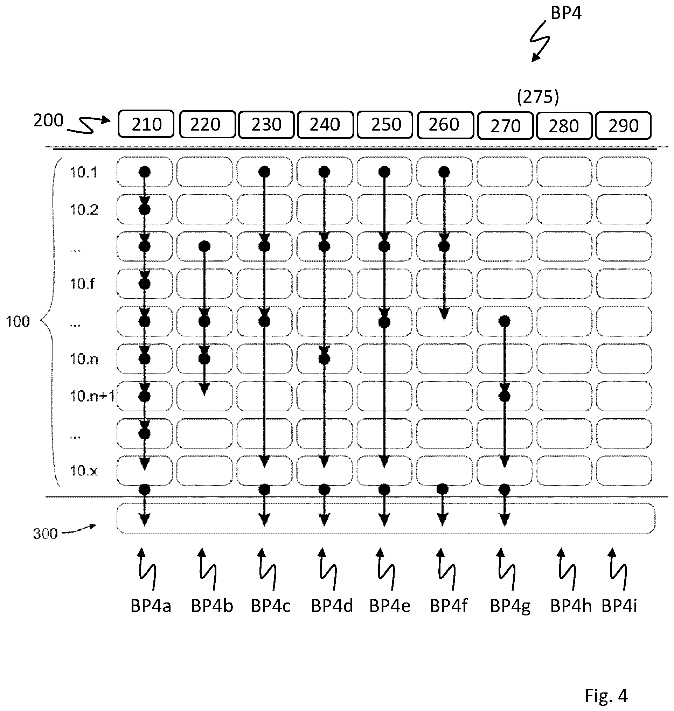

Die weiteren Vorteile können bei intelligent und multidisziplinär vernetzt durchgeführter Behandlungsplanung (siehe Fig. 3 und 4) unübersehbar positiv sein. Durch die kombinierte multidisziplinäre Wirkungsweise der Serie 100 der Vorrichtungen kann das Behandlungsziel funktionell und restaurativ erreicht werden, ohne dabei wie früher mit den herkömmlichen Verfahren und Vorrichtungen die biomechanischen Prozesse und die craniale Ausrichtung der Kauebene zu gefährden.

Im Detail kann es die folgenden biomechanischen, muskulären und neurophysiologischen Vorteile im Bereich des Craniums geben, d.h. des knöchernen Schädels. Die Biomechanik des Schädels und die Neurophysiologie der Schädelmuskulatur können bewirken, dass die Lage der Kauebene im kranialen Optimum begünstigt ist. Das kraniale Optimum kann dazu möglichst gut angenähert erreicht werden. Dabei kann es zu Verlagerungen und zu Entspannungen im Bereich des Schädels kommen und vor allem der Kiefergelenke. Diese können sich über Monate im Sinne einer Veränderung der Anatomie auswirken, die mehr als einen Millimeter betragen können. Solche Größenordnungen können im Bereich der Zahnmedizin, wo der Patient bereits Ungenauigkeiten von 0,1 Millimetern als störend empfinden kann, als erheblich angesehen werden. Es kann viel besser sein, die kraniale Optimierung der Kauebene bereits während der Aligner-Behandlung durchzuführen, weil sich ansonsten, d.h. bei einer anschließenden Korrektur der Kauebene vieles im Gebiss nochmals ändern würde. Folglich können in der vorgeschlagenen Serie 100 der Vorrichtungen 10.1 ... 10.x bei zumindest einigen der Vorrichtungen, bevorzugt bei den früheren Oberkiefer- OK, 5 und Unterkiefer-Schienen UK, 4, die Elemente zur kranialen Optimierung zweckmäßig integriert sein. Die Elemente zur kranialen bzw. cranialen Optimierung können bspw. höher gelegte Gleitschienenbereiche der Gleit-Funktion 260 sein oder höher gelegte Rampen der Rampen-Funktion 270. Die Optimierung kann vereinfacht gesagt die Lage und/oder die Orientierung der morphologischen Kiefergelenksachse betreffen, auch wenn das Kiefergelenk genau genommen kein Scharniergelenk ist.

Zur Einstellung der optimierten Kauebene ausgerichtet auf die craniale Anatomie und Geometrie kann der polyfunktionale Behandlungsplan BP eine Kombination aus Höhen-Funktion 250 und/oder Gleit-Funktion 260 und/oder Rampen-Funktion 270 verwenden. Insbesondere können einseitige Abrasionen nach ungünstigen Extraktionen von Zähne in früheren Jahren zu einer deutlichen Verkippung der Kauebene geführt haben. Um die Kauebene neu ausrichten zu können, kann ein individuell abgestimmtes Muster aus den Funktionen 210 bis 290 entworfen werden, um die geeignete kraniale Optimierung so weit wie möglich und sinnvoll vorzunehmen. Die eigentliche Schlussphase der Alignment-Funktion(en) 210 und der Verschiebe-Funktion 220 kann erst möglich sein, nachdem die Kauebene einer kranialen Analyse entsprechend eingestellt worden ist. Gemeinsam mit der Einstellung der Kauebene kann eine Behandlung von Störungen im Kiefergelenk erfolgen. Diese Störungen können sich zwar bei einer optimalen Einstellung der Kauebene langsam zurückbilden. Um aber schnellere Fortschritte bei der Behandlung der Kiefergelenke zu erreichen, kann die polyfunktionale Behandlung eine Kombination aus Höhen-Funktion 250 und Gleit-Funktion 260 nutzen. Dadurch können die funktionellen Wirkungen von Orthesen in die Vorrichtungen und in den Behandlungsplan voll integriert werden. Eine vorausgehende oder nachfolgende Behandlung mit Orthesen kann also nach polyfunktionaler Behandlung nicht mehr erforderlich sein.

### Vorteile und Wirkungen der polyfunktionalen Technologie bspw. mit Bezug zu ästhetischen Aspekten

Ästhetischen Vorteile können erstmals mit den technischen Wirkungen, den weiteren biomechanischen Wirkungen und/oder den oben genannten physiologischen Vorteilen kombiniert erreicht werden. Aus der Sicht der Patienten kann der Vorteil dominieren, dass der ästhetische Zustand des Gebisses sehr früh, im günstigsten Fall schon von Anfang an nachbildet und dadurch nach außen hin sehr stark verbessert wird und dass während und nach der Behandlung keine Schmerzen im Kiefergelenksbereich auftreten.

Alignment-Funktionen 210 und Verschiebe-Funktionen 220 können so geplant werden, dass eine vorhersehbare Vergrößerung des Zahnbogens erreicht werden kann und die optimierte Stellung der Zähne in diesem vergrößerten Zahnbogen, insbesondere zum Ende der Behandlung hin. Zusätzlich oder alternativ können eigenständig zu gestaltende Zahnblenden der Form-Funktion 230 integriert werden. Die eigenständig gestalteten Zahnblenden können als Teil der Vorrichtung 10 bereits in den ersten Schienen größer sein und dem angestrebten größeren Zahnbogen folgen bzw. entsprechen.

Der polyfunktionale Behandlungsplan kann also die Nachbildungen mit schöner Rekonstruktion optimierter Zahnformen durch die Verwendung von Zahnblenden bzw. Zahnnachbildungen für den Betrachter zeitlich nach vorne verlagern. Dies kann ein äußerlich deutliches Kennzeichen von Patienten bzw. von Personen P sein, die polyfunktional behandelt werden. Klassisch nur mit Alignern behandelte Patienten hingegen zeigen zunächst keine Verbesserung der Ästhetik des Gebisses.

Die polyfunktionale Behandlung kann erstmals eine sehr schnell wirkende und sehr deutliche Verbesserung aus ästhetischer Sicht und/oder taktil bewirken, indem auch stark abradierte und zu kurz gewordene Zähe des älter gewordenen Gebisses sehr schnell wieder provisorisch rekonstruiert werden können. Der eher greisenhafte visuelle und taktile Eindruck des abradierten Gebisses kann durch die Zahnnachbildungen bzw. Zahnblenden dabei frühzeitig bzw. schnell in einen attraktiven und gesunden Eindruck eines jugendlicheren Gebisses gewandelt werden.

Die polyfunktionale Behandlung kann noch mehr Vorteile haben: Bei der optionalen Kombination mit der Farb-Funktion 240 können die Zahnblenden der Schienen schrittweise zu vertretbaren Kosten ästhetisch verbessert werden. Auf Wunsch der Patienten bzw. der Personen P können die Schienen in den von vorne sichtbaren Zahnblenden optisch so gestaltet werden, dass sie die später gewünschte Zahnfarbe vorwegnehmen. Im Behandlungsplan BP kann also die Einführung einer optimierten Farbgebung grundsätzlich frühzeitig erfolgen. Leistungsfähige additive Herstellungstechniken können hier weitere Vorteile bringen. Es können aber auch sehr leistungsfähige Werkstoffe, zum Beispiel polymere Mehrschichtwerkstoffe, eingesetzt werden. Diese Werkstoffe können mechanisch sehr stabile Vorrichtungen ermöglichen. Außerdem können sie bspw. bei spanabhebender Bearbeitung einen ebenfalls sehr guten ästhetisch optischen bzw. auch taktilen Eindruck erzeugen. Farbkorrekturen können frühzeitig durchgeführt werden, um Mehrkosten und Mehraufwand bei der finalen Versorgung zu vermeiden.

### Über die Schrittabfolge der Serie veränderliche Kombination von Funktionen

Die vorgeschlagenen Vorrichtungen 10 können jeweils aus Oberkieferschiene 11 und unterkieferschiene 12 bestehend und können dadurch gekennzeichnet sein, dass sie eine umfassende Kombination von unterschiedlichen Funktionstypen aufweisen können. Grundsätzlich stehen die oben genannten Funktionstypen zur Auswahl. Die Funktionen der oben genannten Funktionstypen können bei Bedarf und Zweckmäßigkeit auf einen Zahn oder auf einen Zahnbereich angewendet werden. Die Funktionen der oben genannten Funktionstypen müssen jedoch nicht alle und/oder nicht alle gleichzeitig angewendet werden. Das heißt abhängig von Bedarf und Zweckmäßigkeit können Funktionen auch weggelassen werden. Der polyfunktionale Behandlungsplan BP kann entscheiden, welche Funktionen für welche Zähne wann aktiviert werden und welche nicht. Der polyfunktionale Behandlungsplan BP kann nun bspw. bis zu acht oder mehr Funktionen berücksichtigen und entsprechend vielfältig kann das Behandlungsmuster sein. Einer einzelnen Vorrichtung wird man deshalb nicht immer alle Funktionen des polyfunktionalen Behandlungsplanes BP entnehmen können.

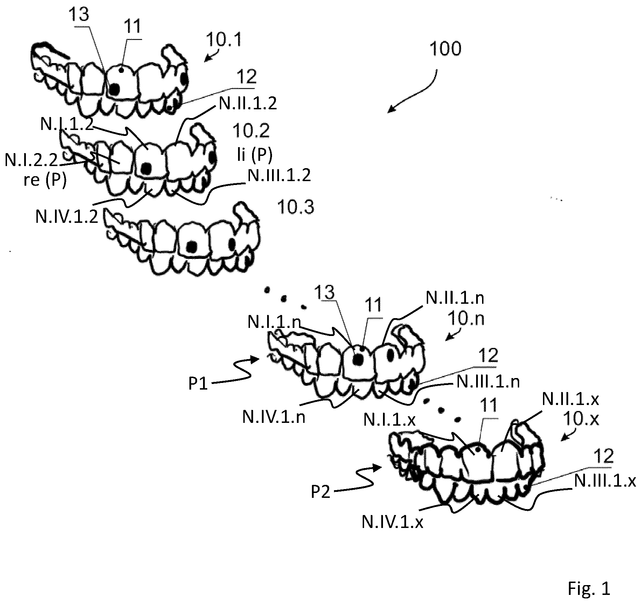

Die Figur 1 zeigt eine grob schematische und sehr vereinfachte Darstellung einer Serie 100 von Vorrichtungen 10, wobei die Vorrichtungen 10 jeweils aus einer Oberkieferschiene 11 und einer Unterkieferschiene 12 bestehen. Die Serie 100 der Vorrichtungen 10 umfasst x Vorrichtungen 10.1 bis 10.x, wobei x eine natürliche Zahl ist, bspw. im Bereich von 10 bis 50.

Die Vorrichtungen einer Serie können eine Kombination aus Funktionen umfassen, im hier gezeigten Ausführungsbeispiel mindestens a) Alignment-Funktion 210, b) Verschiebe-Funktion 220 und c) Form-Funktion 230. Die Funktionen können in einer Vorrichtung zusammen kombiniert auftreten, oder nacheinander in verschiedenen Phasen der Serie 100 in einer individuellen Zahl von Vorrichtungen oder auch nur in einzelnen Vorrichtungen.

Die Alignment-Funktion 210 kann sich in Kontaktelementen 13 zeigen, die geeignet oder angepasst sein können, auf die Zähne oder Zahnstümpfe Kräfte und Kraftmomente zu übertragen, um die Zähne besser nebeneinander auszurichten. Optional können dazu die Zähne mit Attachments versehen werden.

Die Verschiebe-Funktion 220 kann sich in einer Vorrichtung dadurch zeigen, dass die Vorrichtungen geeignet bzw. dafür angepasst sind, die Zähne einem großen Plan folgend zu verlagern, bevorzugt im Sinne eines größeren und weiter gebauten Zahnbogens.

Die Form Funktion 230 kann sich an einer Vorrichtung 10 darin zeigen, dass mindestens einige Zahnblenden eine eigenständige Form aufweisen, die sich von der Form der echten gegebenenfalls versorgten Zähne oder Zahnstümpfe unterscheidet, bspw.:
- indem die Form rekonstruiert ist, und/oder
- indem die Zahnblende, die den eigentlichen bzw. den darunterliegenden Zahn verdeckt, größer und/oder voluminöser als der darunterliegende Zahn ist, und/oder
- indem die Zahnblende länger ist, und/oder
- indem die Zahnblenden eine andere besser geeignete Form als der Zahn hat.

Wie in Figur 1 gezeigt, kann das von außen sichtbare Bild aus der Form der sichtbaren Zahnblenden entstehen oder bestehen. Charakteristisch für die vorgeschlagene Technologie kann sein, dass sich die Form der Vorrichtung 10 soweit sie von außen sichtbar ist, über die Vorrichtungen der Serie 100 bzw. über einen Teil der Vorrichtungen hinweg wenig oder gar nicht ändert, während im verdeckten Bereich und insbesondere an den verdeckten Zähnen die Veränderungen vorgenommen werden.

Fachleute können an den schwach erkennbaren Ansatzpunkten von Aligner-Elementen 13 die Unterschiede zwischen den Vorrichtungen 10 im Laufe einer Serie erkennen, wenn sich die Vorrichtungen außerhalb des Mundes der Person P befinden. Die Änderungen am Gebiss der Person erfolgen jedoch entweder im durch die Zahnblende(n) verdeckten Bereich an den eigentlichen Zähnen des Gebisses oder im Backenzahnbereich, den man nicht direkt von außen sehen kann.

Der Behandlungsplan kann allgemein x Stufen umfassen, wobei x die oben genannte natürliche Zahl ist. Die Serie 100 kann eine Anzahl von x Vorrichtungen umfassen, je eine für Oberkiefer OK, 5 und Unterkiefer UK, 4, d.h. ein Paar. Die Angriffspunkte für Wechselwirkungskräfte zwischen Vorrichtungen und Zähnen können sich von Vorrichtung zu Vorrichtung verändern. Dadurch können Zähne schrittweise verlagert werden. Systematisch angedeutet sind in der Figur 1 die verdeckt angebrachten kraftfunktionalen Elemente 13.

Von besonderer Bedeutung kann sein, dass in der integrierten Technologie die Vorrichtungen 10 bereits in Form und optional auch in Farbe optimiert sind. Von der äußeren Geometrie und/oder Farbe kann man bspw. bei flüchtiger Betrachtung keinen Unterschied zwischen den Vorrichtungen 10 der Serie 100 sehen. Die Unterschiede zwischen den aufeinanderfolgenden Vorrichtungen 10 können insbesondere an den Frontzähnen verdeckt durch die Zahnblende(n) liegen, insbesondere in der genauen Position der Aussparungen, in die die Zähne eingreifen, d.h. bspw. in den Funktionselementen 13, die Kräfte auf die Zähne ausüben können und in den Freiräumen, die den Zähnen für eine Reaktionsbewegung auf diese Kräfte F gegeben werden.

Die Bewegung der Zähne kann dem Behandlungsplan BP folgend im Hintergrund ablaufen und kann nicht unmittelbar von außen erkennbar sein. Die letzte Vorrichtung 10 bildet den Abschluss der polyfunktionellen Aligner-Behandlung. Danach kann das Gebiss mit den Zähnen und Zahnstümpfen in der neuen Position mit einer finalen zahnmedizinischen Versorgung 300 ausgestattet werden. Der taktile und visuelle Eindruck kann sich beim Übergang von der letzten Vorrichtung auf eine finale Versorgung nur geringfügig ändern. Bei der finalen Versorgung 300 können die Zähne so wenig verblockt werden wie möglich, weil sonst die knöcherne Integration leiden könnte.

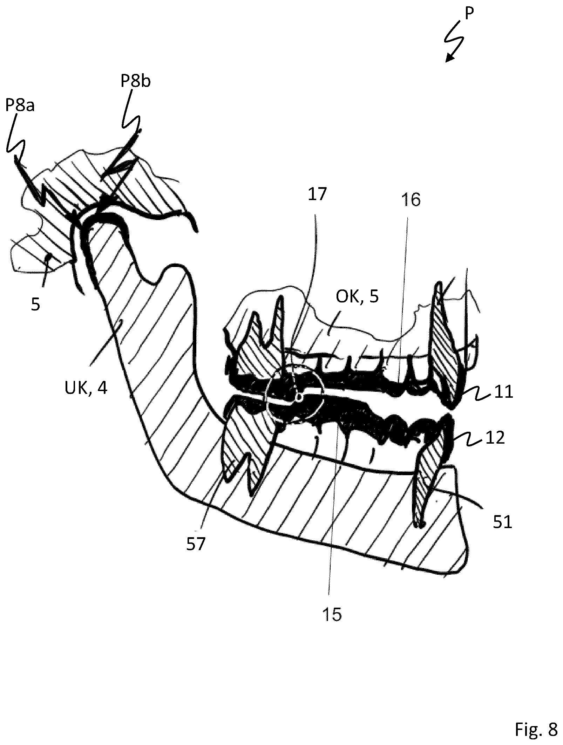

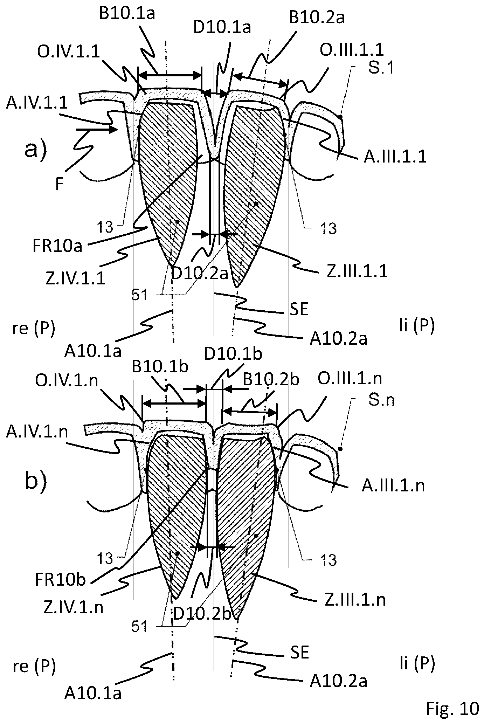

Die Vorrichtungen bzw. Vorrichtungspaare 10 der Serie 100 können von einer Person P (siehe bspw. Figuren 8 und 10) nacheinander getragen werden. Alle oder einige Vorrichtungspaare können Zahnblenden enthalten, Die Zahnblenden sind entsprechend ihrer Position mit N.I.1.2, N.II.1.2, N.III.1.2, N.IV.1.2, N.I.1.2, usw. bezeichnet. Die Bezeichnung folgt hier der Bezeichnung von Zahnpositionen wie sie von Zahnärzten und Kieferorthopäden verwendet wird, d.h. es werden vier Quadranten bzw. Sektoren I, II, III und IV verwendet und die Zähne in einem Quadranten werden von 1 bis n von vorn nach hinten bezüglich des Bezugssystems der Person P durchnummeriert. Vom Betrachter aus gesehen kann sich der Quadrant I oben links befinden, der Quadrant II oben rechts, der Quadrant III unten rechts und der Quadrant IV unten links. Somit kann die Reihenfolge der Quadranten im Uhrzeigersinn bzw. rechtsherum zeigen. Bei der Bezeichnung der Zahnblenden kann gelten:
- der erste Buchstabe ist ein N (Nachbildung, Zahnblende) im Gegensatz zu einem Z bei Zähnen oder einem A bei Aussparungen,
- die römische Zahl an zweiter Stelle bezeichnet den Quadranten, wie oben angegeben,
- die Ziffer an dritter Stelle bezeichnet die Position innerhalb des Quadranten, und
- die Ziffer an vierter Stelle bezeichnet die Nummer der betreffenden Vorrichtung in der Reihenfolge der Vorrichtungen 10 der Serie 100.

So liegen bspw. die Zahnblenden N.I.1.2, N.II.1.2, N.III.1.2, N.IV.1.2 in dieser Reihenfolge im ersten Quadranten I, im zweiten Quadranten II, im dritten Quadranten III und im vierten Quadranten IV jeweils an der ersten bzw. vorderen Position. Wie in der Figur 1 dargestellt ist, liegen die genannten Blendenpositionen in der zweiten Vorrichtung, was jeweils durch die letzte Ziffer angegeben wird. Entsprechende Zahnpositionen von entsprechenden Frontzähnen hinter den Zahnblenden im eingesetzten Zustand der Vorrichtung 10.2 sind Z.I.1.2, Z.II.1.2, Z.III.1.2 und Z.IV.1.1. Der zweite Zahn oben links vom Betrachter aus gesehen hat die Bezeichnung Z.I.2.2, d.h. er liegt im Quadrant II an der zweiten Position in der Vorrichtung 10.2. Somit wird die zugehörige Zahnblende oder Zahnnachbildung mit N.I.2.2 bezeichnet.

Die Nummer n kann sich auf eine Vorrichtung bzw. auf eine Vorrichtungspaar 10 im mittleren Teil der Reihenfolge bzw. Serie 100 beziehen, siehe bspw. Zahnblende N.I.2.n, die an der gleichen Position wie die Zahnblende N.I.1.2 liegt und die an ihren Außenflächen, insbesondere an ihren Frontflächen, wie die Zahnblende N.I.1.2 gestaltet sein kann. Drei Punkte deuten an, dass zwischen einem dritten Vorrichtungspaar 10.3 und dem Vorrichtungspaar 10.n mindestens ein weiteres Vorrichtungspaar der Serie 100 in der Reihenfolge liegen kann, typischerweise mehrere Vorrichtungspaare.

Die Nummer x kann sich auf die letzte Vorrichtung bzw. das letzte Vorrichtungspaar 10.x der Reihenfolge bzw. Serie beziehen, siehe bspw. Zahnblende N.I.1.x, die den Zahnblenden N.I.1.2, N.I.1.n entsprechen kann, d.h. die gleiche äußere Form und/oder an der gleichen Position bezogen auf den oberen Zahnbogen der Vorrichtungen, insbesondere der Oberkiefervorrichtungen 11 angeordnet sein kann. Drei Punkte deuten wiederum an, dass zwischen dem Vorrichtungspaar 10.n und dem Vorrichtungspaar 10.x mindestens ein weiteres Vorrichtungspaar der Serie 100 in der Reihenfolge liegen kann, typischerweise mehrere Vorrichtungspaare.

Vorrichtungsteile, die in der Vorrichtung rechts "re" vom Betrachter (Zahnarzt, Techniker, Kieferorthopäde) aus gesehen liegen, liegen links bezüglich der Person (P), die die Vorrichtung (das Vorrichtungspaar) trägt, was mit "li (P)" in den Figuren verdeutlicht wird. Ebenso liegen Vorrichtungsteile, die in der Vorrichtung links "li" vom Betrachter gesehen aus liegen, rechts bezüglich der Person (P), die die Vorrichtung (das Vorrichtungspaar 10.1, etc.) trägt, was mit "re (P)" in den Figuren dargestellt wird.

Damit zeigt die Figur 1 deutlich, dass der Frontbereich der Vorrichtungen 10.1 bis 10.x unverändert bleiben kann, während sich die Alignment-Funktionen 210 der Vorrichtungen verändern. Zusätzlich oder alternativ kann der Frontbereich der Vorrichtungen 10.1 bis 10.x unverändert bleiben, während sich Aufbauten im Backenzahnbereich verändern, z.B. Aufbauten mit Höhen-Funktion 250 und/oder mit Gleit-Funktion 260 und/oder mit Rampen-Funktion 270, siehe bspw. die Backenzahnbereiche im ersten Quadranten I, die in der ersten Vorrichtung 10.1 anders sein können als in der zweiten Vorrichtung 10.2 und die in der letzten Vorrichtung 10.x anders sein können als in der mittleren Vorrichtung 10.n, siehe Pfeile P1 und P2.

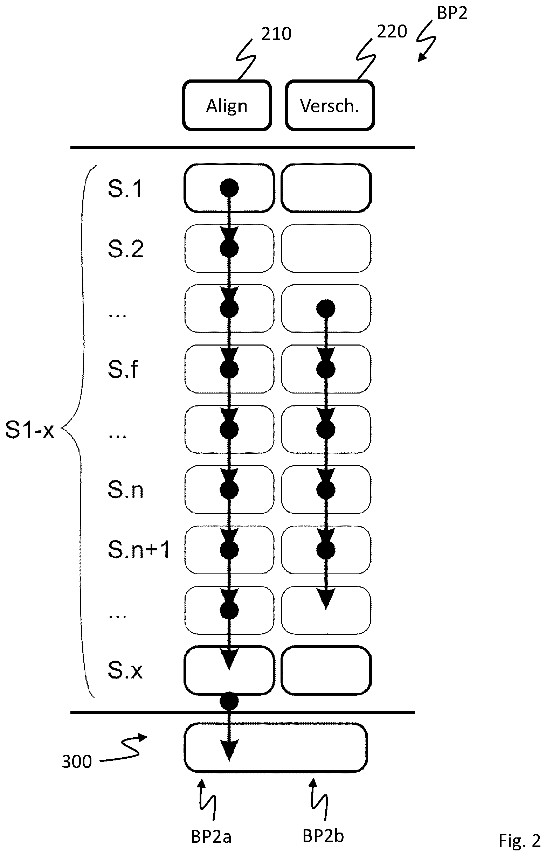

Die Figur 2 zeigt grob schematisch in funktionaler Darstellung einen Vergleichs-Aligner-Behandlungsplan BP2 für eine Anzahl von x Aligner-Schienen S.1 bis S.x. Die darin enthaltenen Funktionen lassen sich trennen in Alignment-Funktion 210 und Verschiebe-Funktion 220. Die Alignment-Funktion 210 dient bspw. der besseren Eingliederung einzelner Zähne oder Zahngruppen in einen in Grundzügen bestehenden Zahnbogen. Die Verschiebe-Funktion 220 dient bspw. der groß angelegten Verlagerung oder Veränderung des Zahnbogens zum Beispiel im Sinne einer Aufweitung des Zahnbogens, um mehr Raum zu schaffen. In vielen Fällen kann eine solche Aufweitung mit Verschiebe-Funktionen 220 vorgenommen werden, um ein Alignment bestehender Zähne überhaupt erst durchführen zu können, d.h. um den dafür erforderlichen Platz zu schaffen. Da Aligner-Schienen auch von innen gegen die Zähne drücken und folglich diese nach außen kippen können, kann eine gewisse Überlagerung von Alignment-Funktion 210 und Verschiebe-Funktion 220 gegeben sein. Mit den Alignment-Elementen an den Aussparungen in den Schienen, die die Zähne aufnehmen können oft sogenannte Attachments korrespondieren, die aber nicht an der Schiene angebracht sind, sondern am jeweiligen Zahn. Der Aufnahmebereich für den Zahn in der Schiene kann oft eine gewisse Beweglichkeit in die gewünschte Richtung der Zahnverlagerung erlauben. Deshalb können sich mit Alignment-Funktionen 210 in Kombination allein mit Verschiebe-Funktionen 220 bis zu gewissen Grenzen durchaus Erfolge erzielen lassen. Die Abfolge der Schienen kann die Zähne in eine neue Konstellation führen, wobei vor allem diejenigen Zähne verschoben und/oder gedreht werden können, die ursprünglich stark vom Zielzustand abweichen. Nach der Aligner-Behandlung mit der letzten Schiene 10.x stehen die Zähne in einer neuen Formation, sie sehen aber noch aus wie zuvor. Nun erst können die Zähne mit ästhetischen und dentaltechnischen und zahnmedizinischen Technologien in einer finalen Behandlung 300 weiter versorgt werden, z.B. durch Veneers und/oder Kronen und/oder Table-Tops. In diesem Fall kann sich das Aussehen der Zähne erst jetzt ändern, nun aber schlagartig. Insbesondere bei erwachsenen Patienten bzw. Personen mit abradiertem Gebiss und mit Fehlstellungen kann diese Art der Aligner-Behandlung erhebliche Schwachstellen und eine nur sehr eingeschränkte Wirkung haben.

Im Vergleichsbeispiel kann der Behandlungsplan BP2 nur zwei Teil-Behandlungspläne BP2a, BP2b enthalten, was die Nutzung nur weniger Funktion innerhalb einer Vergleichsserie S1-x aus Vorrichtungen bzw. Vorrichtungspaaren verdeutlicht. Insbesondere kann die Vergleichsserie S1-x keine Form-Funktion 230 enthalten, d.h. keine Zahnblenden. Im Gegenteil dazu können die Vorrichtungen bzw. Vorrichtungspaare S1, ..., S.n, ... S.x der Vergleichsserie S1-x mit einem transparenten oder zumindest durchscheinenden Material ausgeführt sein.

Die Figur 3 zeigt schematisch einen vorgeschlagenen polyfunktionalen Behandlungsplan BP3. Die Serie 100 umfasst eine Anzahl von x Vorrichtungen 10. Die Serie 100 baut auf dem Anfangszustand 200 des Gebisses auf. Die erste Vorrichtung der Serie 100 ist die Vorrichtung 10.1, die letzte Vorrichtung ist die Vorrichtung 10.x. In der Serie 100 von polyfunktionalen Behandlungsschritten ist mit Vorrichtung 10.x der Zustand 10.x erreicht, d.h. das Ende der Behandlung mit Schienen oder Vorrichtungen. Eine finale Versorgung 300 kann danach erfolgen.

Durch diese polyfunktionale Kombination der funktionalen Elemente, die in einer Serie 100 von Vorrichtungen 10 voll integriert kombiniert realisiert sind, entsteht die multidisziplinäre Wirkung, die mit einfachen Aligner-Schienen nicht möglich ist, z.B. mit den Vergleichs-Aligner-Schienen S.1 bis S.x gemäß Figur 2. Ausgehend von dem mit den Vorrichtungen 10 erreichten Zustand, kann dann die finale Versorgungen 300 mit Table-Tops, Veneers etc., erfolgen, d.h. erst nachdem die letzte Schiene 10.x entfernt wurde.

Bei aktivierter Farb-Funktion 240 kann die Farbwahl bereits vorab während der polyfunktionalen Behandlung getestet worden sein. Im gezeigten Ausführungsbeispiel kann sich die Alignment-Funktion 210 mit Verlagerung der Zähne relativ zu ihren Nachbarn über einen Großteil der Serie 100 erstrecken oder wie gezeigt über die gesamte Serie 100. Die Vorrichtungen 10.1 bis 10.x tragen dann durchgehend an ausgewählten Aussparungen geeignete Alignment-Elemente oder eine geeignete Position oder Form der Aussparungen für die Zähne, um ausgewählte Zähne durch Kontaktkräfte und Dreh- oder Kippmomente in Kombination mit der erforderlichen Bewegungsfreiheit zu verlagern.

Die polyfunktionale Vielfalt kann im gezeigten Ausführungsbeispiel die Alignment-Funktion 210, die Verschiebe-Funktion 220, die Form-Funktion 230, die Farb-Funktion 240, die Höhen-Funktion 250, die Gleit-Funktion 260, die Rampen-Funktion 270 sowie die Implantat-Funktion 280 und die Auflage-Funktion 290 umfassen.

Die Pfeile entlang der Funktionsspalten zeigen, dass eine Funktion optional aktiviert sein kann, aber nicht durchgehend bei allen Vorrichtungen aktiviert sein muss. Im Allgemeinen (hier nicht gezeigt) können einige der Funktionen in der vorliegenden Serie 100 auch gar nicht aktiviert sein, zum Beispiel, weil eine Patientin oder ein Patient (Person P) diese Funktion nicht benötigt. Besonders selten kann die Implantat Funktion 280 aktiviert sein, nämlich nur dann, wenn Implantate vorhanden sind.

Deutlich sichtbar ist, dass die Form-Funktion 230 von Anfang an, d.h. schon in der ersten Vorrichtung 10.1 und/oder in allen Vorrichtungen 10.1 bis 10.x verwendet werden kann, z.B. unter Nutzung von Zahnblenden bzw. Zahnnachbildungen. Dies kann vergleichsweise unproblematisch sein in einigen Behandlungsfällen. In anderen Fällen kann dies durch andere geeignete Funktionen der Funktionen 210, 202, 240 bis 290 unterstützt bzw. ermöglicht werden.

Die Verwendung der Zahnblenden kann einen technischen Bezug zu der Farb-Funktion 240 dahingehend haben, dass transparente Materialien ohne Einfärbungen und/oder ohne weiße oder andere nichttransparente Beschichtungen zum Erbringen der visuellen Blenden-Funktion nicht geeignet sein können. Jedoch können transparente Materialien bspw. dann verwendet werden, wenn die Stabilisierungsfunktion und/oder die taktile Funktion der Zahnblende ausreichend sind bzw. ausreichend andere Vorteile bieten.

Die Farb-Funktion 240, kann optional ebenfalls von Anfang an, d.h. schon in der ersten Vorrichtung 10.1 und/oder in allen Vorrichtungen 10.1 bis 10.x verwendet werden. Die Farb-Funktion 240 kann optional innerhalb der Serie verändert werden, um einen passenden Farbton bzw. passende Farbabstufungen zu finden. Die Farb-Funktion 240 kann eine Farbe realisieren, die sich von durchsichtigem und/oder durchscheinendem Material unterscheidet. Im Rahmen dieses Verständnisses wird hier die Farbe Weiß auch als Farbe betrachtet, da sie ebenfalls eine Abdeck- bzw. Verblendfunktion erfüllen kann.

Der erst später ansetzende Pfeil in der Verschiebe-Funktion 220 besagt bspw., dass erst ein Alignment durchgeführt wird, bevor bei Vorrichtung 10.f mit der Verschiebe-Funktion 220 begonnen wird.

Die anfänglich aktivierte Gleit-Funktion 260 besagt bspw., dass die ersten Vorrichtungen in den Backenzähnen Gleitvorrichtungen tragen können, die späteren nicht mehr. Die Höhen-Funktion 250 (Height) in den Backenzahnbereichen ist hingegen im Beispiel durchgehend vorhanden, weil z.B. die Zähne abradiert waren und der früher zu tiefe Biss korrigiert werden muss. Generell können sich die in den Vorrichtungen 10 realisierten Funktionselemente zwischen aufeinanderfolgenden Vorrichtungen unterscheiden. Vorrichtung 10.n sieht also nicht nur in der Geometrie der kraftübertragenden Elemente 13 anders aus als die nachfolgende Vorrichtung 10.n+1, sie kann auch eine andere Kombination von Funktions-Elementen und Funktions-Typen beinhalten, wobei das Äußere der Zahnblenden aber gleich bzw. unverändert bleiben kann.

Ein wichtiges Kennzeichen kann sein, dass die Form-Funktion 230 als mechanische StabilisierungsFunktion, ggf. auch als bspw. biomechanisch wirkende Funktion bzw. als ästhetische Funktion, auch sehr früh einsetzen kann, während bei der Vergleichs-Aligner-Behandlungen gemäß Figur 2 keine Zahnblenden verwendet werden, und damit die Form und/oder die Lage von Aussparungen hinter oder in den Zahnblenden auch nicht relativ zu einer nach vorn unveränderten Zahnblende verändert wird. Die Formänderung erfolgt vorgeschlagen durch die Gestaltung der Zahnblenden, die zusammen zur Vorrichtung 10 gehören, also nicht durch einfache Material-Umformungen um Aufnahmen bzw. Aussparungen zur Aufnahme der Zähne herum.

Bei der hier gewählten komprimierten polyfunktionalen Darstellung des Behandlungsplanes BP3 ist zu berücksichtigen, dass jede der Spalten für jede der Funktionen sich auf das Muster der im Allgemeinen maximal 32 Zähne des Gebisses beziehen kann. Die gezeigte Ansicht ist also eine Summe über die Zähne des Gebisses. Eine Aktivierung einer Funktion bedeutet, dass sie bei mindestens einem Zahn oder bei mindestens einer Gruppe von Zähnen in der betreffenden Vorrichtung aktiviert ist. Zu dem multifunktionalen "Staging", das hier in den Figuren 3 und 4 gezeigt ist, kommt also für einen vollständigen multifunktionalen Behandlungsplan BP3 bzw. BP4 das dentale "Staging" in Bezug auf die einzelnen bis zu 32 Zahnpositionen hinzu. Diese Verteilung der Aktivierung auf einzelne Zähne ist aber hier nicht gezeigt.

Der Behandlungsplan BP3 kann mit einer finale Versorgung 300 abgeschlossen sein, d.h. z.B. durch Veneers und oder Kronen oder Table-Tops, vorzugsweise orientiert an dem End-bzw. Ziel-Zahnzustand, d.h. in Übereinstimmung mit der labialen Form der Zahnblenden N,I.1.1, etc., die sich ebenfalls am End-bzw. Ziel-Zahnzustand orientiert.

Der Behandlungsplan BP3 enthält bspw. neun Teil-Behandlungspläne BP3a bis BP3i, die in dieser Reihenfolge den oben genannten Funktionen 210 bis 290 entsprechen.

Die Figur 4 zeigt einen Behandlungsplan BP4 für einen speziellen, aber auch häufig auftretenden Fall ohne Implantat-Funktion 280 und ohne Auflage-Funktion 290, dafür aber mit ausgeprägten Form-Funktionen 230, d.h. bspw. Form-Funktion der vorderen sichtbaren Zahnblenden der Schiene, und/oder Farb-Funktionen 240, d.h. bspw. Farbgestaltung der vorderen sichtbaren Zahnblenden der Schiene, insbesondere abweichend von transparent und/oder durchscheinend.

In diesem Fall sitzen die Oberkieferschienen 11 direkt klemmend auf den Zähnen des Oberkiefers OK, 5 und die Unterkieferschienen 12 sitzen auf den Zähnen des Unterkiefers UK, 4. Die schrittweise nachgeführte Alignment-Funktion 210 mit Verlagerung und Ausrichtung von Zähnen endet in einer Position, die anschließend für die finale Versorgung 300 zur Verfügung steht. Gleichzeitig findet je nach Bedarf im gezeigten Fall im mittleren Bereich der Reihenfolge eine Phase der Verschiebe-Funktion 220 statt, in der die Zähne beispielsweise nach außen bewegt werden. Diese Verschiebe-Funktion 220 kann in anderen Fällen sehr viel ausgeprägter sein. Sie kann oft die Voraussetzung dafür sein, genügend Raum zu haben, um nach der polyfunktionalen Behandlung durch Serie 100 in der Abschlussphase 300 (finale Versorgung) die Zähne einzeln entsprechend in Form und Größe ausgestalten zu können.

Die schrittweise nachgeführte Alignment-Funktion 210 ist durch mehrere Pfeile verdeutlicht, um eine im Vergleich zu Figur 3 erhöhte Komplexität des Alignments zu verdeutlichen. So kann das Alignment im Verlauf des Behandlungsplanes BP4 verschiedene Zähne betreffen.

Auch die Form-Funktionen 230 können abgestuft sein, wie durch mehrere Pfeile angedeutet ist, bspw. um sich vom Ausgangszustand nicht allzu sprunghaft in einen Endzustand zu bewegen, d.h. dass bspw. eine Vergrößerung des Zahnbogens nicht sofort und damit für alle offensichtlich sichtbar, sondern abgestuft und damit unauffälliger für Dritte und ggf. auch für die Person P durchgeführt wird. Somit muss sich die Form-Funktion 230 (Verblendung) nicht von Anfang an, an dem finalen Zielzahnzustand orientieren. Es können Zwischen-Zielzahnzustände verwendet werden. Alternativ, kann auch in Behandlungsplan BP4 eine gleichbleibende oder sich nur wenig ändernde Form-Funktion 230 unter Verwendung zugehöriger Zahnblenden und/oder Zahnnachbildungen verwendet werden.

Weitere Funktionen können optional hinzutreten, z.B. eine Orthese-Funktion 275, z.B. eine Orthese nach Saxler, siehe WO2020141 134A1.

Die Trenn-Gleitebene der Orthese kann nach Saxler (3D Strukturmarkierung/Marker/Ruler) oder nach einem anderen Verfahren bestimmt werden. Die Orthese kann einen Randspalt enthalten, muss es aber nicht.

In der Figur 4 wird die optional Farb-Funktion 240 mit einer Pfeilfolge stufenweise aktiviert gezeigt, um sich vom Ausgangszustand nicht allzu sprunghaft in einen optimierten helleren Zustand zu bewegen, bspw. von einer mehr gelblichen Farbgebung hin zu einer mehr weißlichen oder weißen Farbgebung. Alternativ kann auch im Behandlungsplan BP4 eine gleichbleibende oder im Wesentlichen gleichbleibende Farb-Funktion 240 verwendet werden, bspw. kann sich die Farbe nur im Rahmen der Fertigungsmöglichkeiten und/oder Fertigungstoleranzen ändern.

Auch hier in Figur 4, wie schon in Fig. 3, ist die Höhen-Funktion 250 durchgehend aktiv, weil die Zähne im Ausgangszustand 200 abradiert waren. Die Abfolge der Pfeile entlang der Funktionsspalte 250 zeigt an, dass abfolgend bzw. aufeinanderfolgende unterschiedliche Höhen der Aufbauten in den Backenzahnbereichen zum Einsatz kommen.

Die Gleit-Funktion 260 zeigt sich phasenweise an den Vorrichtungen bzw. an den Vorrichtungspaaren 10.1 bis 10.x bspw. durch Gleitbereiche im Backenzahnbereich.

Die Rampenfunktion 270 wird phasenweise zusätzlich aktiviert, insbesondere wenn die Biomechanik des Kiefergelenks dies erforderlich macht, bspw. in der zweiten Hälfte der Serie 100.

Die Abfolge, die hier gezeigt wird, ist rein als Erklärungshilfe gedacht. Diese für einen gegebenen Patienten bzw. für eine Person P richtige Abfolge kann anhand des Ausgangszustandes und mit Hilfe des geplanten Zielzustandes ermittelt werden. In jedem Fall bietet die polyfunktionale Behandlung jedoch ein Vielfaches mehr an Behandlungsmöglichkeiten auch komplexer Fehlstellungen und Abnutzungszustände als es bisher möglich war. Die Zielgruppe kann im Bereich der Patienten bzw. Personen P zwischen 30 Jahren und 80 Jahren liegen, d.h. sie kann sehr groß sein. Die Investitionsbereitschaft kann hoch sein, weil die funktionellen Vorteile, insbesondere auch in ästhetischer und/oder taktiler Hinsicht, als entscheidend wahrgenommen werden. Insbesondere bei Patienten ab 50 Jahren und insbesondere auch bei Personen ab 60 Jahren kann eine reine Aligner-Therapie, die bspw. nur Aligner-Funktionen 210 und gegebenenfalls auch Verschiebe-Funktionen 220 nutzt, wegen der Abnutzungen meist keinen Sinn ergeben.

Der Behandlungsplan BP4 enthält Teil-Behandlungspläne BP4a bis BP4i, die in dieser Reihenfolge den oben genannten Funktionen 210 bis 290 entsprechen.

Auch bei dem an Hand der Figur 4 erläuterten Verfahren können weitere optionale Funktionen hinzutreten, z.B. eine Orthese-Funktion 275, z.B. eine Orthese nach Saxler, siehe WO2020141134A1. Die Trenn-Gleitebene der Orthese kann nach Saxler (3D Strukturmarkierung/Marker/Ruler) oder nach einem anderen Verfahren bestimmt werden. Die Orthese kann einen Randspalt enthalten, muss es aber nicht.

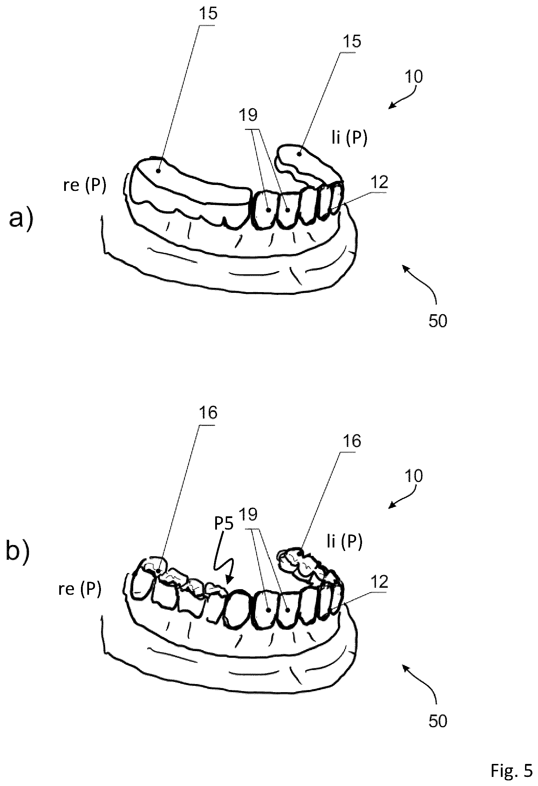

Die Figur 5 zeigt im oberen Bild einen Unterkieferteil 12 als Teil einer Vorrichtung bzw. eines Vorrichtungspaares 10. Figur 5a zeigt einen ersten Vorrichtungsteil 12 aus einer ersten Phase der Serie 100 und Fig. 5b zeigt einen zweiten Vorrichtungsteil 12 aus einer zweiten Phase bzw. einem zweiten Teilabschnitt der Serie 100.

Figur 5a zeigt im Backenzahnbereich mit Ziffer 15 eine Gleitfläche 15. Dies kann ein Merkmal einer aktivierten Höhenfunktion 250 in Kombination mit einer aktivierten Gleitfunktion 260 sein.

In Figur 5b ist die Höhenfunktion 250 weiterhin aktiviert aber die Gleitfunktion 260 ist deaktiviert. Stattdessen ist die Rampen-Funktion 270 in Form kleiner, aber wirksamer Schrägen an den Zähnen im Backenzahnbereich aktiviert. Erkennbar ist dies in der höckerartig mit schrägen Flanken und kleinen Rampen, siehe Pfeil P5 gestalteten Kontaktfläche 16. Diese verlagern den Unterkiefer UK, 4 beim Kontaktbiss transversal nach vorn, wirken also bei gleicher Bisshöhe ganz anders als die Gleitfunktion 260.

Die Frontzähne sind sowohl in Figur5a als auch in Figur 5b verkleidet und verdeckt durch Zahnblenden 19, die zur Unterkieferschiene 12 gehören. Die Verlagerung der eigentlichen Zähne findet damit verdeckt statt. Im Frontzahnbereich bilden die u.a. ästhetisch ausgebildeten Zahnblenden 19 eine Verdeckung aus. Darunter sind in den Aussparungen für die Zähne die Alignment-Funktionen 210 und die Verschiebe-Funktionen 220 installiert, ganz nach individuellem und phasenweisem Bedarf. Dies sieht man aber erst dann, wenn man die Schienen aus dem Mund herausnimmt. Im Backenzahnbereich verdecken die Aufbauten 15 und 16 die Zähne. Diese kann man aber bspw. nur bei weit geöffnetem Mund von außen sehen.

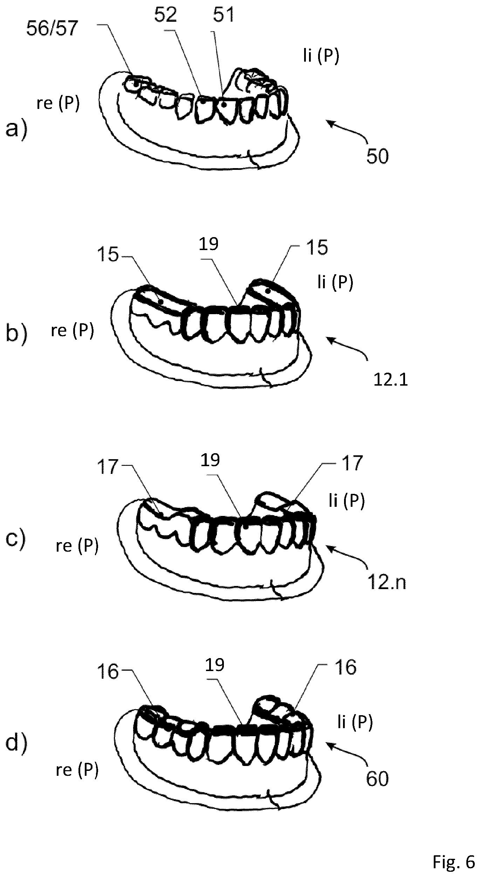

Die Figur 6 zeigt schematisch unterschiedliche Zustände von Vorrichtungen 10, die als Beispiel aus einer Serie 100 entnommen sind, dabei jeweils nur die Unterkieferschiene 12. Die Oberkieferschiene ist zur besseren Darstellung der Backenzahnbereiche jeweils weggelassen.

Die Figur 6a zeigt den Startzustand 50 der Zähne der Person P bzw. des Patienten. Figur 6a zeigt eine Anomalie im Zahnbestand, die häufig als Ergebnis klassischer kieferorthopädischer Maßnahmen auftritt, nämlich bspw. nach Extraktion von beispielsweise zwei Zähnen des Unterkiefers. Der zu kleine Zahnbogen im Unterkiefer war also bspw. nicht geweitet worden. Die Abrasion der Zähne wurde dadurch gefördert. Der Zustand des Kiefergelenks ist nun oft suboptimal und häufig kann eine craniomandibuläre Dysfunktion CMD vorliegen. Das Kiefergelenk und die Kauebene können dann ebenfalls eine Behandlung erfordern.

Gemäß Figur 6b sitzt die erste Unterkieferschiene 12.1 auf dem Gebiss im Startzustand 50, sie zeigt aber schon die Form-Funktion 230 an den groß gestalteten Zahnblenden 19, hinter und/oder unter denen die Frontzähne liegen. Damit erscheinen die Frontzähne auf den ersten Blick im Gegensatz zu Figur 6a als nicht mehr behandlungsbedürftig, auch wenn sie behandlungsbedürftig sind und auch, wenn sie gerade behandelt werden.

Ausgehend von der Schiene 12.1 im Startzustand 50 kann es eine Phase im polyfunktionellen Behandlungsplan BP und eine zugehörige Anzahl von Vorrichtungen geben, bei denen im Backenzahnbereich 56/57 rechts und oder links erhöhe Gleitflächen 15 angebracht sind. Die Gleitflächen können vorwiegend plan oder Teil eine Hyperfläche sein. Sie können damit eine Gleit-Funktion 260 aufbauen. Das Ausmaß der Überhöhung ergibt die Höhen für die Höhen-Funktion 250. Die Kontaktflächen im Backenzahnbereich können auch Rampen einer Rampen-Funktion 270 und Stufen oder unterschiedliche Schrägen umfassen.

Der Kontakt bei Rampen und/oder Schrägen kann der vektoriellen Kräftezerlegung entsprechend bewirken, dass eine Kraftkomponente der Kaumuskulatur so auf den Unterkiefer UK, 4 wirkt, dass eine laterale oder anterior-posterior gerichtete Kraftkomponente bewirkt wird. Dadurch können Veränderungen der Kontaktkräfte im Kiefergelenk erreicht werden und der Unterkiefer UK, 4 kann relativ zum Oberkiefer UK, 5 verschoben oder verdreht werden.

Bei einer besonderen Ausführungsform kann eine asymmetrische Anordnung von Gleitflächen 15 und Rampen 17 in den Backenzahnbereichen rechts und links so gewählt werden, dass komplexe Positionskorrekturen möglich werden, zusammengesetzt aus Translation und Rotation in bspw. insgesamt 6 Freiheitsgraden, siehe insbesondere Figur 6c.

Ein Zwischenziel oder auch Endziel der polyfunktionellen Behandlung kann der in Figur 6d gezeigte Zustand 60 mit weiterem Zahnbogen und größeren Zahnblenden 19 sein. Gleichzeitig kann bspw. die Kauebene insbesondere im Backenzahnbereich biomechanisch korrekt eingestellt werden und Fehlstellungen im Kiefergelenk können korrigiert werden. All diese unterschiedlichen Behandlungsziele können vereint in einer Serie 100 von Vorrichtungen 10 erfolgen, wobei die Reihe der Vorrichtungen 10 je aus Oberkieferschiene 11 und Unterkieferschiene 12 bestehen.

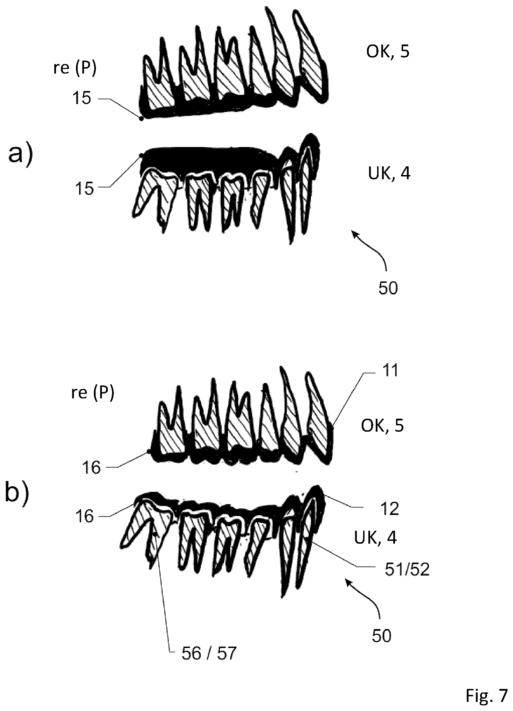

In der Figur 7 wird grob schematisch gezeigt, dass ein vergleichsweise hoher Aufbau 15 wie in Figur 7a insbesondere im Backenzahnbereich verwendet werden kann, um ersten eine Freistellung der seitlichen Beweglichkeit des Unterkiefers zu erreichen und/oder zweitens eine Gleitfläche mit Funktions-Typ 260 (Slide) auszubilden. Der Aufbau 15 kann auch als Aufdickung bezeichnet werden. Der Aufbau 15 kann in seinem Innern vollständig mit Material gefüllt sein, d.h. er ist massiv. Alternativ kann der Aufbau 15 in seinem Innern auch Hohlräume enthalten, insbesondere wenn die mechanische Stabilität gewährleistet ist. Hohlräume können das Gewicht der Vorrichtung verringern.

Die seitliche Beweglichkeit der Zähne im Kontaktzustand kann erforderlich sein, um die Zähne mittels Alignment-Funktion 210 (Ausrichtfunktion) und/oder mittels Verschiebe-Funktion 220 besser und/oder ohne Kollision verlagern zu können. Würde man hingegen wie bei den Vergleich-Alignern gemäß Figur 2 die Kauflächen mit einer Schicht mit vergleichsweise homogener Schichtdicke überziehen, so würde sich weder eine Gleitfläche ausbilden noch würde sich eine Freigabe der Beweglichkeit ergeben.

Die Figur 7b zeigt eine besondere Variante, die zunächst dünnere Aufbauten benutzt, wenn sehr schnell eingeführte hohe Aufbauten, wie z.B. in Figur 7a gezeigt, zu Beschwerden führen würden. Die Höhe der Aufbauten, die zur Behandlung erforderlich ist, kann also vom Zustand gemäß Figur 7b zum Zustand gemäß Figur 7a bei Bedarf schrittweise erhöht werden. Der Zustand gemäß Figur 7b kann bereits zu einer gewissen Entlastung der Kiefergelenke führen.

In welche Richtung der Unterkiefer verschoben wird, kann bspw. durch die Schrägen in der Detailgestaltung der Kontaktflächen 16 zwischen Oberkiefer OK, 5 und Unterkiefer UK, 4 eingestellt werden. In der Zwischenzeit können bereits Alignment-Funktionen 210 und Verschiebe-Funktionen 220 im engeren Rahmen möglich sein und angewendet werden.

Für den in der Figur 7a gezeigten Fall kann es erforderlich sein, die Aufbauten im Oberkiefer OK, 5 auf der abgebildeten Seite weniger stark auszuführen als im Unterkiefer UK, 4. Dies kann zum Beispiel dann sinnvoll sein, wenn die Kauebene unphysiologisch schräg steht und/oder entsprechend einer cranialen bzw. kranialen Analyse der cranialen Symmetriebedingungen im Schädel des Patienten P verlagert werden soll. Derart komplexe Formen der Vorrichtungen für Oberkiefer OK, 5 und Unterkiefer UK, 4 lassen sich bspw. nicht durch Tiefziehen herstellen. Sie können aber mittels additiver Fertigung, z.B. 3D Druck, oder subtraktiver Fertigung, z.B. Fräsen, hergestellt werden.

Die Aufbauten 15 können links und rechts zueinander symmetrisch oder zueinander asymmetrisch sein.

Figur 8 zeigt überdeutlich und schematisch einen Schnitt durch den Kiefer eines Patienten P, der eine Vorrichtung aus zwei Teilen 11 und 12 trägt, die durch besondere Merkmale gekennzeichnet sein kann. Die Vorrichtung kann eine Aufbiss-Rampe 17 im Backenzahnbereich und eine Gleitfläche 15 ebenfalls im Backenzahnbereich umfassen oder enthalten. Bei Rückwärtsbewegung des Unterkiefers UK, 4 und dessen Gleitfläche 15 entlang einer anterior-posterior (vorn-hinten) Achse kommt es zum Kontakt an der Aufbiss-Rampe 17 im gestrichelt gezeichneten Kreis. Dies behindert die Bewegung des Unterkiefers UK, 4 nach hinten und verhindert dadurch die Kompression des Kiefergelenks 5 nach hinten, siehe Pfeil P8a.

Die Höhe der Aufbiss-Rampe 17 und der Gleitflächen 15 wird bspw. so eingestellt, dass auch die Kompression des Kiefergelenks 5 nach oben verhindert wird, siehe Pfeil P8b. Dadurch kann sich die Muskulatur dehnen und der Kiefergelenksapparat wird entspannt. Werden die Gleitflächen 15 unterschiedlich hoch und die Position und Art der Rampen 17 rechts und links asymmetrisch gestaltet ausgebildet, so kann dadurch eine Verlagerung der Kauebene entstehen, solange die Vorrichtung getragen wird.

Da es geplant ist, nach der letzten Vorrichtung 10 eine finale Versorgung 300 anzubringen, wird diese optimierte Lage der Kauebene mit Hilfe der polyfunktionalen Behandlung und der Vorrichtung aus der Serie 100 so vorbereitet, dass diese physiologisch günstige Lage anschließend bei der finalen Versorgung 300 realisiert werden kann.

Wäre man wegen Verwendung herkömmlicher Aligner-Vorrichtungen, d.h. von Aligner-Vorrichtungen ohne Höhen-Aufbauten, gar nicht in der Lage, die Aufbauten und Korrekturfunktionen 250, 260, 270 durchzuführen, so wäre man gezwungen, die aufwändige finale Versorgung 300 in der alten unphysiologischen Lage der Kauebene durchzuführen. Oder man würde den Patienten nun mit einer sprunghaft geänderten Kauebene belasten. Die stufenweise Änderung der Kauebene und/oder die kraniale Optimierung mit Hilfe von Aufbauten ermöglichen dagegen einen Behandlungserfolg, der vorher nicht möglich war oder nur in bzw. mit einer erheblich längeren Behandlungszeit.

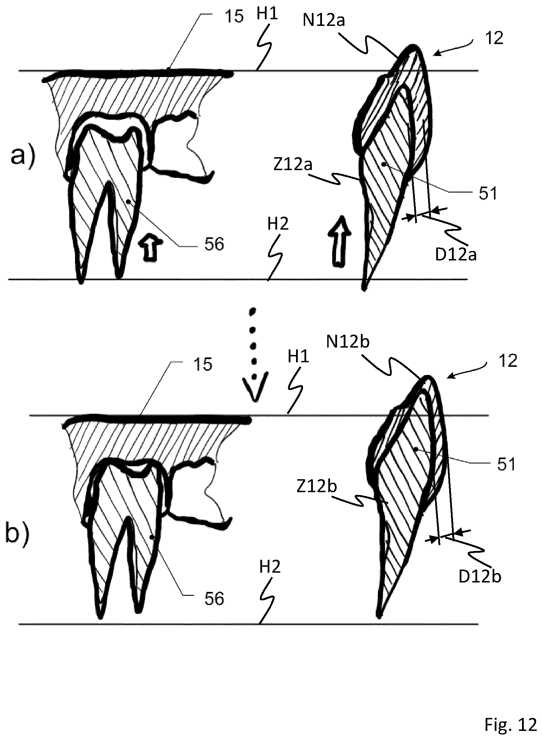

Im Detail betrachtet zeigt Fig. 8 schematisch einen typischen Fall, wie er z.B. nach der Extraktion von vier Prämolaren im Rahmen einer kieferorthopädischen Behandlung als Spätfolge auftreten kann. Durch die Fehlstellungen kann es zu starken Abrasionen kommen, bis hin zum Verlust der normalen Anordnung der Zähne im Sinne einer Spee'schen Kurve. In einem solchen Fall müssen die Zähne nicht nur durch Kippmomente verlagert, sondern auch elongativ beeinflusst werden, d.h. bspw. noch oben bzw. nach unten hin versetzt und damit der aus dem Zahnfleisch herausragende Abschnitt "verlängert" wird. Dies kann z.B. durch entsprechende Entlastungsbereiche für die Zähne im Oberkiefer mit Freiraum zur bspw. massiv gebauten Oberkieferschiene erfolgen (nicht gezeichnet, siehe Figur 12 für die Unterkiefervorrichtung 12).

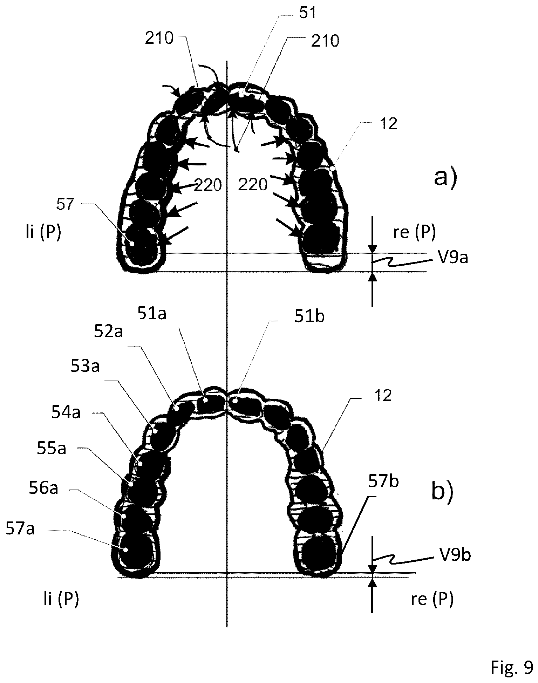

Die Figur 9 zeigt den transversalen Schnitt durch eine Unterkiefervorrichtung 12 für den Unterkiefer UK, 4 in zwei nacheinander folgenden Situationen gemäß Figur 9a und gemäß Figur 9b. In Figur 9a sind insbesondere die Schneidezähne 51 verdreht und nicht optimal positioniert. Während die äußeren Konturen der Vorrichtung 12 weitgehend gleichbleiben, werden die Zähne 51a, 52a, 53a, etc. auf der linken Seite des unteren Zahnbogens der Person P und die Zähne 51b, 52b, 53b, etc. auf der rechten Seite des unteren Zahnbogens der Person P von den Zahnblenden der Vorrichtung verdeckt im Inneren oder hinter den Zahnblenden durch die Alignment-Funktion 210 bewegt. Dabei verlagert sich der Freiraum, in dem ein Zahn stehen kann, relativ zu den von außen sichtbaren Zahnblenden schrittweise von Vorrichtung zu Vorrichtung.

Dadurch wird es möglich, dass von außen betrachtet die endgültige Form bzw. die endgültige Erscheinung des Gebisses sehr schnell bzw. sehr frühzeitig nachgebildet wird, während verdeckt durch die Verblendungsbereiche der Vorrichtung das Alignment weiter voranschreiten kann. Die Backenzähne in Figur 9a haben insbesondere rechts einen zu geringen Abstand zueinander und liegen zu weit vorne, siehe Versatz V9a. Dies kann zum Beispiel daran liegen, dass in jungen Jahren ein Backenzahn links unten extrahiert worden war und dass nachher ein Weisheitszahn links die Zahnlücke geschlossen hat, während der Weisheitszahn rechts unten extrahiert wurde.

Die Figur 9b zeigt die Situation nach erfolgreicher Verlagerung der Frontzähne durch Alignment-Funktionen 210 in Kombination mit einer erfolgreichen groß angelegten Verschiebung der Backenzähne durch Verschiebe-Funktionen 220, die den Zahnbogen aufweiten. Außerdem kann eine Verringerung des rechts-links Versatzes der proximalen Backenzähne 57a und 57b stattfinden, d.h. ein Versatz V9b ist erheblich kleiner als der Versatz V9a, bspw. kleiner als die Hälfte des Versatzes V9a oder sogar kleiner als ein Viertel des Versatzes V9a.

Wie man an der schraffierten Kontur der Schiene im Schnittbild gut erkennen kann, ändert sich die von außen insbesondere von vorn sichtbare Form der Zahnblenden der Schienen 12 nicht wesentlich. Die Verlagerungen der Zähne kann typischerweise verdeckt stattfinden. Die zugleich ggf. erforderlichen Höhen-Funktionen 250 und/oder Gleit-Funktionen 260 und/oder Rampen-Funktionen 270 sind im Schnittbild nicht dargestellt bzw. nicht darstellbar.

Die Figur 10 zeigt ein Vergleichsbeispiel einer Aligner-Schiene bspw. aus tiefgezogenem vorwiegend transparentem thermoplastischem Folienmaterial. Gezeigt ist der frontale Schnitt durch die Schneidezähne des Unterkiefers mit einer darauf sitzenden Schiene. Die Figur 10a zeigt einen anfänglichen Zustand S.1 mit zu weit auseinander stehenden Schneidezähnen 51, d.h. genauer ein von der Person P aus gesehener rechter Frontzahn Z.IV.1.1 und ein Person P aus gesehener linker Frontzahn Z.III.1.1, wobei die letzte Ziffer hier die Stellung des jeweiligen Zahns bspw. zu dem Zeitpunkt angibt, an dem die Vorrichtung mit der gleichen Nummer erstmals auf die Zähne aufgesetzt wird. Man sieht, wie die vorwiegend transparente Umhüllung den Zahnkonturen folgt, wobei für die beabsichtigte Verlagerung der gezeigten Schneidezähne 51 zur Mitte hin jeweils ein kleiner Bewegungsfreiraum vorgesehen ist, siehe z.B. Freiraum FR10a. Auf der Druckseite ist jeweils ein kraftübertragender Kontaktbereich 13 vorhanden. Als kraftüberragendes Element 13 kann eine Wirkfläche verwendet werden, die direkt auf den Zahn 51 wirkt oder die indirekt über ein Attachment (nicht gezeigt) am Zahn 51 auf den Zahn 51 wirkt. Ein resultierender Kraftvektor F zeigt in der Figur 10a von links nach rechts, um die Richtung der links-rechts Verschiebung des Zahns 51, Z.IV.1.1 anzugeben.

Die Figur 10b zeigt den Zustand Z.n derselben Zähne Z.IV.1.n, Z.III.1.n nach fortgeschrittener Verlagerung zur mittleren Sagittalebene SE hin. Der Spalt zwischen den Schneidezähnen 51 bzw. Frontzähnen schließt sich. Die vorwiegend transparente Schiene umhüllt die Zähne Schritt für Schritt und folgt auch den hier abgebildeten wandernden Schneidezähnen 51. Kennzeichnend für diese Vergleichs-Aligner-Technologie ist die weitgehend gleiche Schichtdicke der Tiefziehfolie, die die Zähne teilweise umhüllt und/oder die vergleichsweise konforme Abbildung der Form der Aussparungen an der Außenform der Vorrichtungen.

Die Figur 10a zeigt außerdem einen okklusalen Bereich O.IV.1.1 über dem Zahn Z.IV.1.1 und einen okklusalen Bereich O.III.1.1 über dem Zahn Z.IV.1.1. Der okklusale Bereich O.IV.1.1 bildet die obere Decke einer Aussparung A.IV.1.1 für den Zahn Z.IV.1.1. Der okklusale Bereich O.III.1.1 bildet dagegen die Decke einer Aussparung A.III.1.1 für den Zahn Z.III.1.1.

Die Figur 10b zeigt außerdem einen okklusalen Bereich O.IV.1.n über dem Zahn Z.IV.1.n, der mit dem Zahn Z.IV.1.1 identisch ist, aber eine andere Position und/oder Neigung hat, und einen okklusalen Bereich O.III.1.n über dem Zahn Z.III.1.n, der mit dem Zahn Z.III.1.1 identisch ist, aber eine andere Position bzw. Neigung hat.

Eine Achse A10.1a zeigt in der Figur 10a die ursprüngliche Stellung des Zahns Z.IV.1.1. Eine Achse A10.2a zeigt die ursprüngliche Stellung des Zahns Z.III.1.1.Der okklusale Bereich O.IV.1.1 hat bspw. eine maximale Breite B10.1a. Der okklusale Bereich O.IV.1.1 hat bspw. eine maximale Breite B10.2a. Ähnliche maximale Breiten können auch labiale Außenflächen bzw. lingual gerichtete Flächen der Vorrichtung an den Wänden der Aussparungen A.IV.1.1 bzw. A.III.1.1 haben. Ein Abstand D10.1a (Distanz) liegt bspw. zwischen den okklusalen Bereichen O.IV.1.1 und O.III.1.1. Ein Abstand D10.2a liegt zwischen den Aussparungen A.IV.1.1 und A.III.1.1.

Die Achsen A10.1a und A10.2a sind auch in der Figur 10b dargestellt, um die Veränderung der Lage der Zähne 51 zu verdeutlichen. Der Zahn Z.IV.1.n ist vom Betrachter aus nach rechts verschoben im Vergleich zu der Lage desselben Zahns Z.IV.1.1 in der Figur 10a. Der Zahn Z.III.1.n ist vom Betrachter aus dagegen nach links verschoben im Vergleich zu der Lage desselben Zahns Z.III.1.1 in der Figur 10a.

Der okklusale Bereich O.IV.1.n hat bspw. eine maximale Breite B10.1b, die etwa gleich der Breite B.10.1a ist. Der okklusale Bereich O.III.1.n hat bspw. eine maximale Breite B10.2b, die etwa gleich der Breite B.10.2a ist. Ähnliche maximale Breiten können auch wieder labiale Flächen bzw. lingual gerichtete Flächen der Vorrichtung im Bereich der Aussparungen A.IV.1.n bzw. A.III.1.n haben. Die Breiten B10.1b und B10.2b können unverändert sein, weil auch die Vorrichtung S.n im Tiefziehverfahren hergestellt worden ist und die Zähne 51 sich in ihrer Breite nicht verändert haben und somit auch nicht die Zahnnachbildungen in der Form, die zum Tiefziehen verwendet wurde.

Ein Abstand D10.1b (Distanz) liegt bspw. zwischen den okklusalen Bereichen O.IV.1.n und O.III.1.n. Der Abstand D10.1b ist kleiner als der Abstand D10.1a, was auf das Tiefziehverfahren zurückzuführen ist, das hier nun den kleineren Abstand zwischen den Zähnen 51 abbildet. Gleiches kann auch für den Abstand labialer Flächen an den Wänden der Aussparungen A.IV.1.n und A.III.1.n gelten.

Ein Abstand D10.2b (Distanz) zwischen den Aussparungen A.IV.1.n und A.III.1.n kann gleich groß sein, wie der Abstand D10.2a, wiederum durch das Tiefziehverfahren bedingt. Ein Freiraum FR10b in der Aussparung A.IV.1.n ist viel kleiner als der entsprechende Freiraum FR10a in der Aussparung A.IV.1.1. Zu berücksichtigen ist hier, dass das Tiefziehverfahren um ein Modell (Tiefziehform) der Zähne 51 herum durchgeführt wird, wobei das Modell (Tiefziehform) um Bereiche erweitert worden ist, in denen später die Freiräume FR10a, FR10b etc. liegen.

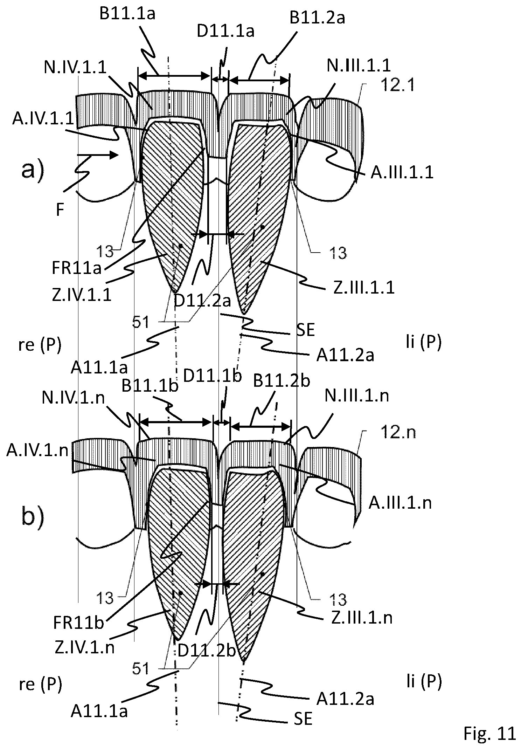

Die Figur 11 zeigt ein Ausführungsbeispiel mit den Unterschieden zum Vergleichsbeispiel (siehe Figur 10) speziell im Frontzahnbereich. Die Unterkieferschienen 12. 1 und 12.n bestehen bspw. aus einem Polymer oder enthalten ein Polymer, das bevorzugt ein ästhetisch hochwertiges Erscheinungsbild ähnlich wie Zahnsubstanz und Zahnschmelz aufweist, also bspw. auch glänzend ist, aber bevorzugt nicht transparent. Die in der Figur 11a noch zu weit auseinander stehenden Frontzähne 51 sollen verlagert werden, so dass sie näher beieinander stehen, aber nur soweit wie der Abstand nicht für die größeren Zahnblenden benötigt wird bzw. für die Restauration der Frontzähne in der finale Abschlussphase bzw. in der finalen Versorgungsphase 300. Die Zahnblenden sind durch die Schiene(n) 12 bei der Behandlung bereits frühzeitig ausgebildet.

In Figur 11a sind die Formkörper (Zahnblenden, Zahnnachbildungen) der Schneidezähne bzw. Frontzähne 51 bereits deutlich größer als die teils abradierten Zähne 51. Dies wird dadurch erreicht, dass die Formkörper bzw. Zahnblenden der Zähne 51 weiter über die Schneidezähne hinaus reichen als die Bereiche der Schiene S.1 bzw. S.n im Vergleichsbeispiel gemäß Figur 10. Die Schneidezähne 51 sind im sichtbaren Bereich größtenteils oder vollständig verdeckt durch die Zahnblenden verdeckt.

Die Schiene 12.1 zeigt kraftübertragende Kontaktbereiche 13 zwischen bzw. an den Aussparungen in der Schiene und den Zähnen 51. Dadurch werden die Zähne 51 so verlagert, dass sie zunehmend enger beieinanderstehen, siehe bspw. den Kraftvektor F. Dabei wandern im Detail betrachtet die Aussparungen für die zu verlagernden Zähne relativ zu den vorwiegenden unveränderten Zahnblenden, die die Schiene 12.1 bilden bzw. in der Schiene 12.1 enthalten sind. Bei dieser schrittweisen Wanderung der Aussparungen für die Zähne ändert sich die Wandstärke der Schiene im direkten Umfeld der zu verlagernden Zähne, siehe Abstand/Distanz D11.2a versus Abstand/Distanz D11.2b. Der Bewegungsfreiraum in Richtung der fortschreitenden Verlagerung wird jeweils neu geschaffen und der Kontaktbereich 13 wird jeweils neu nachgeführt, um bei der nachfolgenden Schiene erneut Kräftemomente auf die Zähne anwenden zu können.

Die Figur 11b zeigt die verlagerten Zähne 51 in geringerem Abstand. Dabei sind die Zahnblenden, z.B. N.IV.1.n und N.III.1.n, größer als die Zähne 51 bzw. Z.IV.1.n und Z.III.1.n, insbesondere größer als die nicht im Zahnfleisch liegenden Bereiche dieser Zähne 51. Die Zahnblenden bzw. Zahnnachbildungen, z.B. N.IV.1.n und N.III.1.n, sehen aber vorzugsweise wie Zähne aus.

Der Abstand der Zähne 51 kann im Vergleich zu Figur 10b bevorzugt etwas größer sein, weil mehr Platz für die größeren Zahnblenden erforderlich sein wird oder sein kann. Charakteristisch für die vorgeschlagene Ausführung kann sein, dass Zahnblenden, die größer sind als die Zähne einen frontalen Abschnitt der Schiene bilden und dass verdeckt innerhalb der Schiene die Aussparungen, die die Zähne aufnehmen und mit Kontaktkräften versorgen, schrittweise relativ zu diesen Zahnblenden wandern, in die Richtung, in die der Zahn verlagert werden soll, so dass der Zahn relativ zur Zahnblenden der Schiene der Verlagerung folgt. Weiterhin kann charakteristisch sein, dass die Zahnblenden deutlich länger ausgeführt sein können bezogen auf das Vergleichsbeispiel in Figur 10, zum Beispiel um für abradierte Zähne wieder in die ursprüngliche Länge nachzubilden oder eine darüber hinaus reichende Länge nachzubilden. Beide Merkmale treten bei den Vergleichs-Aligner-Schienen nicht auf.

Somit kann ein Freiraum FR11a viel schmaler als ein Freiraum FR10a sein, bspw. weil eine andere Herstellungstechnologie, z.B. subtraktive oder additive Fertigungstechnik versus Tiefziehverfahren (Druck, Vakuum und/oder Temperatur) verwendet wird.

Ein resultierender Kraftvektor F zeigt in der Figur 11a von links nach rechts um die Richtung der links-rechts Verschiebung des Zahn 51, Z.IV.1.1 anzugeben.

Die Figur 11a zeigt außerdem einen okklusalen Bereich einer Zahnblende N.IV.1.1 über dem Zahn Z.IV.1.1 und einen okklusalen Bereich einer Zahnblende N.III.1.1 über dem Zahn Z.IV.1.1. Der okklusale Bereich der Zahnblende N.IV.1.1 bildet die obere Decke einer Aussparung A.IV.1.1 für den Zahn Z.IV.1.1. Der okklusale Bereich der Zahnblende N.III.1.1 bildet dagegen die Decke einer Aussparung A.III.1.1 für den Zahn Z.III.1.1.

Die Figur 11b zeigt außerdem einen okklusalen Bereich einer Zahnblende N.IV.1.n über dem Zahn Z.IV.1.n, der mit dem Zahn Z.IV.1.1 identisch ist, aber eine andere Position und/oder Neigung hat, und einen okklusalen Bereich einer Zahnblende N.III.1.n über dem Zahn Z.III.1.n, der mit dem Zahn Z.III.1.1 identisch ist, aber eine andere Position bzw. Neigung hat.

Eine Achse A11.1a zeigt in der Figur 11a die ursprüngliche Stellung des Zahns Z.IV.1.1. Eine Achse A11.2a zeigt die ursprüngliche Stellung des Zahns Z.III.1.1. Der okklusale Bereich der Zahnblende N.IV.1.1 hat bspw. eine maximale Breite B11.1a. Der okklusale Bereich der Zahnblende N.IV.1.1 hat bspw. eine maximale Breite B11.2a. Ähnliche maximale Breiten können auch labiale Außenflächen bzw. lingual gerichtete Flächen der Vorrichtung an den Wänden der Aussparungen A.IV.1.1 bzw. A.III.1.1 haben. Ein Abstand D11.1a (Distanz) liegt bspw. zwischen den okklusalen Bereichen der Zahnblenden N.IV.1.1 und N.III.1.1. Ein Abstand D11.2a liegt zwischen den Aussparungen A.IV.1.1 und A.III.1.1.

Die Achsen A11.1a und A11.2a sind auch in der Figur 11b dargestellt, um die Veränderung der Lage der Zähne 51 zu verdeutlichen. Der Zahn Z.IV.1.n ist vom Betrachter aus nach rechts verschoben im Vergleich zu der Lage desselben Zahns Z.IV.1.1 in der Figur 11a. Der Zahn Z.III.1.n ist vom Betrachter aus dagegen nach links verschoben im Vergleich zu der Lage desselben Zahns Z.III.1.1 in der Figur 11a.

Der okklusale Bereich der Zahnblende N.IV.1.n hat bspw. eine maximale Breite B11.1b, die etwa gleich der Breite B.11.1a ist. Der okklusale Bereich der Zahnblende N.III.1.n hat bspw. eine maximale Breite B11.2b, die etwa gleich der Breite B.11.2a ist. Ähnliche maximale Breiten können auch wieder labiale Flächen bzw. lingual gerichtete Flächen der Vorrichtung 12.n im Bereich der Aussparungen A.IV.1.n bzw. A.III.1.n haben. Die Breiten B11.1b und B11.2b können unverändert sein, weil die Zahnblenden bereits die Zielform haben bzw. eine dazu vergrößerte Form.

Ein Abstand D11.1b (Distanz) liegt bspw. zwischen den okklusalen Bereichen der Zahnblenden N.IV.1.n und N.III.1.n. Der Abstand D11.1b ist gleich groß wie der Abstand D11.1a, weil die Zahnblenden bzw. Zahnnachbildungen N.IV.1.1, N.III.1.1, N.IV.1.n und N.III.1.n bereits ihre Zielform haben und im Frontbereich und/oder im okklusalen Bereich und/oder im lingualen Bereich nicht mehr verändert werden. Gleiches kann somit auch für den Abstand labialer Flächen und/oder lingualer Flächen an den Wänden der Aussparungen A.IV.1.1, A.III.1.1, A.IV.1.n und A.III.1.n gelten.

Ein Abstand D11.2b (Distanz) zwischen den Aussparungen A.IV.1.n und A.III.1.n kann kleiner sein, als der Abstand D11.2a, wie oben bereits angesprochen, bspw. auf Grund eines exakteren Herstellungsverfahrens, dass kein Tiefziehverfahren ist. Ein Freiraum FR11b in der Aussparung A.IV.1.n kann kleiner als der entsprechende Freiraum FR11a in der Aussparung A.IV.1.1 sein oder gleich groß.

Die in der Figur 11 gezeigten Vorrichtungen 12.1 und 12.n, sowie vorzugsweise auch alle anderen Vorrichtungen der gleiche Serie 100 können durch subtraktive Fertigungsverfahren, z.B. Fräsen, oder durch additive Druckverfahren, z.B. 3D Druck hergestellt worden sein, was im Vergleich zu Tiefziehverfahren insbesondere die Herstellung größerer Variationen der Schichtdicke okklusaler Flächen erlaubt und/oder es gestattet Hinterschneidungen zu fertigen, bspw. bezüglich einer oben-unten Richtung der Zähne der Person P .

Die Figur 12 zeigt Schnittbilder durch Backenzähne und durch Frontzähne in zwei unterschiedlichen nacheinander folgenden Stadien der Behandlung mit vorgeschlagenen Schienen am Beispiel des Unterkiefers UK, 4.

Die Figur 12a zeigt eine Schiene mit hohem Aufbau (bspw. mit Gleitfläche 15) im Backenzahnbereich eines Unterkiefers (UK nicht gezeichnet), die einen zu tief liegenden Backenzahn 56 umschließt. Dieser Backenzahn soll nach oben wandern. In der Figur 12a ist oberhalb des Backenzahnes in der Aussparung eine ungefüllte Kavität vorhanden, in die der Backenzahn hinein wandern kann. Im Bereich des Frontzahnes 51 ist auch ein Herauswachsen möglich, wenn die Kräfte entsprechend eingeleitet werden.

Dem zufolge zeigt die Figur 12b einen späteren Zustand immer noch mit Gleitfläche 15, bei dem der Backenzahn 56 in die Aussparung in der Schiene 12 hineingewachsen ist. Der ebenfalls heraus gewachsene Frontzahn 51 kann erfordern, dass die Schiene 12 eine tiefere Aussparung aufweist, in die der nun weiter nach oben stehende Zahn und dadurch oberhalb des Zahnfleisches größere Zahn 51 hineinpasst. Charakteristisch dabei kann sein, dass sich in Figur 12 die Zähne verlagern, ohne dass sich die Außenkonturen der Vorrichtung 10 bzw. der hier gezeigten Unterkieferschiene 12 verändern. Die unterschiedlichen erforderlichen Wandstärken der Schiene 12 bzw. der Vorrichtung 10 werden durch geeignete Fertigungsverfahren realisiert, z.B. durch präzise spanabhebende Bearbeitung von Polymerwerkstoffen, oder durch 3D Druck. In Figur 12 ist nicht gezeigt, dass sich während der Behandlung auch die Position der Zähne seitwärts verlagern kann und die Achse der Zähne gekippt werden kann, bspw. gleichzeitig zu dem Herausheben oder alternativ dazu.

Derselbe Zahn Z12a, Z12b ist in der Figur 12b im Vergleich zu der Figur 12a nach oben verschoben, siehe horizontale Linien H1, H2. Die Außenkontur der Vorrichtungen 12 kann dabei unverändert bleiben, siehe Zahnblende N12a, N12b im Frontbereich der Vorrichtungen 12 und/oder auch die Lage der Gleitfläche 15 bezüglich der Linien H1 im Backenzahnbereich der Vorrichtungen 12.

So kann sich ein Abstand D12a bzw. D12b der der Schichtdicke der Zahnblende N12a bzw. N12b im Frontbereich entspricht verringern, wobei die Lage der Zahnblenden N12a bzw. N12b bezüglich der horizontalen Linien H1, H2 unverändert ist und/oder sich die äußere Form/Kontur der Zahnblenden N12a bzw. N12b nicht oder nur unwesentlich verändert, insbesondere im Frontbereich.

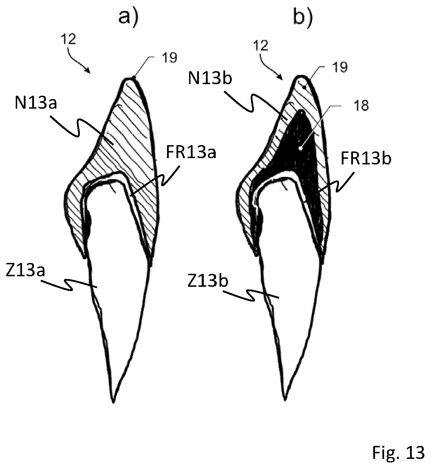

Die Figur 13 zeigt zwei Varianten eines Aufbaus von außen betrachtet gleich aussehender Zahnblenden 19, N13a, N13b im Frontzahnbereich. Die Figur 13a zeigt einen Aufbau aus einem massiven Material, wobei die äußere Kontur aus dem Material der sichtbaren Zahnblenden N13a gestaltet, während die innere Kontur des Materials den Aufnahmebereich für den Zahn Z13a gestaltet. Als Bewegungsreiz können die Innenflächen an der Aussparung lokal Kräfte und Momente auf den Zahn Z13a ausüben.

Die Figur 13b zeigt eine von außen gleich aussehende Anordnung. Hier besteht aber die Vorrichtung lokal betrachtet aus zwei Materialien in zwei Bereichen. Das Schnittbild der Figur 13b zeigt im Außenbereich die Zahnblende 19, N13b bevorzugt aus ästhetisch ansprechendem Material gefertigt, insbesondere aus nicht transparenten Material. Der aus diesem Material bestehende Bereich 19, N13b hat innen eine größere Aussparung als der Zahn Z13b benötigt. Diese größere Aussparung ist teilweise durch ein zweites Material gefüllt, so dass eine geeignete Aussparung für den Zahn Z13b verbleibt. Diese innen liegende Füllung 18 kann weicher oder härter sein als die Hülle der Zahnblende 19. In einer besonderen Ausführungsform sind über einige nacheinander folgende Vorrichtungen 10.n, 10.n+1 etc. die äußeren Zahnblendenbereiche gleichbleibend und es ändert sich nur die Ausformung der Aussparungen für die Zähne im Füllungsbereich 18 der Vorrichtung. Gezeigt ist jeweils ein Schnitt durch eine Unterkiefervorrichtung 12, für die Oberkiefervorrichtung 11 können jedoch die gleichen Varianten gelten.

Ein schmaler Freiraum F13a kann zwischen dem Zahn Z13a und dem Boden der Zahnblende 19, N13a liegen, die auch als Zahnnachbildung bezeichnet werden kann. Ebenso kann ein schmaler Freiraum F13b zwischen dem Zahn Z13b und dem Boden der Zahnblende 18,19, N13b liegen, insbesondere dem Boden des inneren Materials der Zahnblende 18,19, N13b. Die Zahnblende N13b kann auch als Zahnnachbildung bezeichnet werden, weil sie gemeinsam mit dem Zahn Z13b den Zielzahnzustand dieses Zahns Z13b nachbildet.

Die Figur 14 zeigt drei ausgewählte Schritte in der Serie 100 der Vorrichtungen bzw. Vorrichtungspaare 10, insbesondere der Unterkiefervorrichtungen 12.1, 12.n und 12.x, speziell einen Schneidezahn Z14a, Z14b und Z14c im Schnitt in drei nacheinander folgenden Schritten einer Verlagerung, die vorgeschlagen als Verschiebe-Funktion 220 bezeichnet werden kann. Zweck dieser Verlagerung kann es zum Beispiel sein, den Zahnbogen zu vergrößern, indem die Zähne weiter nach außen geschoben werden. Da die Zähne mit Wurzeln im Kieferknochen fest sitzen, kann die als Shift bezeichnete Verschiebung im Detail betrachtet eine Verkippung des Zahnes um einen tief liegenden Kippachse mit begleitender Anpassung der Zahnblende in deren Dimension (Ausdehnung) und/oder Ausrichtung sein. Vorgeschlagen wird bei der Verschiebe-Funktion 220 nun der Zahn nicht mehr nur gekippt, sondern die Zahnblende wird verschoben und in der Größe angepasst. Die Aussparung für den eigentlichen Zahn 51 kann im Sinne einer Verkippung verändert werden, indem die Kräfte deutlich oberhalb der Kippachse angreifen. Mit aufgesetzter Schiene erscheint die Nachbildung N14a, N14b, N14c des später restaurierten Zahns 51 verschoben, obwohl im verdeckten Bereich der eigentliche Zahn 51 verkippt ist. Die Verschiebung der Nachbildung N14a, N14b, N14c und eine entsprechende Restauration wie die letzte Nachbildung N14c kann optisch bzw. auch funktionell bei zu weit innen liegenden Zähnen besser geeignet als eine reine direkt sichtbare Verkippung der Zähne nach außen, es sei denn die Zähne waren im Ausgangszustand zu weit nach innen verkippt.

Derselbe Zahn Z14a bis Z14c ist in drei verschiedenen Lagen gezeigt in denen Zahnblenden N14a bis N14c verwendet werden, deren Außenkontur, insbesondere frontale Außenkontur, unverändert bzw. gleich bleibend sein kann. Achsen A14a bis A14c verdeutlichen die oben angesprochene Verkippung um eine Kippachse, die in der Figur 14 senkrecht zur Blattebene liegt.

Eine Strecke St14a bis St14c von einer Mittellinie der Zahnblenden (Zahnnachbildungen) N14a bis N14b hin zu einer vertikalen Bezugslinie, die bspw. in der Kippachse liegen kann, vergrößert sich kontinuierlich und entspricht der jeweils erreichten Aufweitung bzw. Verschiebung der Zahnblenden N14a bis N14b nach vorn.

Materialschichtdicken D14a, D14b, D14c zeigen die Schichtdicke der Zahnblenden N14a, N14b und N14c in ihrem Frontbereich. Die Schichtdicke D14b ist im Vergleich zu der Schichtdicke D14c verringert, bspw. weil die Verringerung der Schichtdicke durch die Verkippung des Zahnes Z14b größer ist als die Vergrößerung der Schichtdicke durch die Verschiebung der Zahnblende N14b. Die Schichtdicke D14c ist im Vergleich zu der Schichtdicke D14c gleich, bspw. weil die Verringerung der Schichtdicke durch die Verkippung des Zahnes Z14c gleich der Vergrößerung der Schichtdicke durch die Verschiebung der Zahnblende N14c bezogen auf die vertikale Bezugslinie ist.

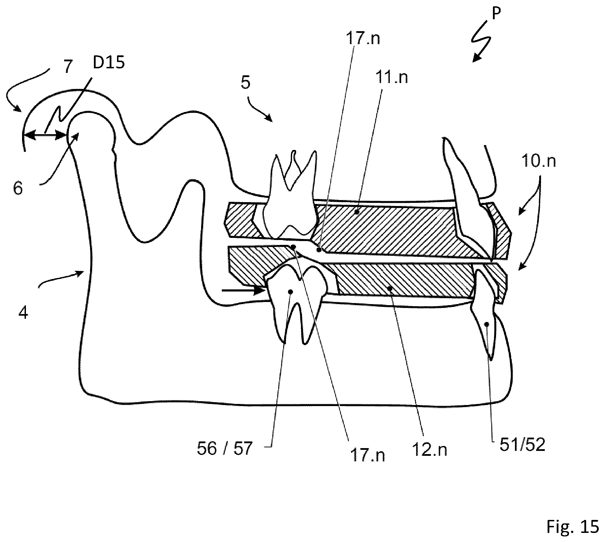

Die Figur 15 zeigt grob schematisch einen Sonderfall in einer Zwischenphase mit Vorrichtung 10.n bestehend aus Oberkieferschiene 11.n und Unterkieferschiene 12.n. Rampenartige Funktionselemente 17.n entwickeln bei Kontakt zwischen Unterkiefer UK, 4 und Oberkiefer OK, 5 als Rampen-Funktion 270 eine lateral und/oder anterior-posterior gerichtete Kraftkomponente. Im gezeigten Beispiel wird eine Bewegung des Unterkiefers UK, 4 zu weit nach vorne im Sinne einer als Sunday-Bite genannten Fehlstellung gezielt verhindert. Die Rampe 17.n in der Vorrichtung 10.n kann dabei schrittweise relativ zu den Backenzähnen 56, 57 anders positioniert und orientiert sein, um den Unterkiefer UK, 4 schrittweise vorsichtig in eine neue Ruhelage nach hinten zu bewegen. Gleichzeitig können eine massive Überhöhung mit Höhen-Funktion 250 und eine ausgeprägte Gleitfläche mit Gleitfunktion 260 integriert sein. Die hohen Aufbauten im Backenzahnbereich können so massiv bzw. so hoch sein, dass der Unterkiefer UK, 4 auch im Kontaktbiss unter der eigentlichen Ruheschwebelage verbleiben muss. Im Kiefergelenksköpfchen 6 sieht man, dass es weit genug von der Rückwand 7 des Kiefergelenks im Oberkiefer entfernt ist, siehe Abstand D15. Somit ist die Rückwärtsverlagerung des Unterkiefers durch die Rampenfunktion 270 eine zielführende Maßnahme. Erst durch die Rückwärtsverlagerung des Unterkiefers in Kombination mit der deutlichen Höhenfunktion 250 mit massiven oder hohlen Aufbauten im Backenzahnbereich kann es ermöglicht sein, z.B. einen schweren Kreuzbiss zu deblockieren.

Die Figur 15 zeigt eine Situation in der Mittelphase einer Serie 100, in der die unteren Schneidezähne 51, 52 bereits hinter die oberen Schneidezähne gebracht wurden. Hier liegt ein Beispiel vor, bei dem es sinnvoll sein kann, die Zähne im Unterkiefer UK, 4 zunächst klein zu belassen und erst dann durch geeignet große und geeignet geformte Zahnblenden als Teil der Schiene(n) neu aufzubauen, wenn sie in der korrekten Position angekommen sind. Im möglichst kurzen Zustand lassen sich nämlich die Frontzähne 51/52 des Unterkiefers UK, 4 aus dem Fehlbiss heraus leichter unter den oberen Schneidezähnen hindurch nach hinten verlagern. Im Oberkiefer OK, 5 hingegen wird man oder kann man die Behandlung durch Form-Funktion 230 und optional durch die Farb-Funktion 240 möglichst von Beginn an anwenden. Am Ende der polyfunktionalen Behandlung mit x Vorrichtungen kann auch hier gemäß Behandlungsplan BP geplant sein, die letzte Vorrichtung 10.x zu entnehmen. Danach kann geplant sein, eine finale Versorgung 300 der Zähne oder Zahnstümpfe mit Veneers, Table-Tops etc. vorzunehmen, wobei inzwischen die Lage der Kauebene bevorzugt cranial optiert wurde und wobei die Aufbauhöhen über den noch vorhandenen Zähnen erhalten bleiben können.

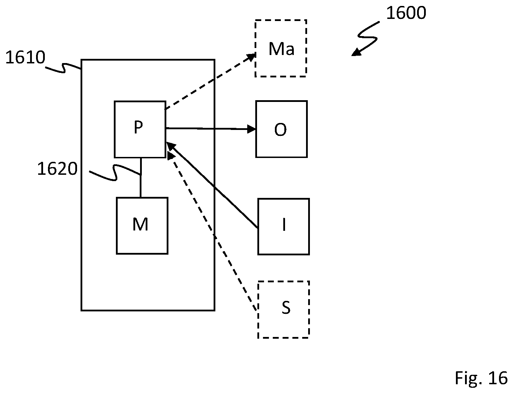

Figur 16 zeigt ein Computersystem 1600, das die in diesem Dokument erwähnten Verfahrensschritte ausführen kann, insbesondere automatisiert oder halb-automatisch. Das Computersystem 1600 kann enthalten:
- einen Computer 1610,
- ein optionales Eingabegerät I, z.B. eine oder mehrere Tasten, eine alphanumerische Tastatur, eine Computermaus, einen Trackball, eine Daten-Empfangseinheit (z.B. für den Datenempfang über das Internet oder ein Intranet),
- ein optionales Ausgabegerät O, z.B. ein Bildschirm (z.B. ein berührungssensitiver Bildschirm), oder eine Daten-Sendeeinheit (z.B. für das Versenden digitaler Daten über das Internet oder ein Intranet).

Mit dem Eingabegerät können bspw. digitale Repräsentationen der Zähne der Person am Bildschirm "verschoben" werden. Alternativ oder kumulativ können Berechnungsprozesse gestartet werden, um die Vorrichtungspaare 10 zu berechnen.

Der Computer 1610 kann enthalten:
- einen Prozessor P oder mehrere Prozessoren P, der oder die dazu konfiguriert sind, Programmbefehle auszuführen, bspw. Programmbefehle eines Betriebssystems (Windows (kann ein Markenzeichen sein), IOS (Input Output System) (kann ein Markenzeichen sein), Linux (kann ein Markenzeichen sein), etc.), insbesondere Programmbefehle eines Anwenderprogramms zum Ausführen der in diesem Dokument erwähnten Verfahrensschritte oder eines Teils davon, und/oder
- eine Speichereinheit M, die dazu ausgelegt ist, Programmbefehle und/oder Daten zu speichern, bspw. Daten, die während der Ausführung der Programmbefehle erzeugt werden. Die Speichereinheit M kann flüchtig-speichernden Speicher (z.B. RAM (Random Access Memory, DRAM (Dynamic RAM), etc.) oder nicht flüchtig speichernden Speicher (SSD (Solid State Device, EPROM (Electrical Erasable Read Only Memory), etc.) enthalten, und/oder
- mindestens ein Computerprogramm oder Computerprogrammprodukt, z.B. ein BIOS (Basic Input Output System), das ein selbständiges Programm sein kann oder Teil eines Betriebssystems OS (Operating System), und/oder
- einen optionalen Bus 1620 zwischen dem Prozessor(en) P und der Speichereinheit M bzw. weiteren Einheiten des Computers 1610 bzw. des Computersystems 1600.

Es kann weitere Einheiten geben, die dem Fachmann bekannt sind, z.B. Spannungsversorgung, Internet- bzw. Intranet-verbindung, bspw. basierend auf dem Internet Protokoll IP usw.

Eine Fertigungsmaschine Ma, z.B. ein CAM Computer Aided Manufacturing Maschine oder eine CNC (Computerized Numerical Control) Fräsmaschine oder ein 3D (3 Dimensionen) Drucker, kann an das Computersystem 1600 gekoppelt sein, bspw. lokal oder über eine Datenübertragungsnetzwerk. Eine Abtastvorrichtung S (Scanner) kann ebenfalls an das Computersystem 1600 gekoppelt sein, bspw. um die Zähne der Person P oder ein Zahnmodell der Zähne der Person P abzutasten, insbesondere elektronisch und/oder im optischen Bereich.

Durch die Mok-Up Funktion (Zahnblende) kann in der Front schon mit dem Tragen des ersten Aligners die Endposition, bspw. in 10 prozentiger Vergrößerung sichtbar sein bzw. verwirklicht sein. Die Vergrößerung kann um einen Wert erfolgen, der im Bereich von 1 Prozent bis 20 Prozent liegen kann, insbesondere im Bereich von 5 bis 15 Prozent. Damit kann der Tragekomfort zu den Lippen, d.h. die Balance zwischen den Weichteilen und der Zahnendstellung von Beginn an mit integriert werden.

Durch unterschiedlich gestalteten Schrägen zwischen den beiden Alignern kann von Beginn an eine auf Zentrik (Kondylen und Fossa in maximal idealer Position) orientierte Behandlung erfolgen. Die Zähne können sich im Inneren der Schienen (Vorrichtungen) bewegen. Durch die äußere Bauform und die damit erreichte Verschlüsselung kann eine im DVT (Digitale Volumen Tomografie) oder einem anderen bildgebenden Verfahren abgestimmte zentrische Kondylenbahn erreicht werden. Medizinisch gesehen, kann das ein enormer Vorteil der Zahnblenden-Aligner sein. Sie wirken von Anfang an gegen eine CMD und die damit verbundenen Haltungs- und Kieferbeschwerden.

Beispielsweise haben progene Verzahnungen, z.B. Kreuzbiss, häufig eine dezentrische Dislokation der Kondylen. Im Verlaufe der Behandlung muss dann z.B. ein Frontzahn im Oberkiefer nach vorne überstellt werden. Während dieser Überstellungsphase muss der zu überstellende Zahn das Hindernis des unteren Frontzahnes überwinden und balanciert letztlich auf diesem, vor diesem oder hinter diesem in der akuten Phase herum. Dieser Jiggling-Effekt kann sehr schädlich für die betroffenen Zähne sein und das Kiefergelenk kann in dieser Zeit häufig zu weit nach hinten rutschen (dorsokranialer Belastungsvektor), z.B. in die empfindliche bilaminäre Zone, d.h. der Zone, die der Stabilisierung des Discus articularis auf den Kondylen dient und die ein wesentlicher Faktor für den Stoffwechsel des Kiefergelenks ist. Die bilaminäre Zone enthält bspw. Das Stratum superius und das Stratum inferius. Dort kann er mitunter erhebliche Missempfindungen und sogar Schmerzen verursacht. Die frontalen Aufbisse können dann leider auch nur frontal sein und können dann bei angespannter Muskulatur einen enormen Hebeleffekt auf das Kiefergelenk verursachen. Das kann wiederum zu einer Kompression mit Kiefergelenksproblemen führen. All das kann mit Ausgestaltungen bzw. Weiterbildungen des neuen Konzepts verhindert bzw. erheblich abgeschwächt werden.

Durch die bekannte V.T.O. (Visual Treatment Objective) nach Ricketts (Holdaway) und Modellanalysen (z.B. Staub-Cranial) werden in der KFO (Kieferorthopädie) aktuell die Therapiehilfsmittel (Dentale Vorrichtungen) zur anstehenden KFO-Behandlung geplant. Die Zähne werden visuell (virtuell) im Oberkiefer und Unterkiefer verlagert. Durch diese Methode ist aber eine 3-Dimensionale Repositionierung der Zähne und der Kiefer nicht realisierbar, da Parameter zur Bestimmung der sagittalen (nur kephalometrische Analyse, Fernröntgenanalyse), koronaren und horizontalen Lagenbestimmung nicht einbezogen werden können, weil es bspw. nur 2D-Fernröntgenseitenaufnahmen gibt.

Bei der Planung der "polyfunktionalen dentalen Vorrichtung" können diese fehlenden aber nützlichen Parameter (Determinanten) als Landmarks (Strukturmarken) bspw. aus 3D-Dicom-Daten (Digital Imaging and Communications in Medicine) ermittelt werden, die z.B. digitale Bilddaten (CT (Computertomographie), CBCT (Cone Beam Computertomografie), MRT (Magnetresonanztomographie), ...) enthalten, die zur Analyse der Kieferrelation und Zahnstatus hinzugezogen werden können. Ein mögliches Analyseverfahren ist die Cranialanalyse nach "CranioPlan", d.h. die "Saxler-Analyse".

Dysgnathe Krafteinleitungen in den Unterkiefer UK,4 und/oder in den Oberkiefer OK,5 können erkannt und orthognat bzw. eugnath, aufgelöst werden. Dieses kann durch asymmetrische Aufdickungen, d.h. bspw. Materialverdickung oder Erhöhung, in Richtung Cranial (Schädel) (Okklusionsebene, Zahnbogen links nach rechts, rechts nach links) der "polyfunktionalen dentalen Vorrichtung" erreicht werden. Weiterhin kann sich ein Rotationsmoment durch Verwendung von asymmetrischen Rampen in der Vorrichtung bzw. eine transversale Verschiebung ergeben.

Das Ermitteln der Bezugsstruktur kann enthalten:
i) Bestimmen einer Innenohrachse, vorzugsweise unter Verwendung von digitalen 3D Bilddaten,
ii) Bestimmen der Position mindestens eines Auges,
iii) Bestimmen mindestens einer Schädelebene, die die Innenohrachse und die Position mindestens eines Auges enthält,
iv) Nutzen der Schädelebene als Hilfsebene oder für die Berechnung einer Hilfsebene, z.B. durch Ermitteln des Mittelwertes zweier Ebenen, jeweils enthaltend eine Augenposition,
v) Verwenden der Hilfsebene zum Festlegen der Kauebene durch:
   A1) Bestimmen einer Rotationsachse, die parallel zur Innenohrachse ist und die auf der anderen Seite der Innenohrachse liegt im Vergleich zu der Augenachse,
   A2) Verwenden der Rotationsachse zum Rotieren der Hilfsebene um einen vorgegebenen Winkel nach unten, z.B. um einen Winkel im Bereich von 11 bis 17 Grad oder im Bereich von 13 bis 15 Grad, um so die Zielkauebene oder eine parallel zu der Zielkauebene liegende Ebene zu erhalten, oder B1) Rotation der Hilfsebene um die Innenohrachse, um eine zweite Hilfsebene zu erhalten, und
   B2) Verschiebung (Translation) der zweiten Hilfsebene nach unten.
   B2) um so die Zielkauebene oder eine parallel zu der Zielkauebene liegende Ebene zu erhalten,
   B2), z.B. um eine Strecke, durch die die verschobene zweite Hilfsebene mit der nach Alternative A erhaltenden Zielkauebene übereinstimmt.

Der genaue Winkel lässt sich bspw. mit Hilfe einer Kugel bestimmen, die digital in die digitalen Daten eingepasst wird, die den Foramen Magnum beschreiben, d.h. eine große ovale Öffnung des okzipital Knochens des Schädels, d.h. des Hinterhaupts.

Die Rotationsachse kann z.B. ermittelt werden durch:
- Ermitteln eines ersten Mittelpunktes der Innenohrachse zwischen den beiden Innenohrpunkten,
- Ermitteln eines zweiten Mittelpunktes der Augenachse zwischen den beiden Augenpunkten,
- Ermitteln eines Abstandes zwischen dem ersten Mittelpunkt und dem zweiten Mittelpunkt,
- Ermitteln einer Verbindungsgeraden zwischen dem ersten Mittelpunkt und dem zweiten Mittelpunkt,
- Verlängern der Verbindungsgeraden nach hinten um eine Strecke die eine Länge hat, die ca. der um den Faktor 2 vergrößerten Länge des ermittelten Abstandes ist, um den Punkt zu erhalten, durch den die Rotationsachse verläuft, z.B. einen Faktor im Bereich von 1,5 bis 2,5 oder im Bereich von 1,75 bis 2,25 oder im Bereich von 1,9 bis 2,1, d.h. ursprüngliche Länge der Strecke zwischen den beiden Mittelpunkten wird bspw. verdreifacht.

### CranioPlan

Abweichend von Ebenen kann bei dem im Folgenden "CranioPlan" genannten Verfahren trotzdem die sogenannte Spee Kurve der Okklusionsflächen der Zähne ermittelt und/berücksichtigt werden. In diesem Fall ergeben sich bspw. Abweichungen in der Lage von Zähnen in der Mitte des rechten Kieferknochens (Oberkiefer bzw. Unterkiefer) bzw. in der Mitte des rechten Kieferknochens (Oberkiefer bzw. Unterkiefer) wo die jeweiligen Zähne unterhalb der Kauebene angeordnet sein können.

Verfahren nach Hornung (EP 3 332 731 A1).

Anderes Verfahren kann Gesichtsmerkmale verwenden, insbesondere Gesichtsmerkmale, die den genannten knöchernen Merkmalen des Gesichtsschädels entsprechen, siehe bspw. US 2015/0265374 A1. Dadurch kann Strahlenbelastung durch Röntgen vermindert werden oder verringert.

Das CranioPlan Verfahren kann manuell, halbautomatisch oder automatisch durchgeführt werden, insbesondere computergestützt.

Bei einer anderen Ausführungsform kann das Ermitteln der Bezugsstruktur enthalten:
- 3D Imaging (Bildgebung) und Erzeugung digitaler Daten,
- Manuelle Identifizierung oder automatische Identifizierung anatomischer Landmarken,
- Definition einer transversalen Richtung unter Nutzung der identifizierten anatomischen Landmarken, wodurch auch die Richtung einer Sagittalebne festgelegt wird,
- Ermitteln des Mittelpunkts zwischen den anatomischen Landmarken,
- Platzieren der medianen Sagittalebene Sm an dem ermittelten Mittelpunkt,
- Verwenden einer digitalen 3D Strukturmarkierung, die mindestens drei Ebenenpakete enthält:
- 1) Ein Transveral-Ebenenpaket, das mehrere zueinander parallele Transversalebenen enthält,
- 2) Ein Frontal-Ebenenpaket, das mehrere zueinander parallele Frontalebenen enthält, und
- 3) Mindestens ein Sagittal-Ebenenpaket, das mehrere zueinander parallele Sagittalebenen,
- Einbringen der 3D Strukturmarkierung in den 3D Bildraum,
- Ausrichten der 3D Strukturmarkierung an der medialen Sagittalebene Sm,
- Translation der 3D Strukturmarkierung zu einem ersten Ankerpunkt, der vorzugsweise in der medianen Sagittalebene liegt.
- Rotation der 3D Strukturmarkierung unter Verwendung eines zweiten Ankerpunktes.
- Skalierung der 3D Strukturmarkierung unter Verwendung eines dritten Ankerpunktes,
- Festlegen der idealen Kauebene unter Verwendung der 3D Strukturmarkierung.

Im Folgenden wird ein bevorzugtes Verfahren beschrieben, um erst die Transversalrichtung anhand von anatomischen Landmarken festzulegen (Teil A) und um dann die weiteren Anpassungsschritte durchzuführen (Teil B). Dabei kann der Anwender entweder in einer Bildebene eine Achse wie z.B. 215 an eine anatomische Landmarke, wie z.B. Jochbögen, Augenhöhle oder Innenohrbereiche anlegen, oder eine Ebene, die auf der Bildebene senkrecht steht, da im Schnittbild diese Ebene als Linie erscheint.

Teil A:
- 1) 3D Imaging (Bildgebung): In einem ersten Schritt kann die Bilderzeugung eines 3D Bildes eines Körperteils erfolgen, z.B. eines Kopfes eines Patienten.
- 2) Erzeugung digitaler Daten: Durch die Verarbeitung der Bilder kann in einem zweiten Schritt ein digitaler bzw. virtueller 3D Körper erzeugt werden.
- 3) Visualisierung: In einem dritten Schritt können Schnittbilder dieses 3D Körpers angezeigt werden.
- 4) Identifizierung anatomischer Landmarken: In einem vierten Schritt können in geeignet gewählten Schnittbildern Landmarken der knöchernen Strukturen identifiziert werden.
- 5) Definition der transversalen Richtung: In einem fünften Schritt kann mindestens eine transversale Richtung definiert werden, die bspw. zwei symmetriegebende Landmarken verbindet. Das kann durch eine Achse geschehen oder durch eine Ebene und eine dazu gekreuzte zweite Ebene.
- 6) Definition der Richtung der Sagittalebne: In einem sechsten Schritt kann die Definition der Lage der Sagittalebenen (Sm) erfolgen, deren dazu orthogonal stehende Normale die Transversalachse ist.
- 7) Ermitteln des Mittelpunkts: In einem siebten Schritt kann die Mitte 211 zwischen geeigneten Landmarken bestimmt werden, um die mediane Sagittalebene Sm des oberen Gesichtsschädels genau festlegen zu können. Dies kann nicht ganz eindeutig sein bzw. gewisse Freiheitsgrade bieten, weil der Schädel im hinteren Bereich oft eine um bis zu 2 Grad andere Ausrichtung hat als im vorderen oberen Gesichtsschädel.
- 8) Ermitteln der Lage der medianen (mittleren) Sagittalebene Sm: In einem achten Schritt kann die mediane Sagittalebene Sm festgelegt werden, durch den in dem siebten Verfahrensschritt bestimmte Mitte und die sich auf Grund der bereits festgelegten Transversalrichtung ergebenden Orthogonalität.
- 9) Andere Ansichten prüfen: In einem optionalen neunten Schritt oder einer Vielzahl solcher Schritte können andere Schnittbilddarstellungen eingenommen werden, um Positionen und Richtungen zu kontrollieren oder andere Aufgaben und Fragen zu erledigen.

Die Reihenfolge der Schritte im Teil A kann verändert werden, solange das Ergebnis darin besteht, dass mit Hilfe der anatomischen Landmarken die Orientierung der Sagittalebene definiert wird.

Es kann für den Teil B die folgende 3D (drei dimensional) Strukturmarkierung (kurz Marker oder Ruler) verwendet werden, die mindestens drei Ebenenpakete enthalten kann:
- 1) Ein Ebenenpaket, das mehrere zueinander parallele Transversalebenen enthält,
- 2) Ein Ebenenpaket, das mehrere zueinander parallele Frontalebenen enthält, und
- 3) Mindestens ein Ebenenpaket, das mehrere zueinander parallele Sagittalebenen enthält, z.B. ein linkes Sagittalebenenpaket und ein rechtes Sagittalebenenpaket.

Die bekannte Fibonacci-Folge bzw. Fibonacci-Reihe lautet: 3, 5, 8, 13, 21 etc., d.h. nächstes Glied der Reihe ist die Summe der beiden vorherigen Glieder. Diese Folge kann zum Festlegen der Abstände der jeweiligen Ebenen in den drei Ebenenpaketen verwendet werden, indem beispielsweise die ersten beiden Ebenen einen Abstand von 3 mm zueinander haben, die zweite Ebene und die dritte Ebene einen Abstand von 5 mm haben, die dritte Ebene und die vierte Ebene einen Abstand von 8 mm, usw.

Teil B:
- 1) Ergänzen des 3D Markers: In einem ersten Schritt kann die 3D Strukturmarkierung in den 3D Bildraum eingebracht und eingeblendet, so dass man sie in der Anzeige sieht. Die Ebenenpakete erscheinen nun als parallele Linien.
- 2) Ausrichten des 3D Markes an der medialen Sagittalebene Sm: In einem zweiten Schritt kann die Strukturmarkierung mit ihrer inneren Sagittal-Ebenenstruktur senkrecht zur Transversalachse der knöchernen Strukturen ausgerichtet werden.
- 3) Translation des 3D Markers: In einem davon unabhängigen dritten Schritt 830 kann die 3D Strukturmarkierung auf einen Ankerpunkt in der medianen Sagittalebene gelegt werden, in einem Ausführungsbeispiel bspw. mit dem Kreuzungspunkt der Linien bzw. Ebenen T3 (dritte Transversalebene) und F5 (fünfte Frontalebene) in der medianen Sagittalebene Sm auf den Basions-Punkt BP des Foramen Magnum.
- 4) Rotation des 3D Markers: In einem vierten Schritt kann die 3D Strukturmarkierung durch Drehung (Rotation) um eine zur Transversalachse parallele Achse so orientiert werden, dass im Sagittalschnittbild die Transversalebenen in Richtung einer Verbindungslinie verlaufen, die bspw. der Richtung der Achse BP-GP (Gaumenpunkt) folgt. Im Ausführungsbeispiel kann die Drehung um einen Fixpunkt herum erfolgen, auf dem der Kreuzungspunkt T3 und F5 liegt. Die Drehung bringt die Linie T3 in eine solche Position, dass sie durch die beiden Ankerpunkte, z.B. Basions-Punkt BP und Gaumenpunkt (GP) verläuft. Damit ist die 3D Strukturmarkierung 500 im Winkel ausgerichtet.
- 5) Skalierung des 3D Markers: In einem fünften Schritt kann die Größe der 3D Strukturmarkierung durch lineare Skalierung des Markers bzw. der 3D Strukturmarkierung so angepasst werden, dass eine Frontallinie durch einen geeignet gewählten Ankerpunkt 601 verläuft. Im Ausführungsbeispiel ist das der Ankerpunkt 601 der Nasen-Punkt NP (Nasionspunkt). Die individuell richtige Skalierungsgröße ist im Ausführungsbeispiel erreicht, wenn die Frontallinie F1 und damit die Frontalebene durch den Nasen-Punkt bzw. Nasions-Punkt NP verläuft.
- 6) Analyse der Symmetrie: In einem nachfolgenden optionalen sechsten Schritt kann nun optional die Symmetrie und die Harmonie der Proportionen im Körperteil analysiert werden. Dabei können sich oft Verkippungen zeigen, z.B. der Kiefer und der aktuellen Kauebene.
- 7) Festlegen der idealen Kauebene: In einem weiteren siebten Schritt kann bspw. die erste Transversalebene (T1) als idealisierte Okklusionsebene bzw. idealisierte Kauebene verwendet werden, um z.B. Zahnersatz oder Vorrichtungen danach auszurichten. Die erste Transversalebene 501.1 (T1) kann durch den Inzisalpunkt bzw. Inzisalpunkt IP verlaufen, d.h. den Berührungspunkt der Schneidkanten der beiden unteren mittleren Schneidezähne, was insbesondere durch das Verwenden der Fibonacci-Folge erreicht werden kann. Im Fall von trennbaren Vorrichtungen mit Oberteil und Unterteil kann besonders bevorzugt die Trennebene zwischen den beiden Teilen als Trenn-Gleit-Ebene ausgeführt werden, d.h. bspw. ohne Retentionen (Überstände) und mit sehr geringer Reibung und/oder Rauheit, z.B. kleiner als 5 Mikrometer. Die Position der Trenn-Gleit-Ebene kann im digitalen bzw. virtuellen 3D Raum bei Planung und Formgebung der Vorrichtung möglichst genau auf die Position der idealisierten Okklusionsebene gelegt werden oder auch auf eine dazu parallele Ebene, falls sich die idealisierte Kauebene aus medizinischen oder anderen Gründen nicht verwenden lässt oder nicht verwendet werden soll.

Die Reihenfolge der Schritte im Teil B kann verändert werden.

In einem sich nach dem Festlegen der idealisierten Kauebene folgenden Teil C kann unabhängig von dem zur Festlegung der Kauebene verwendeten Verfahren, wie folgt vorgegangen werden, um eine Trainingsvorrichtung oder mehrere Trainingsvorrichtungen in einer Serie aus Vorrichtungen herzustellen:
- In einem nach dem siebten Verfahrens-Schritt folgenden achten Schritt kann der Freiraum für die Zähne und oder Zahnimplantate der oberen und unteren Zahnbögen geschaffen werden, so dass die Vorrichtung später genau auf die individuellen Zahnbögen passt, ohne zu klemmen oder das Zahnfleisch zu verletzen. Dabei können Subtraktionsoperation eingesetzt werden. Auch der Randspalt kann berücksichtigt werden.
- In einem achten Schritt kann durch die Fertigstellung der digitalen Form im achten Schritt mit geplantem Formschluss bspw. nur an bestimmten Auflagepunkten zwischen Vorrichtungen und Zahnbogen eine exakte Definition der Position der Vorrichtung mit ihren beiden Teilen im Mund erfolgen.
- In einem nachfolgenden neunten Schritt kann die Vorrichtung in ihren Teilen und für genau diesen individuellen Fall gefertigt werden und kann anschließend für diesen Patienten verwendet werden.

3D Marker bzw. 3D Ruler gemäß Saxler und Hornung, siehe WO 2020/141134 A1.

Anderes Verfahren kann Gesichtsmerkmale verwenden, insbesondere Gesichtsmerkmale, die den genannten knöchernen Merkmalen des Gesichtsschädels entsprechen, siehe bspw. US 2015/0265374

A1. Dadurch kann Strahlenbelastung durch Röntgen vermindert werden oder verringert.

Bei anderen Ausführungsformen kann die Kauebene mit einem anderen Verfahren bestimmt werden im Vergleich zu dem Verfahren nach Hornung (EP 3 332 731 A1) oder nach Saxler, Hornung (3D Ruler, WO 2020/141134 A1).

Das 3D Marker/Ruler Verfahren kann manuell, halbautomatisch oder automatisch durchgeführt werden, insbesondere computergestützt.

Die ermittelte Kauebene kann bei beiden Verfahren (CranioPlan, 3D Marker/Ruler) übereinstimmen, muss es aber nicht. Bei beiden Verfahren können drei Raumwinkel der Normale der Kau-Ebene zu drei Koordinatenachsen eines kartesischen Koordinatensystems und drei Lagekoordinaten bzgl. der drei Koordinatenachsen berücksichtigt werden, d.h. insgesamt 6 Parameter.

Abweichend von Ebenen kann bei dem oben "3D Marker/Ruler" genannten Verfahren trotzdem die sogenannte Spee Kurve der Okklusionsflächen der Zähne ermittelt und/oder berücksichtigt werden. In diesem Fall ergeben sich bspw. Abweichungen in der Lage von Zähnen in der Mitte des rechten Kieferknochens (Oberkiefer bzw. Unterkiefer) bzw. in der Mitte des rechten Kieferknochens (Oberkiefer bzw. Unterkiefer) wo die jeweiligen Zähne unterhalb der Kauebene angeordnet sein können.

Alternativ können andere geeignete Verfahren zum Ermitteln der Zielkauebene (Ziel-Okklusions-Ebene) verwendet werden.
Erläutert wird eine Serie 100 aus Vorrichtungen zum inkrementellen Verändern der Zahnstellung einer Person P, enthaltend mindestens zwei Vorrichtungen 10,
wobei die Vorrichtungen 10 jeweils mindestens eine Kiefervorrichtung 11, 12 enthalten,
wobei die mindestens eine Kiefervorrichtung 11, 12 so ausgelegt ist, dass Aufnahmebereiche der Kiefervorrichtung 11,12 auf einen Zahnbogen des Oberkiefers OK, 5 oder des Unterkiefers UK, 4 der Person P aufsetzbar sind,
wobei die Vorrichtungen 10 so ausgelegt sind, dass sie, wenn sie gemäß einer vorgegebenen Reihenfolge der Vorrichtungen 10 getragen werden, eine inkrementell fortschreitende Veränderung der Zahnstellung durch mechanische Wechselwirkung der Vorrichtung und mindestens eines Zahnelements, wobei die mindestens eine Kiefervorrichtung 11, 12 der ersten Vorrichtung 10.1, 10.2 an ihrer Außenseite ein erstes Verblendungselement N.I.1.2, N.IV.1.2 als Teilbereich der ersten Vorrichtung 10.1, 10.2 trägt, wobei die mindestens eine Kiefervorrichtung 11, 12 der zweiten Vorrichtung 10.n an ihrer Außenseite ein zweites Verblendungselement N.I.1.n, N.IV.1.n als Teilbereich der zweiten Vorrichtung 10 trägt,
wobei das erste Verblendungselement N.I.1.2, N.IV.1.2 an derselben Position gemäß einem Zahnschema liegt wie das zweite Verblendungselement N.I.1.n, N.IV.1.n,
wobei ein Aufnahmebereich des ersten Verblendungselementes N.I.1.2, N.IV.1.2, anders gestaltet ist und/oder eine andere Lage hat, als ein Aufnahmebereich des zweiten Verblendungselement N.I.1.n, N.IV.1.n,
wobei dieser Unterschied geeignet ist, die inkrementelle Verlagerung des Zahnelements zu bewirken, und
wobei eine frontseitige Wandstärke des zweiten Verblendungselementes N.I.1.n, N.IV.1.n von einer frontseitigen Wandstärke des ersten Verblendungselementes N.I.1.2, N.IV.1.2 abweicht.

Weiterhin wird ein Verfahren zum Entwerfen polyfunktionaler dentaler Vorrichtungen erläutert, enthaltend:
- Aufnehmen einer Start-Zahnanordnung der Zähne einer Person P in deren Oberkiefer und/oder der Zähne der Person P in deren Unterkiefer, vorzugsweise zusammen mit mindestens einer kranialen und/oder fazialen Struktur/Merkmal im Schädelbereich der Person P,
- Ermitteln mindestens einer Bezugsstruktur der Person P vor, während oder nach dem Aufnehmen, z.B. einer kranialen Bezugsstruktur
- Festlegen einer Zielzahnanordnung der Zähne des Oberkiefers OK, 5 der Person P bezüglich der Bezugsstruktur,
- Festlegen einer Zielzahnanordnung der Zähne des Unterkiefers UK, 4 der Person P bezüglich des Unterkiefers UK, 4 oder eines Zielunterkiefers UK, 4 der Person P unter Einbeziehung der Bezugsstruktur,
- basierend auf der Startzahnanordnung und der Zielzahnanordnung, bzw. einer Zielform und/oder Ziellage des Zielunterkiefers, Bereitstellen einer Datensatzserie aus gemäß einer Reihenfolge aufeinanderfolgenden digitalen Datensatzgruppen, z.B. Datensatzpaare mit jeweils einem Datensatz für die Zähne des Oberkiefers OK, 5 und/oder einem Datensatz für die Zähne des Unterkiefers UK, 4.

Die Zielzahnanordnung kann als Basis für die Herstellung mindestens einer Zahnblende, z.B. einer Frontzahnblende N.I.1.2, N.IV.1.2 verwendet werden. Die mindestens eine Front-Zahnblende N.I.1.2, N.IV.1.2 kann den an dieser Zahnposition liegenden Zahn in einem Zielzahnzustand oder in einer Vergrößerung des Zielzahnzustandes darstellen. Die mindestens eine Front-Zahnblende N.I.1.2, N.IV.1.2 kann für den Entwurf mindestens einer Vorrichtung oder mehrerer Vorrichtungen einer Serie 100 von Vorrichtungen zum inkrementellen Verändern der Zahnstellung der Person P verwendet werden, wobei sich die mindestens eine Vorrichtung oder die mehreren Vorrichtungen von einer letzten Vorrichtung der Serie 100 unterscheiden können.

Die Ausführungsbeispiele sind nicht maßstabsgetreu und nicht beschränkend. Abwandlungen im Rahmen des fachmännischen Handelns sind möglich. Obwohl die Erfindung im Detail durch das bevorzugte Ausführungsbeispiel näher illustriert und beschrieben worden ist, ist die Erfindung nicht durch die offenbarten Beispiele eingeschränkt und andere Variationen können vom Fachmann hieraus abgeleitet werden, ohne den Schutzumfang der Erfindung zu verlassen.

Die in der Einleitung genannten Weiterbildungen und Ausgestaltungen können untereinander kombiniert werden. Die in der Figurenbeschreibung genannten Ausführungsbeispiele können ebenfalls untereinander kombiniert werden. Weiterhin können die in der Einleitung genannten Weiterbildungen und Ausgestaltungen mit den in der Figurenbeschreibung genannten Ausführungsbeispielen kombiniert werden.

## Patentansprüche

1. Serie (100) aus Vorrichtungen zum inkrementellen Verändern der Zahnstellung einer Person (P), enthaltend mindestens zwei Vorrichtungen (10),
wobei die Vorrichtungen (10) jeweils mindestens eine Kiefervorrichtung (11, 12) enthalten,
wobei die Kiefervorrichtung (11,12) Vorrichtungselemente enthält,
wobei die Vorrichtungselemente jeweils mindestens einen Aufnahmebereich für Zahnelemente enthalten, wobei die mindestens eine Kiefervorrichtung (11, 12) so ausgelegt ist, dass die Aufnahmebereiche der Kiefervorrichtung (11,12) auf einen Zahnbogen des Oberkiefers (OK, 5) oder des Unterkiefers (UK, 4) der Person (P) aufsetzbar sind,
wobei die Vorrichtungen (10) so ausgelegt sind, dass sie, wenn sie gemäß einer vorgegebenen Reihenfolge der Vorrichtungen (10) getragen werden, eine inkrementell fortschreitende Veränderung der Zahnstellung durch mechanische Wechselwirkung der Vorrichtung und mindestens eines Zahnelements in dem Zahnbogen bewirken,
wobei die mindestens eine Kiefervorrichtung (11, 12) einer ersten Vorrichtung (10.1, 10.2) an ihrer Außenseite ein erstes Verblendungselement (N.I.1.2, N.IV.1.2) als Teilbereich der ersten Vorrichtung (10.1, 10.2) trägt,
wobei die mindestens eine Kiefervorrichtung (11, 12) einer zweiten Vorrichtung (10.n) an ihrer Außenseite ein zweites Verblendungselement (N.I.1.n, N.IV.1.n) als Teilbereich der zweiten Vorrichtung (10) trägt,
wobei die mindestens eine Kiefervorrichtung (11, 12) einer dritten Vorrichtung (10.n) an ihrer Außenseite ein drittes Verblendungselement (N.I.1.n, N.IV.1.n) als Teilbereich der dritten Vorrichtung (10) trägt,
wobei alle drei Verblendungselemente (N.I.1.2, N.IV.1.2) an derselben Position gemäß einem Zahnschema liegen,
wobei es in einem ersten transversalen Querschnitt am ersten Verblendungselement eine erste Außenkontur und eine erste Innenkontur gibt,
wobei es in einem dem ersten transversalen Querschnitt entsprechenden zweiten transversalen Querschnitt am zweiten Verblendungselement eine zweite Außenkontur und eine zweite Innenkontur gibt,
wobei es vorzugsweise in einem dem ersten transversalen Querschnitt entsprechenden dritten transversalen Querschnitt am dritten Verblendungselement eine dritte Außenkontur und eine dritte Innenkontur gibt, **dadurch gekennzeichnet,**
**dass** sich die relative Lage der jeweiligen Innenkontur zur jeweiligen Außenkontur von dem ersten Verblendungselement über das zweite Verblendungselement und vorzugsweise zum dritten Verblendungselement hin inkrementell fortschreitend ändert.

2. Serie (100) nach Anspruch 1, wobei das mindestens eine erste Verblendungselement (N.I.1.2, N.IV.1.2) und das mindestens eine zweite Verblendungselement (N.I.1.n, N.IV.1.n) in der Lage und/oder der Form ihrer frontseitigen Außenkontur im Wesentlichen übereinstimmen,
wobei vorzugsweise die frontseitige Außenkontur an das an dieser Zahnposition liegende Zahnelement in seinem Zielzahnzustand oder in einem Zwischen-Zielzahnzustand angepasst ist, wie er in einer finalen Versorgung des Zahnelementes angestrebt ist, oder in mindestens einer Dimension eine Vergrößerung des Zielzahnzustandes oder Zwischen-Zielzahnzustand darstellt.

3. Serie (100) nach Anspruch 1 oder 2, wobei das der in dem ersten Verblendungselement (N.I.1.2, N.IV.1.2) enthaltene Aufnahmebereich bewirkt, dass an den Zähnen der Person (P) in einem von vorn verdeckten Bereich Alignment-Funktionen (210) von Zähnen und Verschiebe-Funktionen (220) bezogen auf mindestens einen Zahnbogen der Person (P) angewendet werden, um den mindestens einen Zahnbogen der Person (P) in eine neue Konstellation zu bringen, während die von vorn sichtbare Position des mindestens einen Verblendungselement (N.I.1.2, N.IV.1.2) gleich bleibt oder sich nur unwesentlich ändert, vorzugsweise im Verlauf der gesamten Serie (100) oder in einem Teilbereich der Serie (100), der mindestens 20 Prozent der Vorrichtungen der Serie (100) enthält, mit einer Gesamtabweichungen kleiner als 0,6 mm oder kleiner als 0,4 mm, und
vorzugsweise während im von vorn verdeckten Bereich an Aufnahmebereichen und/oder Aussparungen für die Zähne in den Vorrichtungen (10) die inkrementellen Veränderungen ausgeführt werden.

4. Serie (100) nach einem der Ansprüche 1 bis 3, wobei zumindest in einem Teil der Vorrichtungen (10) in den Backenzahnbereichen der Oberkiefervorrichtung (11) und/oder der Unterkiefervorrichtung (12) eine Kombination aus Aufbauten mit Höhen-Funktion (250) und Aufbauten mit Gleit-Funktion (260) und/oder eine Kombination aus Aufbauten mit Höhen-Funktion (250) und Aufbauten mit Oberkiefer-Unterkiefer-Relativpositionierungs-Funktion oder mit Rampen-Funktion (270) so ausgeformt sind, dass sie eine Verlagerung der Kontaktebene und der zukünftigen Kauebene relativ zum Ausgangszustand der Behandlung und insbesondere eine craniale und/oder faziale Optimierung des Kauapparates erreichen, wobei die Aufbauten eine Schichtdicke und/oder Höhe zu einer okklusaler Fläche hin haben, die mindestens 2 mm, mindestens 3 mm oder mindestens 4 mm beträgt.

5. Serie (100) nach einem der Ansprüche 1 bis 4, wobei mindestens ein Teil der Vorrichtungen (10) an zumindest einem Teil der von vorn sichtbaren Verblendungselemente (N.I.1.2, N.IV.1.2) der Vorrichtungen (10) eine Farbgebung aufweist, wobei die Farbgebung vorzugsweise als Effekt der Materialauswahl erreicht wird oder durch eine vorzugsweise lackartige Beschichtung der äußeren Materiallage der Vorrichtungen (10) des mindestens einen Teils der Vorrichtungen (10), und wobei die Farbgebung einen Weißanteil und/oder einen Gelbanteil enthält.

6. Serie (100) nach einem der Ansprüche 1 bis 5, wobei mindestens eine Vorrichtung (10) der Serie (100), vorzugsweise eine Vorrichtung (10) der ersten 20 Prozent der Serie (100), jeweils mindestens ein Verblendungselement (N.I.1.2, N.IV.1.2) aufweisen, welche die Zähne und/oder Zahnstümpfe der Person (P) im von vorn sichtbaren Bereich ganz oder größtenteils verdecken, um dahinter im verdeckten Bereich an diesen Zähnen und/oder Zahnstümpfen Verlagerungen vorzunehmen, die vorzugsweise schrittweise aus Superpositionen von Translation und Rotation bestehen, um die Zähne und/oder Zahnstümpfe im verdeckten Bereich zu der Zielposition hinzuführen, während die Verdeckung diese Prozesse von vorn gesehen verdeckt.

7. Serie (100) nach einem der Ansprüche 1 bis 6, wobei mindestens ein Teil der Vorrichtungen (10) so ausgebildet ist, dass im Backenzahnbereich der Person (P) zuerst einen Höhenaufbau mittels einer Höhen-Funktion (250) vorgenommen wird, wobei der Höhenaufbau geeignet ist, den Abstand des Unterkiefers (UK, 4) vom Oberkiefer (OK, 5) im Kontaktbiss zu erhöhen und dabei zu einer Deblockade von zuvor blockierten Zahnverlagerungen zu führen, und
wobei mindestens ein weiterer Teil der Vorrichtungen (10) so ausgebildet ist, dass dieser durch die Höhen-Funktionen (250) erreichten Deblockade folgend eine Zahnverlagerung von Zähnen der Person (P) durch Aligner-Funktionen (210) als Teil der nachfolgenden Vorrichtungen (10.n) und/oder eine Veränderung des Zahnbogens der Person (P) durch Verschiebe-Funktionen (220) als zusätzlicher Teil der nachfolgenden Vorrichtungen (10.n) folgt.

8. Serie (100) nach einem der Ansprüche 1 bis 7, wobei in mindestens einem Teil der Vorrichtungen (10) zusätzlich zu Alignment-Funktionen (210) und oder Verschiebe-Funktionen (220) auch Höhen-Funktionen (250) mit Gleit-Funktionen (260) kombiniert sind, so dass zumindest ein Teil der Vorrichtungen (10) Gleitflächen rechts und links aufweisen, die zumindest bereichsweise glatt und/oder nicht verschlüsselt sind, so dass sie in diesem Bereich bei Ausübung einer aktiven Kontaktkraft durch den Träger der Vorrichtung (10) zu einem neuromuskulären Stabilisierungsbedarf des Unterkiefers (UK, 4) relativ zum Oberkiefer (OK, 5) führen.

9. Serie (100) nach einem der Ansprüche 1 bis 8, wobei in mindestens einem Teil der Vorrichtungen (10) zusätzlich zu einzelne Zähne der Person (P) betreffenden Alignment-Funktionen (210) und/oder den Zahnbogen der Person (P) betreffenden Verschiebe-Funktionen (220) auch Rampen-Funktionen (270), integriert sind, die geeignet sind, infolge der lokal betrachtet schiefen Ebene an mindestens einer Rampe, unter Kontaktkraft zwischen Unterkiefer (UK, 4) und Oberkiefer (OK, 5) eine laterale Reaktionskraft zu erzeugen, die den Unterkiefer (UK, 4) relativ zum Oberkiefer (OK, 5) mindestens in eine der kombinierten transversalen Richtungen rechts-links und/oder hinten-vorne bewegt.

10. Serie (100) nach einem der Ansprüche 1 bis 9, wobei die letzte Vorrichtung (10.x) der Serie (100) so ausgebildet ist, das eine möglichst genaue oder eine Abbildung der geplanten finalen Versorgung (300) erreicht wird, wobei die Abbildung der finalen Versorgung zumindest im sichtbaren Frontzahnbereich durch Front-Verblendungselemente oder Zahnblenden (N.I.1.2, N.IV.1.2) erfolgt, die vorzugsweise entsprechend der geplanten finalen Versorgung (300) geformt und optional entsprechend der geplanten finalen Versorgung (300) mittels Farb-Funktionen (240) dental coloriert sind,
wobei vorzugsweise die Front-Verblendungselemente oder Zahnblenden (N.I.1.2, N.IV.1.2) provisorisch sind und vorzugsweise in der finalen Versorgung (300) durch eine festsitzende Versorgung ersetzt werden.

11. Serie (100) nach einem der Ansprüche 1 bis 10, wobei die letzte Vorrichtung (10x) der Serie (100) so ausgebildet ist, dass eine möglichst genaue Abbildung der geplanten finalen Versorgung (300) der Zähne der Person (P) erreicht wird, wobei die Abbildung der finalen Versorgung zumindest im Backenzahnbereich durch Backenzahn-Elemente, insbesondere Backenzahn-Verblendungselemente erfolgt, die entsprechend der geplanten finalen Versorgung (300) eine Kauflächengeometrie und eine Orientierung der Kaufläche aufweisen, die anhand einer cranialen Geometrie und/oder Anatomie des Schädels der Person (P).

12. Serie (100) nach einem der Ansprüche 1 bis 8, wobei in mindestens einem Teil der Vorrichtungen (10) mindestens ein Höhenprofilelement an okklusalen Flächen vorhanden ist, wobei eine Höhe des Höhenprofilelementes im Vergleich zu der Höhe an anderen okklusalen Flächen derselben Oberkiefervorrichtung (11) oder derselben Unterkiefervorrichtung (12) mindestens doppelt so hoch ist, wobei die Höhe im Bereich des Höhenprofilelementes vorzugsweise größer als 2 mm oder größer als 3 mm oder größer als 4 mm ist, und
wobei das Höhenprofilelement vorzugsweise in der ersten Vorrichtung (10) und/oder in mindestens einer Vorrichtung (10) der ersten 20 Prozent der Vorrichtungen der Serie (100) vorhanden ist.

13. Serie (100) nach Anspruch 12, wobei es in derselben Oberkiefervorrichtung (11) oder derselben Unterkiefervorrichtung (12) links und rechts Höhenprofilelemente mit voneinander unterschiedlicher Höhe an gleichen Backenzahnpositionen gibt,
wobei der Höhenunterschied vorzugsweise mindestens 1 mm, mindestens 2 mm oder mindestens 3 mm beträgt.

14. Serie (100) nach einem der vorhergehenden Ansprüche, wobei die ersten Vorrichtung (10.1, 10.2), eine erste Frontzahnblende (N.I.1.2, N.IV.1.2) enthält,
wobei die erste Frontzahnblende (N.I.1.2, N.IV.1.2) der ersten Vorrichtung (10.1, 10.2) an eine erste Aussparung (A.I.1.2, A.IV.1.2) für einen Frontzahn (Z.I.1, Z.IV.1.2) der Person (P) angrenzt,
wobei die zweite Vorrichtung (10.n) eine erste Frontzahnblende (N.I.1.n, N.IV.1.n) enthält,
wobei die erste Frontzahnblende (N.I.1.n, N.IV.1.n) der zweiten Vorrichtung (10.n) an eine erste Aussparung (A.I.1.n, A.IV.1.n) für denselben Frontzahn (Z.I.1, Z.IV.1.2) der Person (P) angrenzt, wobei zumindest die labiale Außenflächen der ersten Frontzahnblende (N.I.1.2, N.IV.1.2) der ersten Vorrichtung (10.1, 10.2) gleich der labialen Außenflächen der ersten Frontzahnblende (N.I.1.n, N.IV.1.n) der zweiten Vorrichtung (10.n) ist oder nur unwesentlich anders als diese Außenfläche gestaltet ist, wobei die erste Aussparung (A.I.1.2, A.IV.1.2) der ersten Frontzahnblende (N.I.1.2, N.IV.1.2) eine erste Position bezüglich der labialen Außenfläche der ersten Frontzahnblende (N.I.1.2, N.IV.1.2) hat,
wobei die erste Aussparung (A.I.1.n, A.IV.1.n) der zweiten Frontzahnblende (N.I.1.n, N.IV.1.n) eine zweite Position bezüglich der labialen Außenfläche der zweiten Frontzahnblende (N.I.1.n, N.IV.1.n) hat, und wobei sich die erste Position bezüglich der zweiten Position aufgrund der Translation eines Zahns der Person (P) entlang einer vorn-hinten Achse bezüglich des Kopfes der Person (P) unterscheidet, wobei die erste Frontzahnblende (N.I.1.2, N.IV.1.2) der ersten Vorrichtung (10.1, 10.2) eine erste Materialdicke in labialer Richtung hat,
wobei die erste Frontzahnblende (N.I.1.n, N.IV.1.n) der zweiten Vorrichtung (10.n) eine zweite Materialdicke in labialer Richtung hat, vorzugsweise gemessen an der gleichen Position in der zweiten Vorrichtung bezogen auf die Messposition der ersten Materialdicke in der ersten Vorrichtung, und wobei die erste Materialdicke von der zweiten Materialdicke um mindestens 20 Prozent oder um mindestens 50 Prozent abweicht.

15. Herstellungsverfahren zum Herstellen einer Serie nach einem der Ansprüche 1 bis 14,
wobei ein subtraktives Fertigungsverfahren zum Herstellen der Serie (100) aus Vorrichtungen oder aus Vorrichtungspaaren (10.1 bis 10.n) oder zumindest zum Herstellen eines Teils der Vorrichtungen verwendet wird,
wobei vorzugsweise ein subtraktiv spanabhebendes Verfahren verwendet wird, insbesondere Fräsen, oder
wobei ein additives Fertigungsverfahren zum Herstellen der Serie (100) aus Vorrichtungen oder aus Vorrichtungspaaren (10.1 bis 10.n) oder zumindest zum Herstellen eines Teils der Vorrichtungen verwendet wird, insbesondere 3D Druck,
wobei in mindestens einer Vorrichtung oder in mindestens einem Vorrichtungspaar Hinterschneidungen und/oder bezogen auf eine Höhenrichtung im Zentrum von okklusalen Flächen derselben Vorrichtung, insbesondere desselben Vorrichtungsteils, Materialschichtdickenunterschiede von mehr als 2 mm oder von mehr als 4 mm realisiert sind.

## Claims

1. Series (100) of devices for incrementally changing the position of the teeth of a person (P),
said series (100) comprising at least two devices (10), wherein the devices (10) each comprise at least one jaw device (11, 12),
wherein the jaw device (11, 12) comprises device elements, wherein the device elements each comprise at least one receiving region for tooth elements,
wherein the at least one jaw device (11, 12) is designed in such a way that the receiving regions of the jaw device (11, 12) can be placed on a dental arch of the upper jaw (OK, 5) or of the lower jaw (UK, 4) of the person (P),
wherein the devices (10) are designed in such a way that, when they are worn according to a predefined sequence of the devices (10), they bring about an incrementally progressive change in the position of the teeth by mechanical interaction between the device and at least one tooth element in the dental arch, wherein the at least one jaw device (11, 12) of a first device (10.1, 10.2) bears on its outer side a first veneering element (N.I.1.2, N.IV.1.2) as part of the first device (10.1, 10.2), wherein the at least one jaw device (11, 12) of a second device (10.n) bears on its outer side a second veneering element (N.I.1.n, N.IV.1.n) as part of the second device (10),
wherein the at least one jaw device (11, 12) of a third device (10.n) bears on its outer side a third veneering element (N.I.1.n, N.IV.1.n) as part of the third device (10),
wherein all three veneering elements (N.I.1.2, N.IV.1.2) lie at the same position according to a dental scheme, wherein, in a first transverse cross section, on the first veneering element there are a first outer contour and a first inner contour,
wherein, in a second transverse cross section, corresponding to the first transverse cross section, on the second veneering element there are a second outer contour and a second inner contour,
wherein, preferably, in a third transverse cross section, corresponding to the first transverse cross section, on the third veneering element there are a third outer contour and a third inner contour, **characterized**
**in that** the relative position of the respective inner contour in relation to the respective outer contour incrementally changes progressively from the first veneering element via the second veneering element and preferably to the third veneering element.

2. Series (100) according to claim 1, wherein the at least one first veneering element (N.I.1.2, N.IV.1.2) and the at least one second veneering element (N.I.1.n, N.IV.1.n) substantially coincide in the position and/or the shape of their frontal outer contour,
Wherein, preferably, the frontal outer contour is adapted to the tooth element lying at this tooth position in its target tooth state or in an intermediate target tooth state, as aimed for in a final restoration of the tooth element, or represents an increase of the target tooth state or intermediate target tooth state in at least one dimension.

3. Series (100) according to claim 1 or 2, wherein the receiving region contained in the first veneering element (N.I.1.2, N.IV.1.2) has the effect that alignment functions (210) of teeth and displacement functions (220) with respect to at least one dental arch of the person (P) are used on the teeth of the person (P) in a region concealed from the front in order to bring the at least one dental arch of the person (P) into a new constellation, while the position of the at least one veneering element (N.I.1.2, N.IV.1.2) that is visible from the front remains the same or only changes insignificantly, preferably with overall deviations of less than 0.6 mm or less than 0.4 mm in the course of the entire series (100) or in part of the series (100) that comprises at least 20 percent of the devices of the series (100), and
preferably while in the region concealed from the front the incremental changes are carried out at receiving regions and/or recesses for the teeth in the devices (10).

4. Series (100) according to any one of claims 1 to 3, wherein, at least in some of the devices (10), in the molar teeth regions of the upper jaw device (11) and/or of the lower jaw device (12) a combination of superstructures with a height function (250) and superstructures with a sliding function (260) and/or a combination of superstructures with a height function (250) and superstructures with a upper-jaw/lower-jaw relative positioning function or with a ramp function (270) are shaped in such a way that they achieve a displacement of the contact plane and the future masticatory plane relative to the initial state of the treatment, and in particular a cranial and/or facial optimization of the masticatory apparatus, wherein the superstructures have a layer thickness and/or height to an occlusal surface that is at least 2 mm, at least 3 mm or at least 4 mm.

5. Series (100) according to any one of claims 1 to 4, wherein at least some of the devices (10) have a colouration on at least some of the veneering elements (N.I.1.2, N.IV.1.2) of the devices (10), which veneering elements (N.I.1.2, N.IV.1.2) are visible from the front, wherein the colouration is preferably achieved as an effect of the material selection or by a preferably varnish-like coating of the outer material layer of the devices (10) of at least some of the devices (10), and wherein the colouration comprises a white component and/or a yellow component.

6. Series (100) according to any one of claims 1 to 5, wherein at least one device (10) of the series (100), preferably a device (10) of the first 20 percent of the series (100), has in each case at least one veneering element (N.I.1.2, N.IV.1.2) which entirely or mostly cover(s) the teeth and/or tooth stumps of the person (P) in the region that is visible from the front, in order to perform behind that, in the concealed region, on these teeth and/or tooth stumps displacements which preferably comprise step by step superpositions of translation and rotation in order to guide the teeth and/or tooth stumps in the concealed region to the tooth position, while the concealment conceals these processes from the front.

7. Series (100) according to any one of claims 1 to 6, wherein at least some of the devices (10) are designed in such a way that, in the molar teeth region of the person (P), first a height superstructure is performed by means of a height function (250), wherein the height superstructure is suitable for increasing the distance of the lower jaw (UK, 4) from the upper jaw (OK, 5) in the contact bite and leading thereby to an unblocking of previously impacted tooth displacements, and
wherein at least some other of the devices (10) are designed in such a way that, following this unblocking achieved by the height functions (250), a tooth displacement of teeth of the person (P) by alignment functions (210) follows as part of the subsequent devices (10.n) and/or a change of the dental arch of the person (P) by displacement functions (220) follows as an additional part of the subsequent devices (10.n).

8. Series (100) according to any one of claims 1 to 7, wherein, in at least some of the devices (10), in addition to alignment functions (210) and/or displacement functions (220), also height functions (250) are combined with sliding functions (260) such that at least some of the devices (10) have sliding surfaces on the right and left, which at least in some regions are smooth and/or not encoded so that, when an active contact force is exerted by the wearer of the device (10), in this region they lead to a need for neuromuscular stabilization of the lower jaw (UK, 4) relative to the upper jaw (OK, 5).

9. Series (100) according to any one of claims 1 to 8, wherein, in at least some of the devices (10), in addition to alignment functions (210) concerning individual teeth of the person (P) and/or displacement functions (220) concerning the dental arch of the person (P), there are also integrated ramp functions (270) which, as a result of the locally considered inclined plane, are suitable for producing on at least one ramp, under contact force between the lower jaw (UK, 4) and the upper jaw (OK, 5), a lateral reaction force which moves the lower jaw (UK, 4) relative to the upper jaw (OK, 5) at least in one of the combined transverse directions right-left and/or back-front.

10. Series (100) according to any one of claims 1 to 9, wherein the last device (10.x) of the series (100) is designed in such a way that a most accurate possible or a replication of the planned final restoration (300) is achieved, wherein the replication of the final restoration at least in the visible front teeth region takes place by means of front veneering elements or tooth veneers (N.I.1.2, N.IV.1.2), which are preferably shaped in accordance with the planned final restoration (300) and are optionally dentally coloured in accordance with the planned final restoration (300) by means of colour functions (240),
wherein preferably the front veneering elements or tooth veneers (N.I.1.2, N.IV.1.2) are provisional and are preferably replaced in the final restoration (300) by a fixed restoration.

11. Series (100) according to any one of claims 1 to 10, wherein the last device (10x) of the series (100) is designed such that a most accurate possible replication of the planned final restoration (300) of the teeth of the person (P) is achieved, wherein the replication of the final restoration at least in the molar teeth region takes place by means of molar teeth elements, in particular molar-teeth veneering elements, which in accordance with the planned final restoration (300) have an masticatory surface geometry and orientation of the masticatory surface which based on a cranial geometry and/or anatomy of the skull of the person (P).

12. Series (100) according to any one of claims 1 to 8, wherein, in at least some of the devices (10), at least one height profile element is present on occlusal surfaces, wherein a height of the height profile element is at least twice as high in comparison with the height on the other occlusal surfaces of the same upper jaw device (11) or the same lower jaw device (12),
wherein the height in the region of the height profile element is preferably greater than 2 mm or greater than 3 mm or greater than 4 mm, and
wherein the height profile element is preferably present in the first device (10) and/or at least one device (10) of the first 20 percent of the devices of the series (100).

13. Series (100) according to claim 12, wherein, in the same upper jaw device (11) or the same lower jaw device (12), there are to the left and right height profile elements with heights that differ from one another at the same molar teeth positions, wherein the difference in height is preferably at least 1 mm, at least 2 mm or at least 3 mm.

14. Series (100) according to any one of the preceding claims, wherein the first device (10.1, 10.2) comprises a first front tooth veneer (N.I.1.2, N.IV.1.2),
wherein the first front tooth veneer (N.I.1.2, N.IV.1.2) of the first device (10.1, 10.2) adjoins a first recess (A.I.1.2, A.IV.1.2) for a front tooth (Z.I.1, Z.IV.1.2) of the person (P), wherein the second device (10.n) comprises a first front tooth veneer (N.I.1.n, N.IV.1.n),
wherein the first front tooth veneer (N.I.1.n, N.IV.1.n) of the second device (10.n) adjoins a first recess (A.I.1.n, A.IV.1.n) for the same front tooth (Z.I.1, Z.IV.1.2) of the person (P), wherein at least the labial outer surfaces of the first front tooth veneer (N.I.1.2, N.IV.1.2) of the first device (10.1, 10.2) are the same as the labial outer surfaces of the first front tooth veneer (N.I.1.n, N.IV.1.n) of the second device (10.n) or are made only insignificantly different than this outer surface, wherein the first recess (A.I.1.2, A.IV.1.2) of the first front tooth veneer (N.I.1.2, N.IV.1.2) has a first position with respect to the labial outer surface of the first front tooth veneer (N.I.1.2, N.IV.1.2),
wherein the first recess (A.I.1.n, A.IV.1.n) of the second front tooth veneer (N.I.1.n, N.IV.1.n) has a second position with respect to the labial outer surface of the second front tooth veneer (N.I.1.n, N.IV.1.n),
and wherein the first position differs from the second position on account of the translation of a tooth of the person (P) along a front-back axis with respect to the head of the person (P), wherein the first front tooth veneer (N.I.1.2, N.IV.1.2) of the first device (10.1, 10.2) has a first material thickness in the labial direction,
wherein the first front tooth veneer (N.I.1.n, N.IV.1.n) of the second device (10.n) has a second material thickness in the labial direction, preferably measured at the same position in the second device with respect to the measuring position of the first material thickness in the first device, and
wherein the first material thickness deviates from the second material thickness by at least 20 percent or by at least 50 percent.

15. Production method for producing a series according to any one of claims 1 to 14,
wherein a subtractive manufacturing process is used for producing the series (100) of devices or pairs of devices (10.1 to 10.n) or at least for producing some of the devices, wherein preferably a subtractive machining process is used, in particular milling, or
wherein an additive manufacturing process is used for producing the series (100) of devices or pairs of devices (10.1 to 10.n) or at least for producing some of the devices, in particular 3D printing,
wherein, in at least one device or in at least one pair of devices, undercuts are provided and/or differences in material layer thicknesses of more than 2 mm or more than 4 mm are provided with respect to a height direction at the centre of occlusal surfaces of the same device, in particular the same device part.

## Revendications

1. Série (100) de dispositifs de modification par incréments de la position des dents chez une personne (P),
contenant au moins deux dispositifs (10),
les dispositifs (10) contenant chacun au moins un dispositif de mâchoire (11, 12),
le dispositif de mâchoire (11, 12) contenant des éléments de dispositif,
les éléments de dispositif contenant chacun au moins une zone de réception d'éléments de dent,
l'au moins un dispositif de mâchoire (11, 12) étant conçu de telle sorte que les zones de réception du dispositif de mâchoire (11, 12) peuvent être placées sur une arcade dentaire de la mâchoire supérieure (OK, 5) ou de la mâchoire inférieure (UK, 4) de la personne (P),
les dispositifs (10) étant conçus de telle sorte que, lorsqu'ils sont portés selon un ordre prédéfini des dispositifs (10), ils entraînent une modification progressive par incréments de la position des dents par interaction mécanique du dispositif et d'au moins un élément de dent dans l'arcade dentaire,
l'au moins un dispositif de mâchoire (11, 12) d'un premier dispositif (10.1, 10.2) portant sur son côté extérieur un premier élément de facette (N.I.1.2, N.IV.1.2) en tant que zone partielle du premier dispositif (10.1, 10.2),
l'au moins un dispositif de mâchoire (11, 12) d'un deuxième dispositif (10.n) portant sur son côté extérieur un deuxième élément de facette (N.I.1.n, N.IV.1.n) en tant que zone partielle du deuxième dispositif (10), l'au moins un dispositif de mâchoire (11, 12) d'un troisième dispositif (10.n) portant sur son côté extérieur un troisième élément de facette (N.I.1.n, N.IV.1.n) en tant que zone partielle du troisième dispositif (10),
les trois éléments de facette (N.I.1.2, N.IV.1.2) se trouvant dans la même position selon un schéma dentaire, un premier contour extérieur et un premier contour intérieur se trouvant dans une première section transversale sur le premier élément de facette,
un deuxième contour extérieur et un deuxième contour intérieur se trouvant dans une deuxième section transversale correspondant à la première section transversale sur le deuxième élément de facette,
un troisième contour extérieur et un troisième contour intérieur se trouvant de préférence dans une troisième section transversale correspondant à la première section transversale sur le troisième élément de facette, **caractérisée en ce que**
la position relative du contour intérieur respectif par rapport au contour extérieur respectif change progressivement par incréments depuis le premier élément de facette en passant par le deuxième élément de facette et de préférence jusqu'au troisième élément de facette.

2. Série (100) selon la revendication 1, l'au moins un premier élément de facette (N.I.1.2, N.IV.1.2) et l'au moins un deuxième élément de facette (N.I.1.n, N.IV.1.n) concordant sensiblement dans la position et/ou la forme de leur contour extérieur côté antérieur,
de préférence le contour extérieur côté antérieur étant adapté à l'élément de dent situé sur ladite position de dent dans son état de dent cible ou dans un état de dent cible intermédiaire, ainsi que cela est recherché dans une restauration finale de l'élément de dent, ou représentant un allongement de l'état de dent cible ou de l'état de dent cible intermédiaire dans au moins une dimension.

3. Série (100) selon la revendication 1 ou 2, la zone de réception contenue dans le premier élément de facette (N.I.1.2, N.IV.1.2) ayant pour effet que des fonctions d'alignement (210) de dents et des fonctions de déplacement (220) sont appliquées aux dents de la personne (P) dans une zone recouverte de face par rapport à au moins une arcade dentaire de la personne (P) pour amener l'au moins une arcade dentaire de la personne (P) dans une nouvelle constellation, tandis que la position de l'au moins un élément de facette (N.I.1.2, N.IV.1.2) visible de face reste la même ou ne change que de façon négligeable, de préférence au cours de toute la série (100) ou dans une zone partielle de la série (100), qui contient au moins 20 pour cent des dispositifs de la série (100), avec un écart total inférieur à 0,6 mm ou inférieur à 0,4 mm, et
de préférence, les modifications par incréments étant exécutées dans la zone recouverte de face sur des zones de réception et/ou des évidements pour les dents dans les dispositifs (10).

4. Série (100) selon l'une des revendications 1 à 3, une combinaison de superstructures avec une fonction de hauteur (250) et de superstructures avec une fonction de coulissement (260) et/ou une combinaison de superstructures avec une fonction de hauteur (250) et de superstructures avec une fonction de positionnement relatif de mâchoire supérieure-mâchoire inférieure ou avec une fonction de rampe (270) étant formées au moins dans une partie des dispositifs (10) dans les régions des molaires du dispositif de mâchoire supérieure (11) et/ou du dispositif de mâchoire inférieure (12) de telle sorte qu'elles atteignent un déplacement du plan de contact et du futur plan de mastication par rapport à l'état initial du traitement et en particulier une optimisation crânienne et/ou faciale de l'appareil à mastiquer, les superstructures présentant une épaisseur de couche et/ou une hauteur jusqu'à une surface occlusale d'au moins 2 mm, d'au moins 3 mm ou d'au moins 4 mm.

5. Série (100) selon l'une des revendications 1 à 4, au moins une partie des dispositifs (10) comportant une coloration sur au moins une partie des éléments de facette (N.I.1.2, N.IV.1.2) visible de face des dispositifs (10), la coloration étant de préférence obtenue sous forme d'effet de la sélection de matériau ou par un revêtement de préférence de type vernis de la couche de matériau extérieure des dispositifs (10) de l'au moins une partie des dispositifs (10), et la coloration contenant une proportion de blanc et/ou une proportion de jaune.

6. Série (100) selon l'une des revendications 1 à 5, au moins un dispositif (10) de la série (100), de préférence un dispositif (10) des 20 premiers pour cent de la série (100), comportant chacun au moins un élément de facette (N.I.1.2, N.IV.1.2), lesquels recouvrent totalement ou en grande partie les dents et/ou les moignons dentaires de la personne (P) dans la zone visible de face pour réaliser derrière elles dans la zone recouverte sur lesdites dents et/ou moignons dentaires des déplacements, qui consistent de préférence progressivement en des superpositions de translation et de rotation afin de guider les dents et/ou les moignons dentaires dans la zone recouverte vers la position cible, tandis que le recouvrement recouvre lesdits processus lors qu'on les voit de face.

7. Série (100) selon l'une des revendications 1 à 6, au moins une partie des dispositifs (10) étant formée de telle sorte que, dans la région des molaires de la personne (P), une augmentation de hauteur est d'abord réalisée au moyen d'une fonction de hauteur (250), l'augmentation de hauteur étant adaptée pour augmenter la distance de la mâchoire inférieure (UK, 4) par rapport à la mâchoire supérieure (OK, 5) lors de l'occlusion et pour conduire ainsi à un déblocage de déplacements de dents précédemment bloqués, et
au moins une autre partie des dispositifs (10) étant formée de telle sorte que suite audit déblocage obtenu par les fonctions de hauteur (250), un déplacement dentaire des dents de la personne (P) par des fonctions d'alignement (210) en tant que partie des dispositifs suivants (10.n) et/ou un changement de l'arcade dentaire de la personne (P) par des fonctions de déplacement (220) en tant que partie supplémentaire des dispositifs suivants (10.n) suivent.

8. Série (100) selon l'une des revendications 1 à 7, des fonctions de hauteur (250) étant également combinées à des fonctions de glissement (260) en plus de fonctions d'alignement (210) et/ou de fonctions de déplacement (220) dans au moins une partie des dispositifs (10) de telle sorte qu'au moins une partie des dispositifs (10) comportent à droite et à gauche des surfaces de glissement, qui sont au moins par endroits lisses et/ou non cryptées, de telle sorte qu'elles mènent dans ladite région, lorsqu'une force de contact active est exercée par le support du dispositif (10), à un besoin de stabilisation neuromusculaire de la mâchoire inférieure (UK, 4) par rapport à la mâchoire supérieure (OK, 5).

9. Série (100) selon l'une des revendications 1 à 8, des fonctions de rampe (270) étant également intégrées en plus de fonctions d'alignement (210) concernant des dents individuelles de la personne (P) et/ou de fonctions de déplacement (220) concernant l'arcade dentaire de la personne (P) dans au moins une partie des dispositifs (10), lesquelles sont appropriées pour générer une force de réaction latérale sous l'effet d'une force de contact entre la mâchoire inférieure (UK, 4) et la mâchoire supérieure (OK, 5) suite au plan oblique considéré localement sur au moins une rampe, laquelle déplace la mâchoire inférieure (UK, 4) par rapport à la mâchoire supérieure (OK, 5) au moins dans une des directions transversales combinées droite-gauche et/ou arrière-avant.

10. Série (100) selon l'une des revendications 1 à 9, le dernier dispositif (10.x) de la série (100) étant formé de telle sorte qu'une aussi précise que possible ou une reproduction de la restauration finale (300) prévue est obtenue, la reproduction de la restauration finale étant effectuée au moins dans la région antérieure visible de la dent par des éléments de facette antérieurs ou des facettes dentaires (N.I.1.2, N.IV.1.2), qui sont façonnés de préférence conformément à la restauration finale (300) prévue et sont éventuellement colorés conformément à la restauration finale (300) prévue au moyen de fonctions de couleur (240) dentaires,
les éléments de facette antérieurs ou les facettes dentaires (N.I.1.2, N.IV.1.2) étant de préférence provisoires et étant de préférence remplacés par une restauration fixe dans la restauration finale (300).

11. Série (100) selon l'une des revendications 1 à 10, le dernier dispositif (10x) de la série (100) étant formé de telle sorte qu'une reproduction aussi précise que possible de la restauration finale (300) prévue des dents de la personne (P) est obtenue, la reproduction de la restauration finale étant effectuée au moins dans la région des molaires par des éléments de molaire, en particulier, des éléments de facette de molaire, lesquels présentent, conformément à la restauration finale (300) prévue, une géométrie de surface de mastication et une orientation de la surface de mastication, lesquelles basées une géométrie crânienne et/ou une anatomie du crâne de la personne (P).

12. Série (100) selon l'une des revendications 1 à 8, au moins un élément de profilé de hauteur étant présent sur des surfaces occlusales dans au moins une partie des dispositifs (10), une hauteur de l'élément de profilé de hauteur étant au moins deux fois plus importante en comparaison avec la hauteur sur d'autres surfaces occlusales du même dispositif de mâchoire supérieure (11) ou du même dispositif de mâchoire inférieure (12), la hauteur dans la zone de l'élément de profilé de hauteur étant de préférence supérieure à 2 mm ou supérieure à 3 mm ou supérieure à 4 mm, et
l'élément de profilé de hauteur étant de préférence présent dans le premier dispositif (10) et/ou dans au moins un dispositif (10) des premiers 20 pour cent des dispositifs de la série (100).

13. Série (100) selon la revendication 12, des éléments de profilé de hauteur avec des hauteurs différentes les uns des autres sur les mêmes positions de molaire étant présents à gauche et à droite dans le même dispositif de mâchoire supérieure (11) ou le même dispositif de mâchoire inférieure (12),
la différence de hauteur étant de préférence d'au moins 1 mm, d'au moins 2 mm ou d'au moins 3 mm.

14. Série (100) selon l'une des revendications précédentes, le premier dispositif (10.1, 10.2) contenant une première facette dentaire antérieure (N.I.1.2, N.IV.1.2),
la première facette dentaire antérieure (N.I.1.2, N.IV.1.2) du premier dispositif (10.1, 10.2) étant adjacente à un premier évidement (A.I.1.2, A.IV.1.2) pour une dent antérieure (Z.I.1, Z.IV.1.2) de la personne (P), le deuxième dispositif (10.n) contenant une première facette dentaire antérieure (N.I.1.n, N.IV.1.n),
la première facette dentaire antérieure (N.I.1.n, N.IV.1.n) du deuxième dispositif (10.n) étant adjacente à un premier évidement (A.I.1.n, A.IV.1.n) pour la même dent antérieure (Z.I.1, Z.IV.1.2) de la personne (P), au moins les surfaces extérieures labiales de la première facette dentaire antérieure (N.I.1.2, N.IV.1.2) du premier dispositif (10.1, 10.2) étant identiques aux surfaces extérieures labiales de la première facette dentaire antérieure (N.I.1.n, N.IV.1.n) du deuxième dispositif (10.n) ou n'étant configurées que de manière négligeable différemment de ladite surface extérieure, le premier évidement (A.I.1.2, A.IV.1.2) de la première facette dentaire antérieure (N.I.1.2, N.IV.1.2) ayant une première position par rapport à la surface extérieure labiale de la première facette dentaire antérieure (N.I.1.2, N.IV.1.2),
le premier évidement (A.I.1.n, A.IV.1.n) de la deuxième facette dentaire antérieure (N.I.1.n, N.IV.1.n) ayant une deuxième position par rapport à la surface extérieure labiale de la deuxième facette dentaire antérieure (N.I.1.n, N.IV.1.n),
et la première position par rapport à la deuxième position différant du fait de la translation d'une dent de la personne (P) le long d'un axe avant-arrière par rapport à la tête de la personne (P), la première facette dentaire antérieure (N.I.1.2, N.IV.1.2) du premier dispositif (10.1, 10.2) ayant une première épaisseur de matériau dans la direction labiale,
la première facette dentaire antérieure (N.I.1.n, N.IV.1.n) du deuxième dispositif (10.n) ayant une deuxième épaisseur de matériau dans la direction labiale, mesurée de préférence sur la même position dans le deuxième dispositif par rapport à la position de mesure de la première épaisseur de matériau dans le premier dispositif, et
la première épaisseur de matériau s'écartant de la deuxième épaisseur de matériau d'au moins 20 pour cent ou d'au moins 50 pour cent.

15. Procédé de fabrication pour la fabrication d'une série selon l'une des revendications 1 à 14,
un procédé de production soustractive étant utilisé pour la fabrication de la série (100) à partir de dispositifs ou de paires de dispositifs (10.1 à 10.n) ou au moins pour la fabrication d'une partie des dispositifs,
un procédé d'usinage soustractif par enlèvement de copeaux, en particulier un fraisage, étant de préférence utilisé, ou
un procédé de production additive étant utilisé pour la fabrication de la série (100) à partir de dispositifs ou de paires de dispositifs (10.1 à 10.n) ou au moins pour la fabrication d'une partie des dispositifs, en particulier une impression 3D,
des contre-dépouilles étant réalisées dans au moins un dispositif ou dans au moins une paire de dispositifs et/ou des différences d'épaisseur de couche de matériau de plus de 2 mm ou de plus de 4 mm étant réalisées par rapport à une direction de hauteur au centre de surfaces occlusales du même dispositif, en particulier de la même partie du dispositif.
